# EUROPEAN PATENT APPLICATION

(11) **EP 4 625 368 A1**
(43) Date of publication of application: **01.10.2025**
(21) Application number: 24741403.0
(22) Date of filing: 07.03.2024
(51) Int. Cl.: G06V 30/412

(54) **QUESTION-ANSWERING AREA ACQUISITION METHOD AND SYSTEM, ELECTRONIC ASSIGNMENT PROCESSING METHOD AND SYSTEM, AND DEVICE AND MEDIUM**

(30) Priority: 10.03.2023 CN 202310232254; 16.06.2023 CN 202310721870; 16.06.2023 WO PCT/CN2023/100845
(71) Applicant: Shanghai Chang Gao Su Technical Company Limited, Shanghai 201422 (CN)
(72) Inventor: LV, Shujie, Shanghai 201422 (CN)
(74) Representative: Barker Brettell LLP
(86) International application number: PCT/CN2024/080597
(87) International publication number: WO 2024/149409

(57) **Abstract**

Provided in the present disclosure are a question-answering area acquisition method and system, an electronic assignment processing method and system, and a device and a medium. The acquisition method comprises: determining a question to be processed; acquiring question attribute information of said question; on the basis of the question attribute information, determining whether said question is a handwriting question type; and if so, generating in a first preset blank canvas a handwriting question-answering area matching said question. In the present disclosure, a handwriting question in an electronic assignment can be automatically identified, a corresponding handwriting question-answering area can be automatically generated, manual intervention is not needed during the process, and the process is fully automatically implemented, thereby effectively improving the electronization level of the electronic assignment; the handwriting question-answering area supports the display of content after different operation layers are stacked, such that the interaction between different users is more convenient and efficient; and live broadcasting, recorded broadcasting, etc., of writing trajectories of different users in the area are also supported. Therefore, the intelligent solution provides a practical and feasible technical route for catering to students' individual learning needs on a large scale, and for improving the overall quality of teaching.

## Description

This application claims priority to Chinese Patent Application 2023102322545, filed on March 10, 2023, Chinese Patent Application 2023107218707, filed on June 16, 2023, and PCT Patent Application PCT/CN2023/100845, filed on June 16, 2023 and PCT Patent Application PCT/CN2024/080597, filed on March 7, 2024. This application incorporates by reference the entire disclosures of the aforementioned Chinese patent applications and the PCT patent application.

### Technical Field

The present disclosure relates to the field of data processing technology, and more particularly to a method, system, device, and medium of obtaining an answer region and processing electronic assignments.

### Background Art

Traditional homework assessment involves paper-based workbooks, with teachers manually marking them. However, this approach is associated with several limitations:
1. Inefficient Management: Traditional methods lack an efficient and rational approach to manage students' work. Tasks such as time-consuming layout and printing of test papers, coupled with the risk of paper loss, hinder effective management.
2. Insufficient Presentation of Student Academic Conditions: Traditional methods fail to show individual student's progress and aptitude. This disadvantage prevents students, parents, and teachers from quantifying students' academic understanding.
3. Limited Customization: Classroom settings hinder tailored assignments based on specific student's weaknesses or challenges for advanced students. This inability to meet diverse needs restricts the effectiveness of education.
4. Monitoring Challenges: Schools, educational bodies, and authorities struggle to monitor academic quality. Ensuring balanced and appropriate assignments is challenging due to inadequate oversight and inability to assess teacher quality.
5. Missed Digital Transformation: The core teaching processes in the education sector lack digital transformation, hindering the effective use of valuable business data. This absence prevents the leveraging of data to enhance teaching methodologies.
6. Lag in AI Integration: In contrast to other industries, the education sector has been slow to adopt AI applications due to a lack of digital transformation which Promotes the equitable, balanced, and high-quality development of regional education.

Additionally, there have been attempts to integrate electronic solutions alongside traditional paper methods, such as multiple-choice question entry with automated machine marking. However, these approaches have their own technical limitations:
1. Limited Applicability: Automated marking methods primarily focus on multiple-choice questions, which comprise only a fraction of diverse question types (e.g., answers, fill in the blanks) found in subjects like Chinese, mathematics, physics, and chemistry.
2. Partial Solution: Automated multiple-choice question marking has a narrow scope and does not cover a wide range of scenarios.

Another approach involves students capturing photos of their answers for upload. However, this method presents inconveniences, time consumption, subpar user experience, and inability to analyze learning situations effectively.

### Summary of the Invention:

The present disclosure addresses the technical challenges posed by electronic assignments in the prior art. These challenges include inefficient and irrational processing as well as management of student assignments, leading to difficulties in large-scale teaching according to materials and subsequently affecting overall teaching quality.

To overcome these drawbacks, the present disclosure offers a comprehensive solution through the following technical methods:
1. Method for Obtaining an Answer Region:
   a. Identify pending questions;
   b. Obtain information regarding the attributes of the question to be processed;
   c. Determine whether the pending question falls under a handwritten-question type, based on its attribute information. If affirmative, generate a corresponding handwritten answer area on a predetermined blank canvas, designed to accommodate handwritten input content.
2. Method for Processing Electronic Assignments:
   a. Select a set of questions from a predefined question bank based on predetermined learning objectives;
   b. Generate a handwritten answer area for each question classified as a handwritten question type using the aforementioned answer region acquisition method;
   c. Generate predefined answer positions for the remaining questions categorized as non-handwritten question types;
   d. Compile the electronic assignment by incorporating the relevant questions, their corresponding handwritten answer areas, and the predetermined answer positions.
3. Acquisition System for Handwritten Answer Regions:
   a. Utilizes a question determination module to identify the questions for processing.
   b. Employs an attribute information obtaining module to gather attribute details of the question to be processed.
   c. Features a first judgment module to determine if the question belongs to a handwritten question type based on its attributes. If confirmed, it triggers a region generation module.
   d. The region generation module is responsible for creating a handwritten answer region on a predetermined blank canvas that supports handwritten input content.
4. Processing System for Electronic Assignments:
   a. Utilizes a question selection module to pick a subset of questions from a predetermined question bank, guided by predefined learning objectives.
   b. Employs an answer region determination module to generate handwritten answer regions for each question classified as a handwritten question type.
   c. Features an Answer Position Generation Module to create predefined answer positions for non-handwritten question types.
   d. Incorporates an electronic assignment acquisition module to compile the electronic assignment, including relevant questions, their corresponding handwritten answer areas, and predetermined answer positions.
5. Electronic Assignment Operation and Management Platform:
   a. Integrates the aforementioned electronic assignment processing system.
   b. Encompasses various portal for users with different roles, including a student portal on student devices and a teacher portal on teacher devices.
6. Electronic Device:
   a. Comprises memory, a processor, and a computer program stored on the memory and executable on the processor.
   b. Executes the computer program to implement the methods for obtaining an answer area or processing electronic assignments as described above.
7. Computer-Readable Storage Medium:
   a. Offers a computer program stored within, which, upon execution by a processor, implements the method for obtaining an answer region as described earlier, or implements the method for processing an electronic assignment as described earlier.
   b. Combination of Preferred Conditions:
   c. Based on adherence to established knowledge within the field, each of the preferred conditions described can be flexibly combined to achieve diverse preferred embodiments of the present disclosure.
8. Positive Progressive Effect:
   a. The present disclosure yields several constructive outcomes:
   b. Automated identification and generation of answer areas for handwritten questions within electronic assignments enable a sequence of electronic operations. These encompass, but are not limited to:
      i. Facilitating the creation of single electronic assignments containing answer areas for handwritten questions.
      ii. Enabling the compilation of electronic workbooks featuring handwritten questions, thereby advancing educational scenarios.
      iii. Enhancing teacher efficiency through electronic assignments, which in turn aids personalized student learning and targeted guidance.
      iv. Empowering students to achieve learning goals via features like automatic collection of incorrect questions for further practice.
      v. Providing data support for specific organizations overseeing school and teacher teaching processes, including monitoring homework volume.
      vi. Catalyzing digital transformation of teaching's core aspects, unlocking business data's potential value.
      vii. Fostering AI adoption in education, akin to other industries.

In this embodiment, automatic identification and generation of answer areas for designated questions within electronic assignments occur without human intervention. This automated process heightens overall electronic assignment processing efficiency, raises electronic processing standards, and enhances user experience. Furthermore, the solution empowers the education sector to explore AI applications, enabling digital transformation and promoting equitable, balanced, and high-quality regional educational development through technological means. This innovation significantly enhances user experience and establishes a dependable foundation for achieving large-scale customized teaching and comprehensive elevation of teaching quality.

### Illustrations:

Figure 1: Flowchart illustrating the method of obtaining an answer region in embodiment 1 of the present disclosure.
Figure 2: Schematic diagram depicting an answer area for a handwritten question in embodiment 2 of the present disclosure.
Figure 3: First schematic diagram showcasing an operational layer of a handwritten answer area in Example 2 of the present disclosure.
Figure 4: Second schematic diagram illustrating an operational layer of a handwritten answer region in Example 2 of the present disclosure.
Figure 5: Third schematic diagram depicting an operational layer of the handwritten answer region in Example 2 of the present disclosure.
Figure 6: Schematic diagram displaying the first display state of a handwritten question in embodiment 2 of the present disclosure.
Figure 7: Schematic diagram showcasing the second display state of the handwritten question in Example 2 of the present disclosure.
Figure 8: Schematic diagram illustrating the third display state of the handwritten question in Example 2 of the present disclosure.

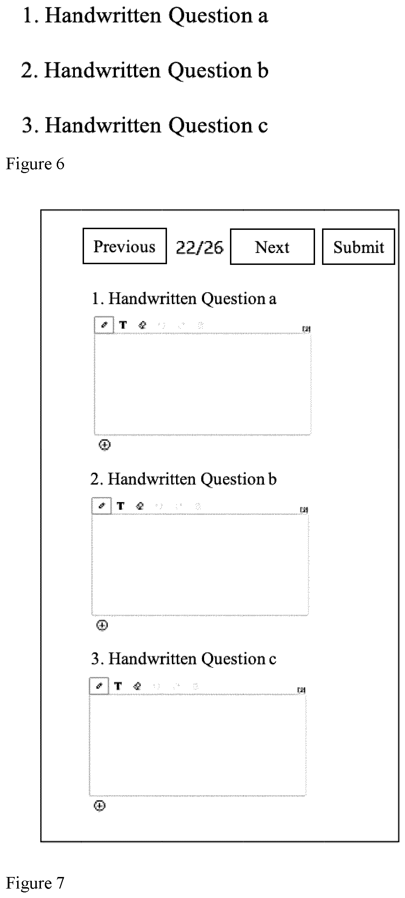

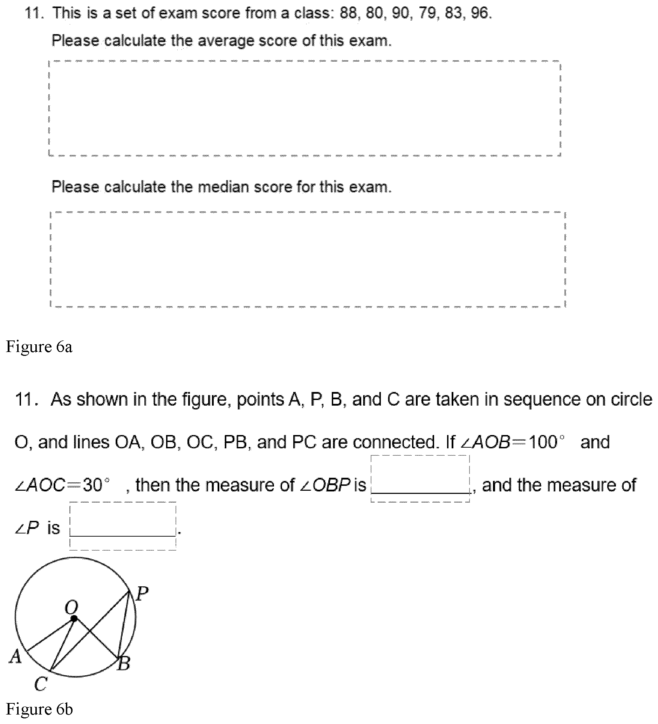

Figure 6a: The first schematic diagram depicting the answer area for Example 2 of the present disclosure.
Figure 6b: The second schematic diagram illustrating the answer area for Example 2 of the present disclosure.

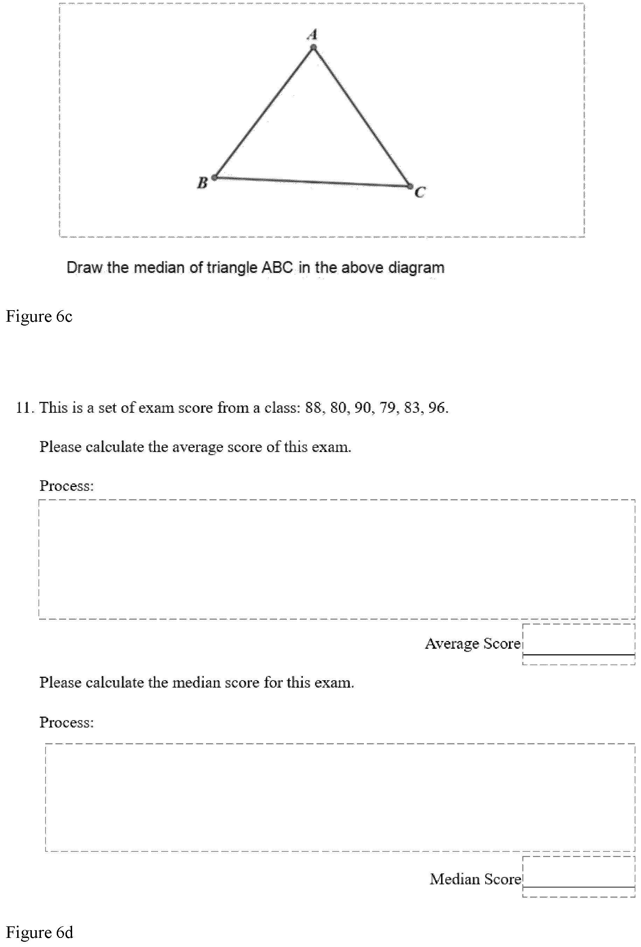

Figure 6c: The third schematic diagram displaying the answer area for Example 2 of the present disclosure.
Figure 6d: The fourth schematic diagram showcasing the answer area for Example 2 of the present disclosure.

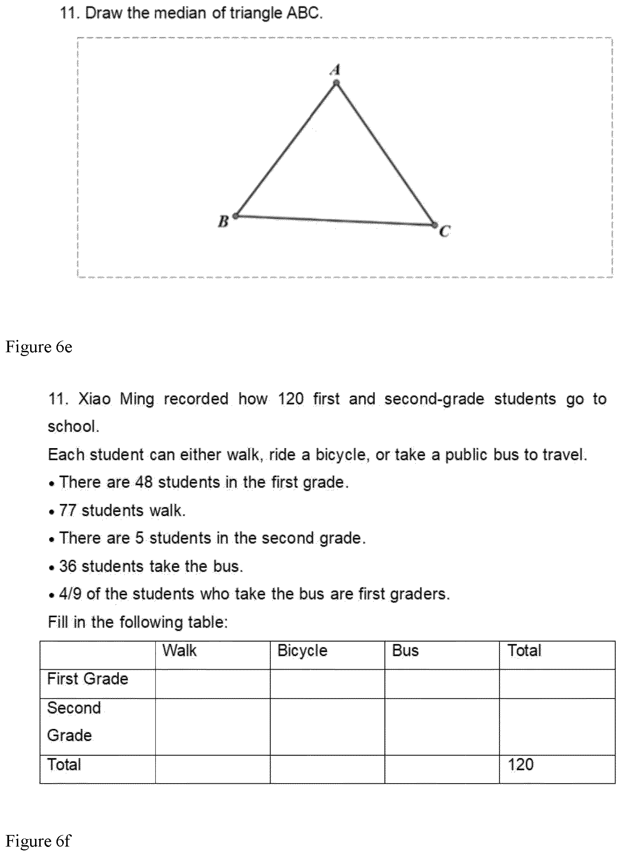

Figure 6e: The fifth schematic diagram demonstrating the answer area for Example 2 of the present disclosure.
Figure 6f: The sixth schematic diagram depicting the answer area for Example 2 of the present disclosure.

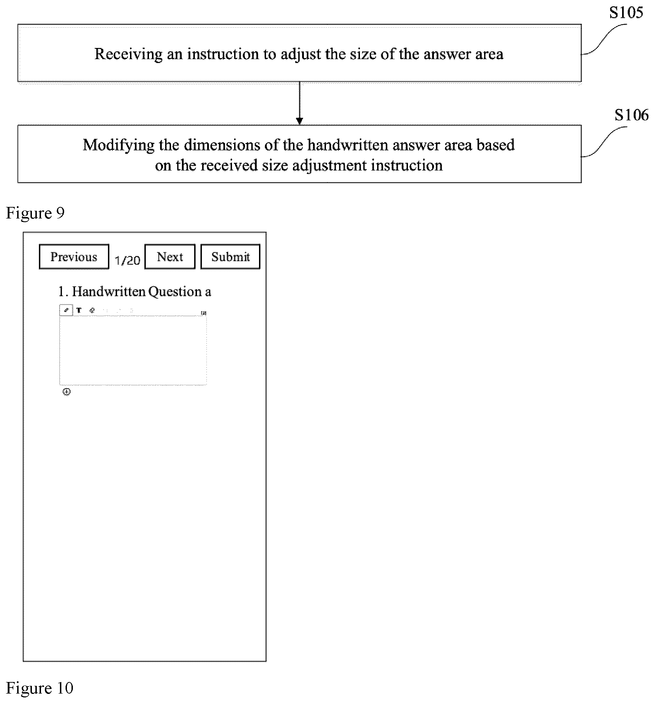

Figure 9: Flowchart demonstrating the method of obtaining an answer region in embodiment 2 of the present disclosure.
Figure 10: Schematic diagram displaying the initial dimensions of the handwritten answer area in Example 2 of the present disclosure.

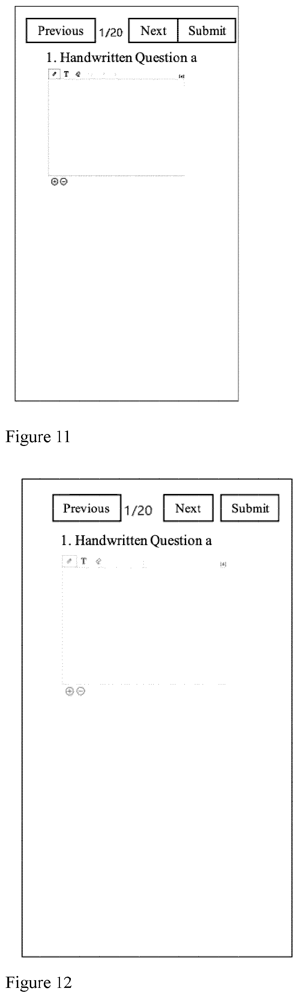

Figure 11: First extended schematic view of a handwritten answer region in embodiment 2 of the present disclosure.
Figure 12: Second extended schematic view of the handwritten answer region in embodiment 2 of the present disclosure.

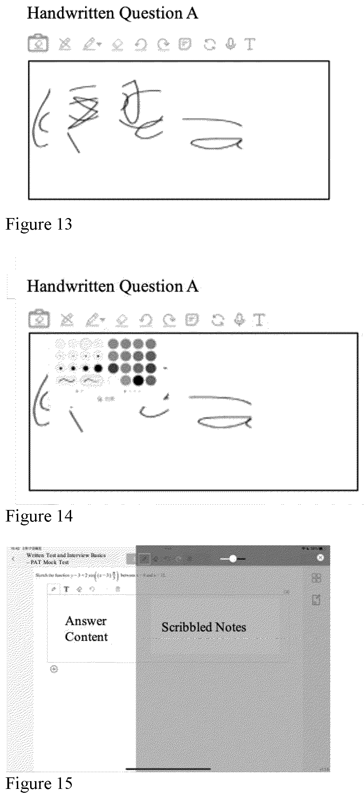

Figure 13: First schematic diagram showcasing a basic function plug-in for a handwritten answer area in Example 2 of the present disclosure.
Figure 14: Second schematic diagram illustrating a basic function plug-in for a handwritten answer area in Example 2 of the present disclosure.
Figure 15: Schematic diagram of the first scenario for invoking draft paper in a handwritten answer area in Example 2 of the present disclosure.

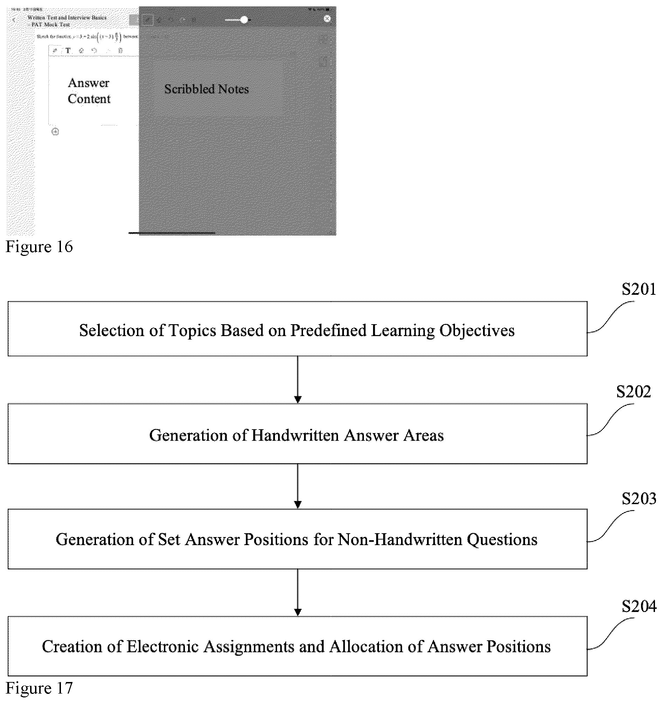

Figure 16: Schematic diagram of the second scenario for calling up draft paper in a handwritten answer area in Example 2 of the present disclosure.
Figure 17: Flowchart depicting the processing method of the electronic assignment in Example 3 of the present disclosure.

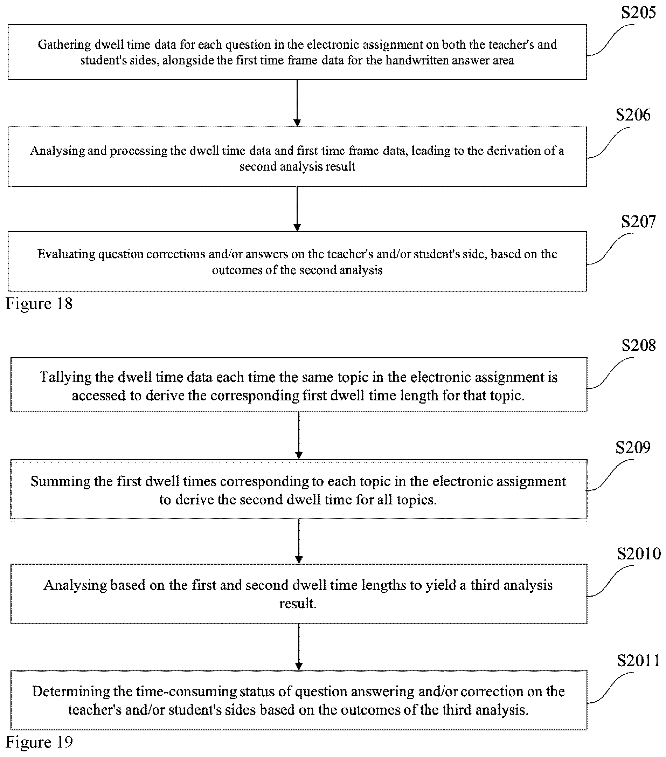

Figure 18: The first flowchart illustrating the processing method of an electronic assignment in embodiment 4 of the present disclosure.
Figure 19: The second flowchart showcasing the method of processing an electronic assignment in embodiment 4 of the present disclosure.

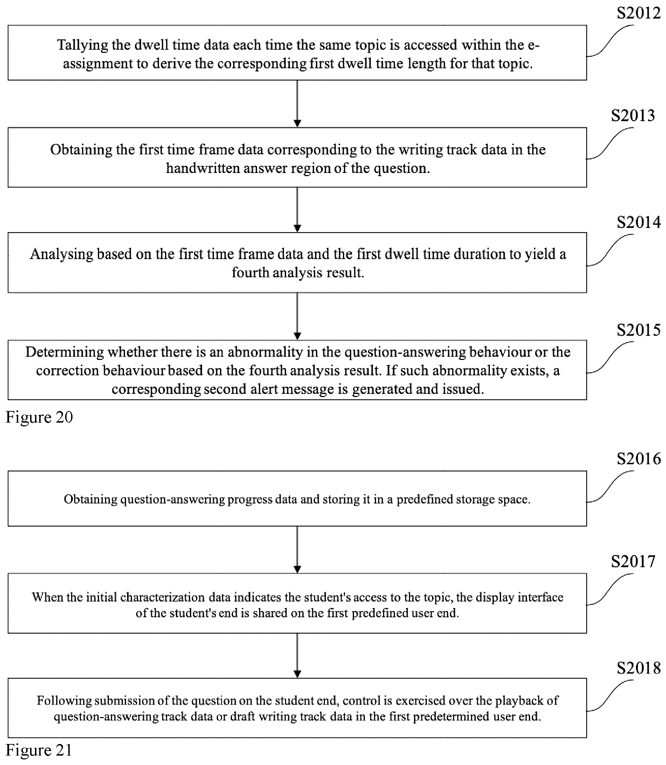

Figure 20: The third flowchart demonstrating the processing method of the electronic assignment in Example 4 of the present disclosure.
Figure 21: The fourth flowchart displaying the processing method of an electronic assignment in embodiment 4 of the present disclosure.

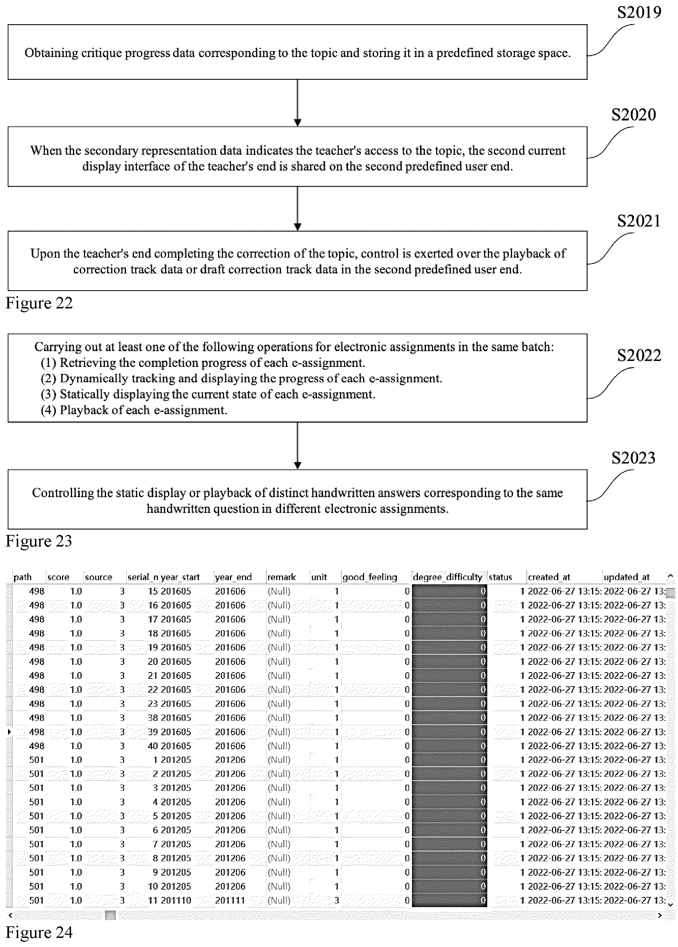

Figure 22: The fifth flowchart illustrating the processing method of the electronic assignment in Example 4 of the present disclosure.
Figure 23: The sixth flowchart showcasing the processing method of the electronic assignment in Example 4 of the present disclosure.
Figure 24: Schematic diagram illustrating the storage data mapping relationship table for Example 4 of the present disclosure.

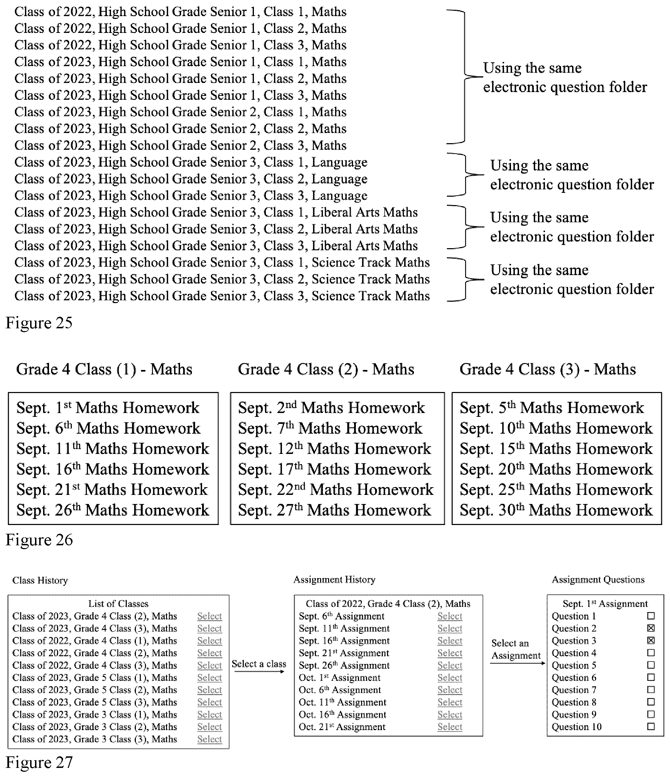

Figure 25: Schematic diagram depicting the question folder in Example 4 of the present disclosure.
Figure 26: First schematic view of a homework folder for different classes in Example 4 of the present disclosure.
Figure 27: Second schematic diagram illustrating a homework folder for different classes in Example 4 of the present disclosure.

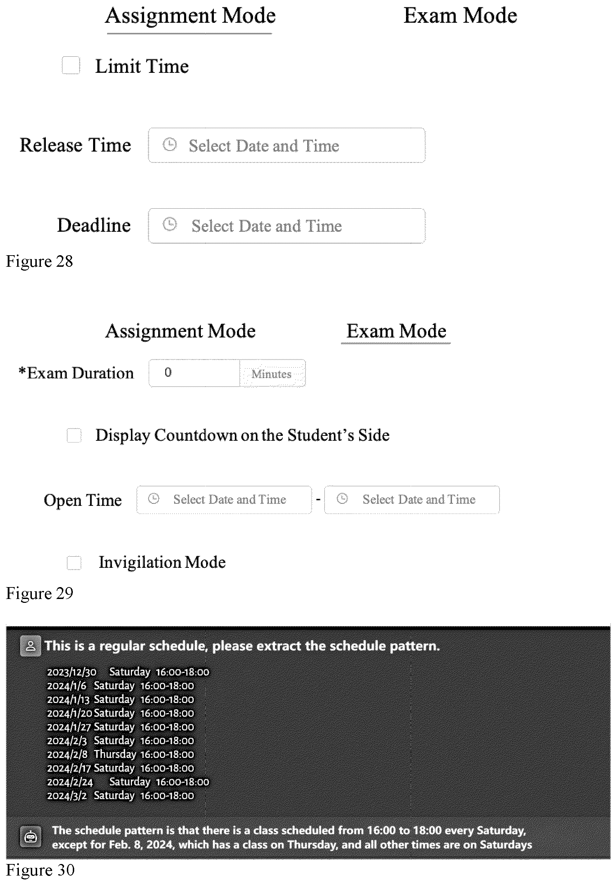

Figure 28: Schematic diagram of the setting interface of the operating mode in Example 4 of the present disclosure.
Figure 29: Schematic diagram of the setting interface of the exam mode in Example 4 of the present disclosure.
Figure 30: Schematic diagram of setting time patterns for Example 4 of the present disclosure.

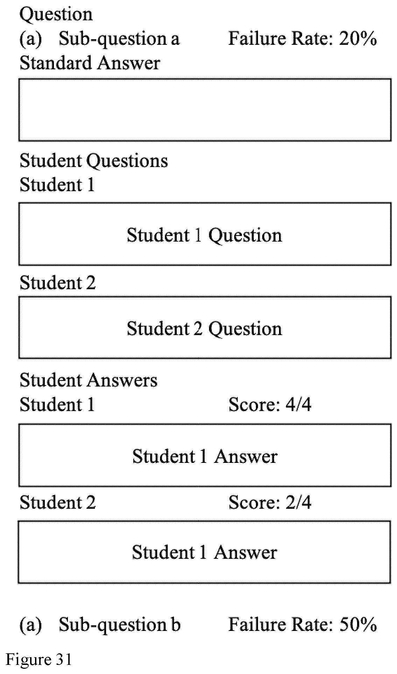

Figure 31: Schematic diagram showing the answers of different students to the same question in Example 4 of the present disclosure.

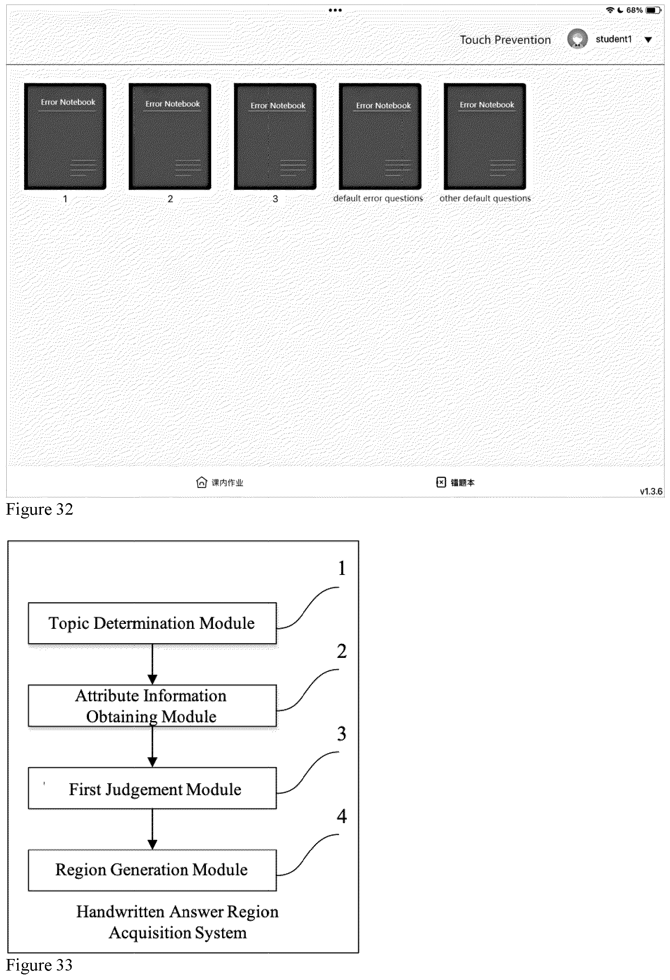

Figure 32: Schematic diagram of the interface for the "wrong answer book" in Example 4 of the present disclosure.
Figure 33: Schematic diagram depicting a module of the system of the question-answering region in Example 5 of the present disclosure.

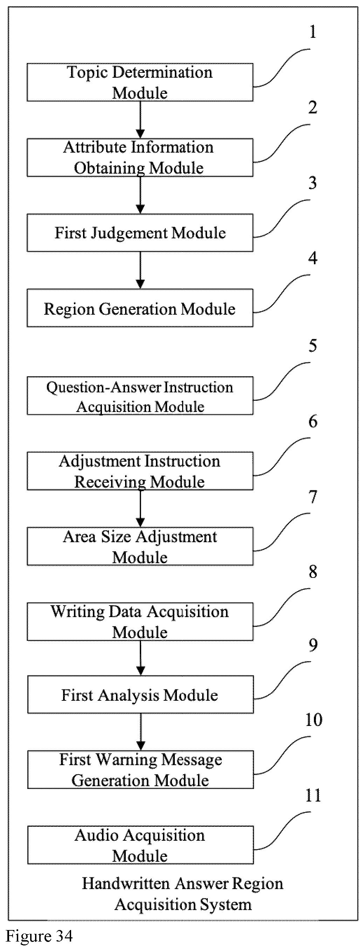

Figure 34: Schematic diagram illustrating a module of the system of the question-answering region in Example 6 of the present disclosure.

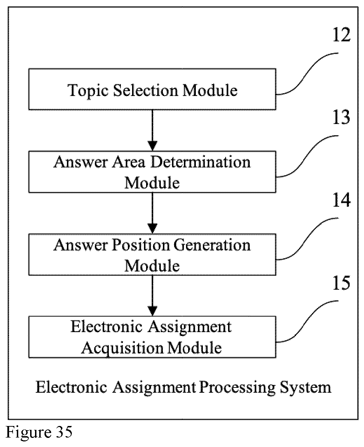

Figure 35: Schematic diagram displaying a module of the processing system for electronic assignment in Example 7 of the present disclosure.

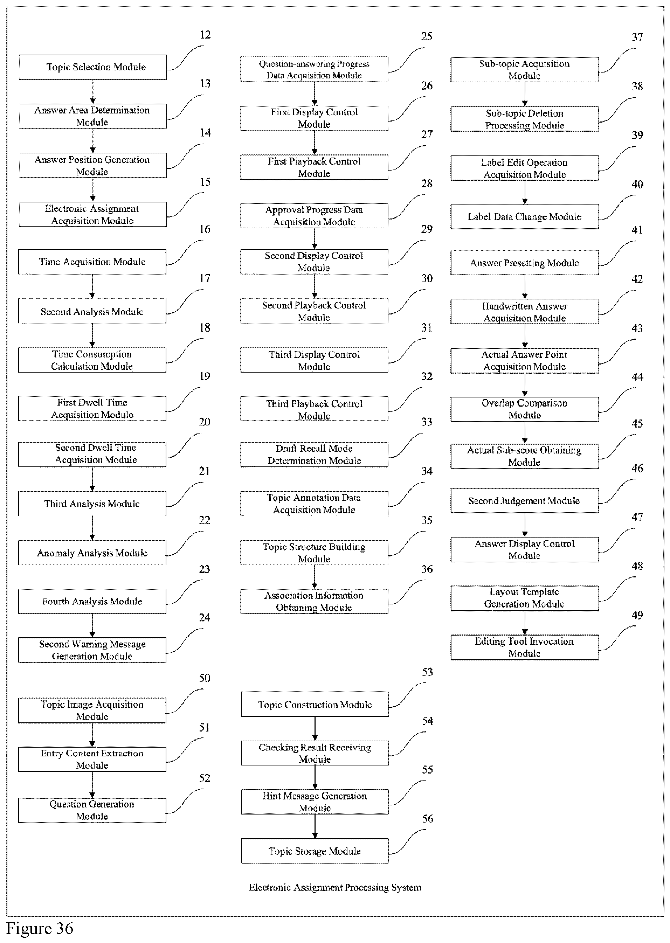

Figure 36: Schematic diagram of a module of the processing system for electronic assignment in Example 8 of the present disclosure.

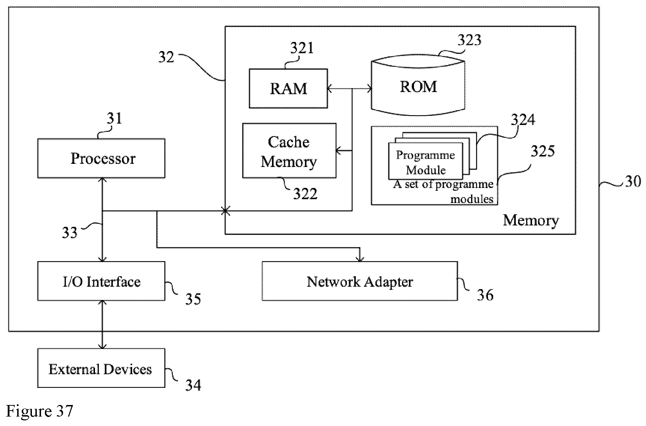

Figure 37: Schematic diagram of the structure of the electronic device in embodiment 10 of the present disclosure.

### Detailed Description of Embodiments

The present disclosure is further elucidated through the subsequent embodiments. However, this description does not restrict the scope of the present disclosure solely to the delineated embodiments.

In the contemporary educational milieu, several impediments hinder the efficient and rational processing as well as management of students' assignments. Specifically, the following three scenarios are commonly employed for processing and managing assignments:
Option A:
   Students manually write answers on paper answer frames, which are subsequently scanned, uploaded, and reviewed by teachers in a designated system. However, this approach is marred by low automation, cumbersome procedures, which imapir user experience.
Option B:
   Students use specialized dot-matrix paper and electronic pens to answer questions. The dot-matrix paper and pen are equipped with Bluetooth modules. However, the cost are high for both hardware and software investment. Although students' answers are accessible, there is an inability to match different responses with specific questions, meaning that there is a disconnect between the questions and the students' answers. The data management is one-dimensional, making it impossible to track personalized academic performance.
Option C:
   Students capture images of their handwritten answers and upload them for marking. This method faces resistance from students due to additional photo upload operations. Moreover, variations in font size lead to time-consuming marking. This subsequently leads to low efficiency and automation levels in the acquisition of electronic assignment, which cannot meet the high demands of teaching scenarios with stringent requirements.

The present disclosure proposes innovative methods for obtaining an answer region and processing electronic assignments to address the limitations of the aforementioned processing approaches.

### Embodiment 1:

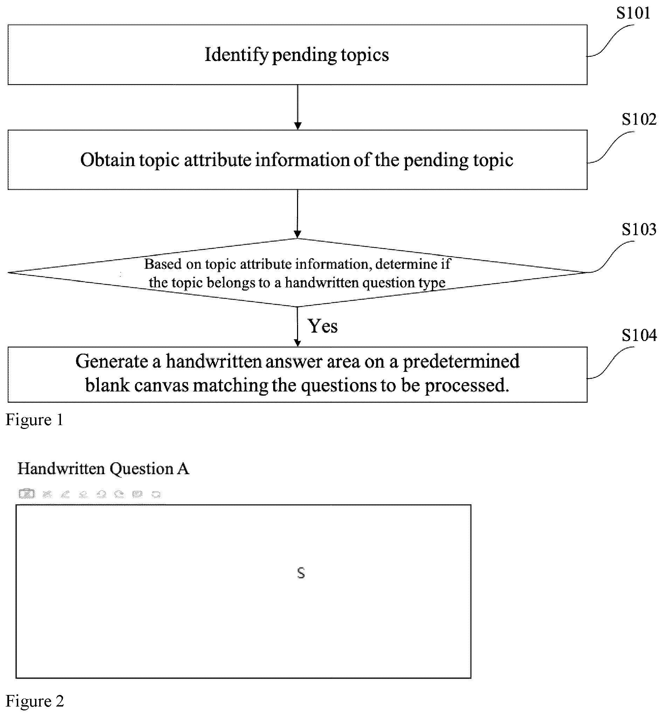

Referring to FIG. 1, this embodiment presents a method for acquiring an answer region in electronic assignments.

The method comprises the following steps:
Step S101: Identify pending questions, usually selected from a predefined question bank.
Step S102: Obtain question attribute information of the pending question, encompassing content and question type details.
Step S103: Based on question attribute information, determine if the question belongs to a handwritten question type. If affirmative, proceed to step S104.
Step S104: Generate a handwritten answer area on a predetermined blank canvas matching the questions to be processed. The predetermined blank canvas serves as a medium for handwritten input.

For instance, if question A is classified as a handwritten question based on question attributes, an automatic handwritten answer area is generated below question A for students to write their answers, as depicted in Fig. 2 (note: question content in the illustration is schematic). If question A isn't a handwritten question, these steps are bypassed.

The above method can be utilized by teachers, students, or both, as per their operational needs. Notably, the specific technology employed for identification is not emphasized, as long as it accurately differentiates between handwritten and non-handwritten questions.

The determination of the question type can be achieved in the following ways:
**Method (1):** Manually pre-label each question in the question bank with question type labels. In this way, during the automatic determination of question types, the labels can be directly retrieved to identify the question type.
**Method (2):** Convert document information in Word or PDF formats into code format and scan sequentially. The context of the original document can be used to determine the question type, such as "Part I: Multiple Choice Questions," "Part II: True/False Questions," "Part III: Short Answer Questions," etc.

When scanning PDFs, images, etc., the original data of the electronic assignments is obtained and analyzed to extract question numbers of different levels from the assignment data. There may be one or more question numbers at the same level.

### Specific Implementation for Extracting Question Numbers:

- Determine if the document contains pre-set types of question numbers, such as ("Part I:," "Part II:," "Part III:," ... "1.," "2.," "3.," ... "(1)," "(2)," "(3),").
- If so, extract and mark them.
- Based on the pre-set hierarchical relationships between question numbers, such as "Part I:," "Part II:," "Part III:" corresponding to the first level, "1.," "2.," "3." corresponding to the second level, and "(1)," "(2)," "(3)" corresponding to the third level, and the actual question numbers, automatically obtain each sub-question under the main question.
- For any main question, extract the number of sub-questions to determine how many sub-questions there are.
- For each sub-question, determine if it is a handwritten question.

### Specifically, determine if it is a multiple-choice question:

- Check for A, B, C, D, E, etc. with certain spacing between each pair of letters and content in between, and if the answer format is a single letter. If these conditions are met, it is generally identified as a multiple-choice question.
- If it is a multiple-choice question, first exclude it.

### Determine if it is a handwritten question:

- Check if there are underscores or parentheses (with spaces between the parentheses). If so, it is identified as a handwritten question.
- Check if the question consists of a stem and a large blank space (count the number of line breaks in the blank space; if the number exceeds a set threshold, it indicates a large blank space). If so, it is generally identified as a handwritten question.
- Determine based on the answer content: if the answer content is T/F, it is identified as a true/false question, excluding handwritten questions; if the answer content is in the form of options, it is identified as a multiple-choice question, excluding handwritten questions; if the answer content is short or long rich text format (such as text, images, formulas), it is identified as a fill-in-the-blank or complex short-answer question.

**Method (3):** The specific process for determining whether it is a handwritten question type through an algorithm model is as follows:

### Preprocessing:

- Convert the question content into rich text code format. The original code includes text, formulas, images, etc., stored in encoded rules (such as LaTeX format). Convert images to black and white using PNG format (a type of image format) to preserve original pixel information losslessly and record the relative position of the images in the question.
- For the text part, delete information that is useless for judging handwritten questions, such as format information (font, size, colour, etc.).

Since the question formats vary widely, for instance, the "ABCDE" text feature mentioned above, it is inevitable to encounter multiple-choice questions using 12345, abcde, etc., as option labels. Conditional judgments cannot cover all possibilities. Using AI, models can be trained on existing questions and manually labelled data pairs to learn more abstract and hidden features of questions with the same labels (e.g., multiple-choice questions having options, while short-answer questions often containing explanatory requests or questions), better identifying question formats and structures that manual rules cannot account for.

### Text Feature Extraction:

- Use pre-trained semantic models or sentence embedding models (such as Sentence BERT) and pre-trained Masked Language Models (MLM, such as BERT).
- Since BERT is pre-trained on general text, it needs fine-tuning on answering data to learn the joint distribution of various mathematical symbols and specialized terms to extract features more relevant to assignment content.
- Fine-tuning operations include but are not limited to masking random words in questions and training the model to predict the original masked words. Knowing whether the masked words are part of question text or mathematical formulas, train the model to predict the type of masked words.
- Metadata of questions (subject, grade, etc.) can be used as multi-task learning objectives, training the model to predict these metadata.
- Using this model, map question content to high-dimensional space, obtaining a high-dimensional vector as the text semantic feature of the question.

### Specifically:

- The BERT model splits the text into characters, words, and symbols to get several smallest semantic units. Each semantic unit is converted to a numeric index based on a pre-set mapping table.
- Add a special unit [CLS] at the beginning of the question for subsequent classification.
- Convert semantic units into high-dimensional vectors using the fine-tuned BERT model. The vector of the first token [CLS] represents the entire question's feature vector.
- Use neural networks (such as transformers) or word vector models (such as word2vec) to convert semantic units into high-dimensional vectors, and integrate all semantic unit vectors (e.g., averaging) to obtain the high-dimensional vector representing the entire question as the text semantic feature.

### Image Feature Extraction:

- Use Convolutional Neural Networks (CNN) to map question content into high-dimensional space, obtaining a high-dimensional vector as the image feature.
- Specifically, the value corresponding to each pixel of the image (0-255 integer for black and white images representing white intensity; a 3-dimensional vector for colour images representing red, green, and blue intensity).
- Generate a matrix (m x n for black and white images) or tensor (m x n matrix for colour images, each matrix value is a 3D vector representing RGB intensity) as the input of the CNN, extracting a high-dimensional vector as the image feature.

### Alternatively:

- Use a pre-trained Vision Transformer model (an image classification model) for fine-tuning on question images.
- Fine-tuning operations include cutting the question image into pieces, randomly covering up words as model input, and then training the model to predict the originally covered image blocks.
- Choose non-blank blocks exceeding a certain threshold for masking and training.
- Use known metadata (question types, such as trigonometric functions, and limits) as multi-task learning objectives, training the model to predict these metadata.
- Or use joint fine-tuning and contrastive training: extract features from different category questions, fine-tuning the feature extractor to maximize feature similarity (Euclidean distance) of questions from the same category, enhancing the feature extraction and distinction capability.

### Training and Prediction:

- Extract features (n-dimensional vectors) using text and image feature extractors.
- If no image exists, use a zero vector. Concatenate two vectors to get a 2n length vector, input to a single-layer neural network, outputting an m-length vector. Each number in the vector represents the probability of the question type through the Softmax function.
- During training, calculate cross-entropy loss to maximize the probability of the correct question type, and minimize the probability of incorrect types, until convergence.
- For question type prediction, input question feature vectors, and select the type with the highest probability as the prediction result.
- Manually check prediction results and periodically update training data based on checks, continuously optimizing the model.
- When the system is in use, the calculated question type by the model serves as the default value for users. If users manually modify a small portion of question types before use, it indicates a model error, retrain model parameters based on this error to improve prediction accuracy for practical assignment scenarios.

In the aforementioned Method (2), if results from different determination methods are inconsistent, invoke the model from Method (3) for auxiliary confirmation. If necessary, send analysis results from each method to corresponding personnel for confirmation to ensure the accuracy of handwritten question identification.

Additionally, the question data structure is detailed, with text data, options, and answer scoring points stored independently. The answer format and content can be used to train specific algorithm models to directly predict whether the question is multiple-choice or true/false. The model can be trained based on actual needs, which will not be elaborated here.

Considering the significant distinction between the distinctive attributes of handwritten and non-handwritten questions, the corresponding characteristics are deduced from question attribute information. This differentiation is accomplished promptly and effectively. The specifics of the identification technology are not accentuated, as long as it accurately analyzes whether a question is handwritten. For handwritten questions, an answer area corresponding to such questions is automatically generated. This area serves as a space for students to provide handwritten answers and for teachers to review and mark them.

In this embodiment, the automatic identification of handwritten questions within electronic assignments and the subsequent generation of corresponding answer areas facilitate an array of electronic operations for handwritten questions. These include, but are not limited to:
1. Enabling the integration of a single electronic assignment featuring an answer area designated for handwritten questions.
2. Enabling the compilation of multiple electronic assignments containing handwritten questions, forming a digital electronic workbook (e.g., amalgamating several math electronic assignments into a digital electronic workbook).
3. Facilitating innovative approaches to educational scenarios, such as:
   a. Enhancing teachers' efficiency through electronic workbooks, where the system aids in quantifying individual student learning progress.
   b. Streamlining personalized counselling for diverse students.
   c. Assisting students in achieving their learning objectives by automatically curating personalized exercises, e.g., identifying incorrect answers and suggesting appropriate practice.
   d. Supporting specific entities in monitoring and managing school and teacher activities, including evaluating assigned homework.
   e. Paving the way for digital transformation in education, unlocking the value potential of business data.
   f. Leveraging the benefits of digital transformation and fostering AI integration in education, akin to other industries.

Thus, automating the generation of answer areas for handwritten questions is vital for optimizing diverse educational scenarios.

In essence, in this embodiment, the automatic identification and processing of pending questions within electronic assignments, coupled with the automatic generation of answer areas for handwritten questions, eliminate the need for human intervention. This fully automated process enhances overall electronic assignment processing efficiency and user experience.

### Embodiment 2:

The method of obtaining an answer region in this embodiment represents a further enhancement of Embodiment 1. Specifically:
In a practical implementation, the first predetermined blank canvas constitutes an initial layer that originates from a canvas constructed using a picture format. This picture format encompasses formats like PNG and JPG (both PNG and JPG are considered picture formats).

In this process, upon identifying a question as a handwritten question, an initial layer for handwritten answers is generated automatically. This initial layer is promptly accessible, eliminating the need for extraneous processing. At the student portal, answers are completed within the answer area of the initial layer. After students submit their electronic assignments, the teacher portal accesses the electronic assignment, thereby obtaining an operation layer that includes the automatically added layer. Subsequently, with each interaction from both student and teacher, a new operating layer is generated based on the preceding one.

It is crucial to highlight that the initial layer equips students with an electronic answer sheet from the inception of the assignment process. This comprehensive electronic approach ensures centralized and uniform management of assignments.

Comparatively, existing solutions fall into various categories, such as:
1. Solutions involving paper-based questions and later computer-based answer uploads, leading to a separation of student-written and archived assignments.
2. Solutions employing special dot-matrix paper for writing answers, are subsequently uploaded to the computer, which again segregates student-written and archived assignments.
3. Solutions where answers are written in a regular paper workbook, photographed, and then uploaded, resulting in the separation of student-written and archived assignments.
4. In contrast, the solution presented in this disclosure effectively addresses the userunfriendliness, inefficiency, and separation of assignments in the existing solutions. The present disclosure ensures efficient, flexible, and user-friendly electronic management of answer operations within the answer area.

Furthermore, in a practical implementation, the handwritten answer region is designed to display corresponding stacked content from all recently completed and sequentially stacked operation layers. These sequential layers of operations are generated based on the entry of different users into the handwritten answer area during predefined stages of use.

The trajectory process in each operation layer is stored independently, allowing for the separate analysis of each layer's trajectory. For student data across different layers, such as answering questions and making corrections, both separate and overall analyses can be performed to monitor multiple aspects of the student's handwritten questions. Similarly, for teachers, the data from different layers can also be analyzed separately and as a whole to monitor multiple aspects of the teacher's review process.

Specifically, to assess the diligence of the teaching team in marking assignments, the following can be done:
Analyze the time teachers spend on marking, extract the trajectory data from each teacher's marking layer, and calculate the percentage of questions where the teacher made simple check marks or crosses.

Calculate the percentage of questions where the teacher spent more than a preset threshold (e.g., 5 seconds) writing specific reasons for errors, providing teaching management with a comprehensive data-driven indicator of marking quality.

This can be detailed down to subject groups and individual teachers, showing the diligence indicator for each group and teacher.

To analyze whether students take notes while reviewing exam papers, the following can be done:
Extract the trajectory data from the student's note layer separately and calculate the percentage of incorrect questions where the student added effective notes.

For personnel with operational permissions in the assignment system, opening an electronic assignment triggers the creation of a new layer. Content can be written in this layer by triggering actions such as clicking on a pen or eraser. For each operator, a corresponding layer is automatically generated in the answer area of the latest electronic assignment they receive. The current operator only has permission to operate on the current layer, and all operations data are recorded in that layer, ensuring the independence of each layer's data. The current operator has no means to interfere with other layers.

Additionally, once a layer is completed, it cannot be modified, ensuring the reliability of each layer's data. For exported assignments (e.g., sharing a student's answer to a specific question with parents), no new layers are triggered, and the data cannot be traced back.

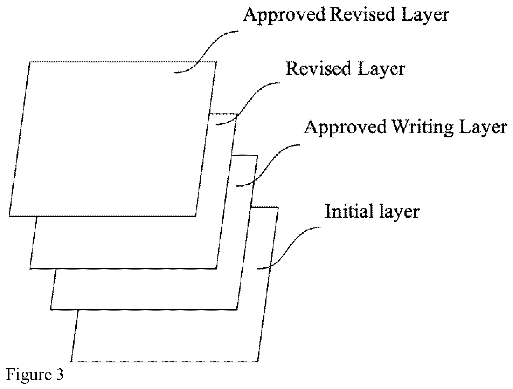

Specifically, as depicted in FIG. 3, the operational layers generated at distinct predefined stages of utilization encompass an initial layer for the student's use, an marking writing layer designated for the teacher's usage, a revised layer applicable to the student's application, or an further marking layer intended for the teacher's use.

In varying scenarios, the number of layers within the operation layer may vary. For instance, some contexts might necessitate solely an initial layer and an marking writing layer, while others may require additional layers such as an initial layer, an marking writing layer, and a revision layer. Regardless of the number of layers involved, these operational layers are sequentially stacked in the order of initial layer, marking writing layer, revision layer, and further marking layer.

Furthermore, when considering N revision operations, the handwritten answer area generates successive revision layers for the student's use and corresponding marking layers for the teacher's utilization, with N being a positive integer.

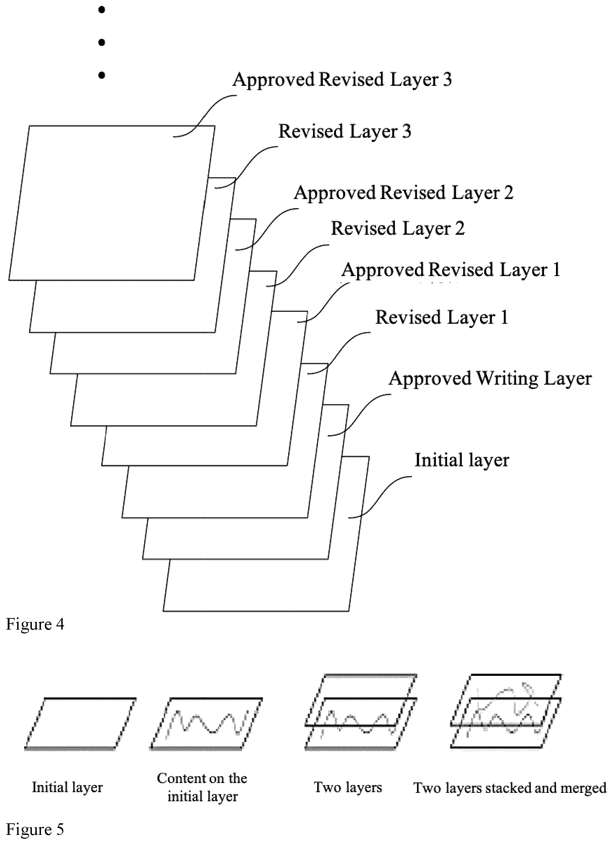

Illustrated in Figure 4, the operational layers align sequentially: initial layer, marking writing layer, revision layer 1, further marking layer 1, revision layer 2, further marking layer 2, revision layer 3, further marking layer 3, and so forth.

To elaborate, as displayed in Figure 5, moving from left to right: the initial layer is present at the student portal; once content is written and electronic assignment is submitted at the student portal, the teacher accesses the electronic assignment and is provided with an operation layer comprising the current answer area for the teacher's utilization, specifically for marking within the writing layer. Upon completion of the marking process by the teacher, the contents of the two operational layers are merged. Similar procedures are followed for merging content obtained from other layers; these steps are consistent across the various layers and therefore do not require repetition.

Compared to the solutions in the prior method, where the student's scanned or photographed image serves as the student answer layer, and only the initial layer exists with no additional layers, such as a marking layer or subsequent layers, the resultant system lacks significant layers and thus lacks essential dimensional information. Consequently, its functionalities remain relatively limited, failing to meet the demanding requirements of actual educational scenarios. Moreover, marking applied to the electronic archive result in a detachment from the original answer sheet, rendering them unreflective in the original student workbook.

In contrast, the proposed solution employs an operation layer corresponding to each student's response, teacher marking, student revision following teacher marking, and teacher's subsequent marking, all being distinct and independent layers. This independence ensures that operations executed in their respective layers do not mutually influence one another. Consequently, the display content of each question's answer area remains separate and whole through various processing stages. This approach effectively resolves the issues inherent in existing solutions.

In an actual implementation, the acquisition method additionally encompasses:
1. Retrieve the re-answer command linked to the pending question;
2. Generate a fresh handwritten answer area tailored to the pending question on the second predetermined blank canvas, guided by the re-answer instruction. Notably, the newly generated handwritten answer area possesses entirely distinct attributes and functionalities in comparison to the prior handwritten answer area created in Step S104. This difference merely lies in their generation on divergent blank canvases.

Control all operation layers within the handwritten answer area derived from the first predetermined blank canvas to toggle between the display and hidden states.

Specifically, a new array is established in the system's database, distinguished from the original array (which stores the first preset blank canvas). Each item in the new array is a stackable canvas as described above. The advantage of this approach over not adding a new canvas (i.e., making marking on the original canvas) is that, for example, with marking trajectories, the initial canvas's trajectory can still be extracted separately. This allows students, teachers, and parents to understand the first attempt's situation and identify the reasons for mistakes.

Additionally, the correction canvas's trajectory can be extracted separately, viewing only the correction canvas's trajectory without being disturbed by old content. This method also allows for analyzing students' correction habits, such as how many new answer areas were created for corrections out of all the incorrect questions. Furthermore, it enables analyzing the differences between the first and second attempts, including how much time was saved in each step, thereby achieving a more comprehensive understanding of student performance from multiple dimensions.

Within this solution, consider the context of a short-answer question. Once this type of question has been processed within a given time frame, its corresponding answer area along with multiple operation layers within it have already taken shape. However, scenarios might arise where the user needs to address the short-answer question anew-such as during revision, recall, or consolidation of concepts. To initiate this, the user performs a specific action on the current short-answer query, like clicking a designated button situated beneath the query. This action triggers the creation of a fresh answer area aligned with the same short-answer question.

Additionally, the user can engage the second specific button associated with the current short-answer question. This interaction offers a choice to display or conceal the operation layers within the answer area stemming from the initial blank canvas. Opting to hide the layers allows the user to tackle the question without any distractions. On the other hand, opting to display the layers permits the user to reference previous responses and corrections, thereby gaining insights into their mastery of the current short-answer question.

In cases where the operation layers are displayed within the answer area originating from the first predetermined blank canvas, the new answer area can be positioned before the previously generated answer area, after it, or even juxtaposed side by side. Other display arrangements are possible as well, and the specific method to be adopted can be tailored according to practical requirements.

Moreover, a similar process is utilized for the third and subsequent regenerations of answer areas for short-answer questions. This approach allows users to revisit the same short-answer questions multiple times, enabling repetitive practice. However, due to the resemblance to the aforementioned situation, a detailed reiteration will be omitted here.

In addition, in conventional methods, when students revisit the same question for further attempts, there's a lack of establishment of a coherent link between multiple instances of their answers to the same question. This results in disconnection and fragmentation. For instance, during revisions, if students refrain from annotating the original paper and opt for a different sheet, the revised content becomes detached from the initial context. Similarly, if revisions are carried out on an alternative page of their workbook, the revised and original answers diverge, necessitating back-and-forth comparisons during future reviews. This operational inconvenience poses a challenge.

In contrast, the proposed solution ensures that the revision canvas or answer area adheres to the earlier answer area history, thus preserving a comprehensive display of the revision history. This guarantees a consistent association between multiple generated answer areas for the same question across multiple attempts. This coherence caters to users seeking to revise the same question concurrently, facilitating streamlined management of diverse answer area contents.

In an implementable embodiment, the handwritten answer area functions as a responsive and display space for handwritten touch-based content. Alternatively, it serves as an area for responding to and exhibiting content derived from an external input device. Moreover, this handwritten answer area is presented within the display interface of the intelligent terminal that supports handwritten touch interactions.

Contrasting with existing solutions that either lack support for electronic handwriting input or, although featuring electronic input methods, remain incompatible with electronic devices, this innovative approach overcomes the drawbacks of inconvenient operation and limited flexibility. Here, the answer area not only accommodates handwriting touch inputs but also embraces content originating from external devices like mice and keyboards. This versatile compatibility ensures that users can seamlessly interact with the answer area through various input methods, enhancing both operational flexibility and user experience.

In another realizable embodiment, the answer area primarily serves as a canvas for exhibiting handwritten content derived from handwriting touch input. Within this framework, the answer area can provide a real-time display of the electronic pen's tip trajectory, ensuring instantaneous output presentation of input content. This feature guarantees an authentic handwriting experience, circumventing issues such as delayed display and other factors that might otherwise detract from a satisfactory user experience.

Furthermore, smart terminals encompass a range of devices, including but not limited to tablets, tablet-keyboard hybrids, computers equipped with handwriting pads, and touch-screen computers.

In existing solutions, handwritten answers are typically recorded on physical paper, which is later scanned and archived digitally. Alternatively, they are written manually using traditional pen and paper, then photographed and uploaded to either computers or mobile phones. Another approach involves using dot-matrix digital pens on specialized paper, where the paper retains its solid form while the digital pen's trajectory is transmitted to computers via Bluetooth. In essence, for handwritten questions, these conventional methods entail physically writing answers on paper before transmission.

In this novel approach, electronic styluses on tablet PADs (tablet computers) enable convenient electronic screen-based handwriting, facilitating user-friendly writing. The process starts with electronic versions of assignments, eliminating the need for additional steps like photography, scanning, and segmentation. This allows initial answers to questions and subsequent tracking to be stored cohesively in a unified location for display and subsequent data processing. Handwritten question input data from tablet users can synchronize with computers or mobile phones. Depending on the context, users can view or edit the synchronized handwritten data from tablet terminals on various devices (tablets, computers, or mobile phones). Importantly, different smart terminals' handwritten input does not interfere with the functioning of other smart terminals.

To put it simply, this approach accomplishes the determination of the answer area for any handwritten question in the electronic assignment through intelligent terminals. Ideally, this is implemented within the tablet PAD, aligning with user habits and ultimately enhancing user experience.

In an implementable embodiment, the electronic assignment encompasses a series of question prompts along with corresponding subjects to be addressed beneath each question prompt.

Step S104 involves the following:
1. For each pending question in the electronic assignment categorized as a handwritten question type, an independent handwritten answer area is generated on the first predetermined blank canvas.

Specifically, the implementation method for generating answer regions for different questions within any main question is as follows: Determine whether the assignment data of the electronic assignment contains pre-set types of question numbers, such as ("Part I:," "Part II:," "Part III:," ... "1.," "2.," "3.," ... "(1)," "(2)," "(3)"), and automatically obtain each pending question under the main question. Use the aforementioned methods (1), (2), and (3) to determine question types to judge whether each question is a handwritten question. If it is, generate the corresponding answer region.

Based on the above methods, automatically generate the answer region corresponding to each handwritten question on the first preset blank canvas. Store the writing content submitted by students in different data units and automatically label each data unit with the corresponding student and the specific question the answer content pertains to.

In this innovative approach, an electronic assignment typically encompasses various pending questions, which are sequentially identified and processed in alignment with the sequence of question numbers. Alternatively, multiple pending questions may be recognized and addressed simultaneously. In cases where one or more pending questions fall under the category of handwritten questions, the corresponding answer areas are generated automatically. This process facilitates the simultaneous batch identification of multiple pending questions, subsequently enabling the concurrent batch generation of corresponding matching answer areas for the identified handwritten questions. As a result, the efficiency and electronic sophistication of generating electronic assignments are significantly enhanced.

Moreover, it's essential to highlight that existing technological approaches often involve manually designing answer sheets with segmented boxes or scanning entire answer sheets and then extracting content based on box divisions. However, such methods are cumbersome for routine tasks like assigning daily homework, which imposes high-frequency repetitive procedures. Teachers find it burdensome to manually split answer boxes, perform printing, and scan for daily homework tasks. Furthermore, these methods are suitable primarily for scenarios with extremely low usage frequency, such as college entrance examinations, where a division of answer areas once a year is tolerable, but not conducive to high-frequency scenarios that demand favourable user experience conditions. In contrast, this novel approach incorporates automatic division functions within the system, eliminating the need for manual intervention. Consequently, in contexts like school environments, where high-frequency homework tasks are commonplace, this system enhances the overall user experience by expediting the process and considerably improving electronic assignment processing efficiency.

In certain instances, answers to multiple questions are collectively written without clear differentiation or the division of dedicated answer boxes. Consequently, the subsequent part of an answer cannot be automatically associated with a specific question, thereby rendering the task of generating personalized student performance statistics, such as for topics like trigonometry, unattainable. This inability to attribute answers to particular questions poses challenges in achieving focused student performance analysis. Similarly, for educators, this scenario lacks intelligence capabilities. For instance, during a lecture, a teacher might desire automated aggregation of high-frequency incorrect responses along with the ability to observe the original trajectory of errors. However, due to the lack of question-answer correspondence in conventional methods, automated scoring and high-frequency incorrect question aggregation become problematic. In the context of the present disclosure, however, the program establishes a direct correspondence between answer tracks within the answer area and individual questions from the outset. Consequently, the system can automatically compute scores and generate lists of high-frequency incorrect questions (reversed scores), allowing teachers to extract specific questions along with the original response trajectory of students who answered incorrectly, greatly facilitating the evaluation process.

Alternatively, when answers to multiple questions are collectively written, necessitating subsequent uploading of the answer content, the segregation of student answers relies on students taking distinct photographs for each question. However, in practical use, students frequently write several questions on a single piece of paper and then attempt to divide them through photography. This process requires cropping the photo into various rectangular images with different aspect ratios. Consequently, the varied sizes and aspect ratios of these photographs become distorted upon display at the teacher's portal. This discrepancy does not manifest in the current program, where uniform font sizes for both front and back answers eliminate such inconsistencies, enabling teachers to mark answers more easily. This optimization significantly enhances the user experience when utilizing the program.

Furthermore, none of the previously proposed solutions manages to achieve the automated correspondence of answer areas to questions, let alone accomplish the automated association between sub-questions and their respective answer areas. In contrast, the present solution uniquely facilitates automated correspondence between each answer area and its corresponding sub-question. This achievement guarantees the automation, standardization, and rationalization of the electronic assignment processing workflow.

In an implementable embodiment, the questions slated for processing encompass multiple question levels, each comprising several sub-questions tailored to the respective question level. Within this framework, Step S104 encompasses the following: When it is determined that a sub-question pertains to a handwritten question category, a handwritten answer area tailored to that sub-question is generated on the first predetermined blank canvas. This process generates multiple handwritten answer areas, each in correspondence with the question to be processed.

Among these elements, the questions to be processed commonly align with one or more question levels. Correspondingly, each question level usually corresponds with one or more sub-questions. The number of question levels across distinct questions, as well as the number of sub-questions under each question level, can either align or differ, contingent on the specific requirements or adjustments dictated by the nature of the question at hand.

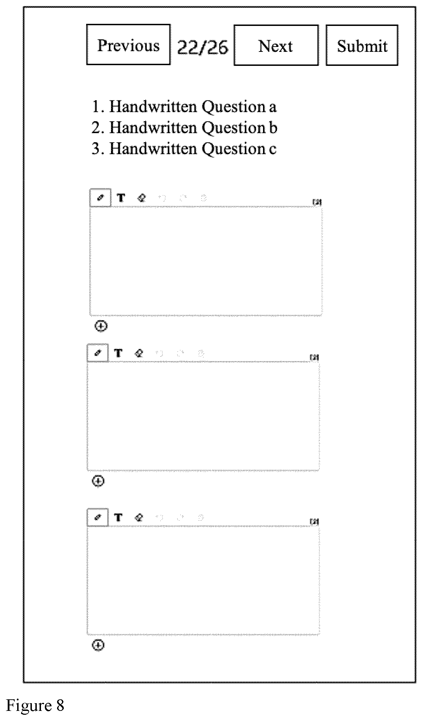

To illustrate, refer to FIGS. 6 through 8, where FIG. 6 depicts an identified question encompassing three handwritten sub-questions labelled as a, b, and c. Accordingly, FIGS. 7 and 8 visually outline the corresponding handwritten answer areas aligned with these sub-questions.

In this solution, the processing of a question involves the sequential identification and handling of all sub-questions under each question level. This can be executed according to the order of question numbers or even simultaneously for multiple sub-questions. Whenever one or more sub-questions are classified as handwritten questions, corresponding answer areas are automatically generated for each. This mechanism enables the simultaneous batch identification and processing of multiple sub-questions. The program achieves the generation of suitable answer areas for each identified handwritten question, effectively enhancing the efficiency of electronic and intelligent answer area generation within the context of questions.

Moreover, this hierarchical division of questions also simplifies later processes such as scoring and learning analysis. It provides a refined basis for the examination of various subject concepts within the same question, enhancing the precision of student assessment. By gauging scores on each sub-question, students' proficiency in different subject concepts becomes apparent. This empowers targeted counselling to address specific areas of strength and areas requiring improvement, ultimately enhancing overall teaching quality.

In contrast, none of the existing solutions have demonstrated the ability to achieve automated alignment of answer areas with questions, let alone the automated linkage of sub-questions and their corresponding answer areas. However, the current solution excels in achieving precise correspondence between each answer area and its associated sub-question. This achievement ensures the overall automation, standardization, and rationalization of electronic assignment processing.

In an implementable embodiment, step S104 encompasses: In instances where multiple sub-questions belong to the handwritten question category, handwritten answer areas for all these multiple sub-questions are concurrently generated. These handwritten answer areas for each sub-question can be individually displayed corresponding to the respective sub-question's location. Alternatively, the handwritten answer areas for multiple sub-questions can be sequentially and centrally displayed based on the order of questions.

The prevailing solutions exhibit limitations. They either segregate title text and answer content onto separate pages, rendering location customization inflexible and overall assignment management cumbersome. Alternatively, they lack support for subdividing the answer area to accommodate sub-questions, resulting in the absence of any content connection with sub-questions.

In this novel approach, multiple handwritten questions within the subject under processing are efficiently processed electronically. The result is the simultaneous generation of all corresponding answer areas.

The display formats for these numerous answer areas can be categorized into two main modes. First, the direct-underneath display mode generates matching answer areas directly below each sub-question related to the handwritten question. Alternatively, the sequential display mode positions these numerous answer areas beneath the entire pending question according to ascending question numbers. Users can switch between these modes using a designated button for the question to be processed. The first display mode can be set as the default option. This approach enables flexible display mode adjustments to cater to diverse user operational preferences, effectively enhancing user experience.

To elaborate, as depicted in FIGS. 6-8, consider a specific question encompassing three handwritten sub-questions-designated as a, b, and c. The question contents for these three handwritten inquiries are portrayed in FIG. 6. By employing the aforementioned acquisition method, the corresponding handwritten answer regions-exhibited in FIG. 7-can be procured. In this scenario, each answer area aligns directly beneath its corresponding handwritten question. Alternatively, as demonstrated in FIG. 8, the display may centralize the three handwritten questions and their corresponding answering regions.

The specific method for determining the display position of the answer region can be achieved through the following schemes:
**Scheme (1):** Use the PDF or image of the original test paper, and utilize optical character recognition (OCR) technology to obtain the relative position of the question stem and other parts in the test paper. Measure the spacing between two adjacent sub-question stems to determine if the spacing exceeds the set threshold (2 centimetres or the height of two lines of text). If not, these sub-questions are aggregated together, and the answer regions need to be generated after these questions with control instructions generated accordingly. In this case, the handwritten answer regions for each sub-question are displayed sequentially and collectively based on the question order. If the spacing exceeds the threshold, determine that additional answer space needs to be added between the two adjacent question stems, and generate corresponding answer regions immediately following each sub-question with control instructions to control the display position according to the corresponding sub-question.
**Scheme (2):** After accumulating a certain amount of data on question arrangement patterns (i.e., question + arrangement pattern data pairs), extract the following features from the questions: question attribute features including subject, grade, and source of the exam (directly obtained from question labels); high-dimensional features of the question information extracted through pre-trained paragraph semantic models (such as Sentence BERT). Combine the question attribute feature vector and high-dimensional features (also called feature fusion) to obtain the question feature vector. Then, use a similarity algorithm to calculate the cosine similarity (Euclidean distance, Manhattan distance, K-means algorithm, etc.) between the question feature vector and all the accumulated question vectors, identify the question with the closest similarity, and adopt its corresponding display mode as the current question's answer region display mode.
**Scheme (3):** Classify all sub-questions of handwritten questions in past electronic assignments using a preset classification algorithm (such as decision trees, support vector machines (SVM), random forests, and gradient boosting decision trees (GBDT)). Extract features such as question length and subject from the basic question information, and use the BERT model to extract text semantic features. Combine all features to obtain an n-dimensional feature vector. Obtain labels by measuring the size of the answer regions for each question and categorizing them into n classes, each representing a range of answer region sizes. Train the SVM classifier and establish the correspondence between question types and their respective answer regions. For any given sub-question, use the SVM classifier to determine the question type, and based on the pre-established correspondence, automatically generate the display mode for the answer region of that sub-question.
**Scheme (4):** Implement the determination of answer region size based on an algorithm model: Input each sub-question and output the corresponding display mode using a preset network model (such as the SVR regression model with mean squared error loss). Train the model similarly to Scheme (3). For any given sub-question, input the corresponding sub-question into the model to output the display mode of the answer region. Periodically update the model with new handwritten questions to ensure accuracy.
**Scheme (5):** Based on the subject and question types from last year's exam papers, the system automatically selects a recommended display mode for the answer region.

In the actual model training process, determining whether a question is a handwritten question, generating the answer region, and determining the display size and mode of the region can be achieved within the same algorithm model to ensure training efficiency. Alternatively, separate training for different dimensions or a combination of any two dimensions can be conducted based on actual needs.

Additionally, the answer display region can accommodate various settings:
1. The same question or sub-question can have multiple answer regions. For instance, as shown in Figure 6a, one answer region corresponds to calculating the average score of the test, and another corresponds to calculating the median score of the test.
2. The same question or sub-question can have multiple answer regions that can float to any required position. As shown in Figure 6b, the position of the horizontal line in the question stem or any area below the question stem can serve as answer regions.
3. The answer region can be in the middle or below the question stem, as shown in Figures 6a and 6e.
4. The answer region can be above the question stem. If the analysis showing content in the question stem indicates that the answer should be completed in the area above (such as "please fill in the answer in the area above"), an answer region of appropriate or sufficient size is automatically generated in the blank area in front of the question stem. Alternatively, a manually triggered answer region can be generated in front of the question stem, as shown in FIG 6c.
5. The same question or sub-question can correspond to a combination of floating answer regions and fixed answer regions, as shown in Figure 6d.
6. The answer region can have a background image, allowing students to continue answering on the image, as shown in FIG 6e.
7. Floating answer regions can be within a table, as shown in Figure 6f. The answer region settings can be flexibly combined based on the actual question to meet the requirements of different subjects and question types.

In an implementable embodiment, as illustrated in Figure 9, the subsequent action after step S104 is as follows:
Step S105 involves receiving an instruction to adjust the size of the answer area.
Step S106 is centred on modifying the dimensions of the handwritten answer area based on the received size adjustment instruction.

By obtaining the coordinates of the current pen position and the current size of the answer region, the system will automatically adjust the size of the answer region. When it detects that the user is writing a trajectory within a certain distance from the current bottom edge, the system will automatically increase the size of the region without requiring the user to click multiple times for adjustment. This ensures intelligent and reasonable operation, enhancing the user's operational experience.

This design facilitates user interaction within the answer area for a handwritten question. If a user deems the default answer area size to be too constrained (e.g., inadequate space for writing, revision, or annotation), or too expansive, the answer area's dimensions can be flexibly adjusted according to specific requirements. This adaptability caters to the varied needs of students and teachers using the answer area across different scopes, thereby mitigating limitations present in existing solutions for the answer areas of handwritten questions. These drawbacks include instances where there are no restrictions on where the answer is placed, which can lead to mismatches between student answers and the corresponding question. Conversely, fixed answer area sizes can hinder data entry, potentially resulting in incomplete answer capture and subsequent scoring issues.

In an implementable embodiment, the default size of the handwritten answer area is directly proportional to the size of the corresponding question's score to be processed.

The sizing of the answer area that aligns with the handwritten questions operates as follows: For instance, the dimensions of the answer box correspond to the content extent of the reference answer for the sub-question. This mechanism ensures the coherent and appropriate display of the answer area. Consequently, there's no need for manual adjustments to the answer area through additional operations, thereby enhancing the user experience.

Within this system, the size of each answer area is neither randomly generated, nor standardized, nor manually determined. Instead, it is contingent upon the magnitude of the question's score. Consequently, questions with higher scores, indicative of more extensive answer content, yield larger answer areas. Conversely, questions with lower scores, indicating succinct answer content, result in smaller answer areas. This approach guarantees the rationality of answer area presentation, effectively obviating the necessity for human-initiated answer area adjustments via additional operations. This, in turn, streamlines the subsequent size adjustment process and ensures a seamless user experience. This approach effectively safeguards the logical sizing of the answer area, minimizes the requirement for post-generation adjustments, and reduces the need for subsequent size alteration operations, thereby bolstering the overall user experience.

In a realizable embodiment, a first size adjustment plugin is positioned at a designated first location within the handwritten answer region;
Step S105 encompasses:
   1. Upon interaction with the first size adjustment plugin, a command to expand the area's sizing is captured;
Step S106 entails:
   1. Based on the area size extension command, the size of the handwritten answer area is increased to a predetermined extent;
   2. A second size adjustment insert is placed correspondingly at a predetermined second location within the handwritten answer area;
Step S105 involves:
   1. Upon engagement with the second size adjustment plugin, an instruction to diminish the area's sizing is obtained;
Step S106 encompasses:
   1. The size of the handwritten answer area is decreased to a predefined extent as per the area size reduction instruction;

Within this system, the answer area can be automatically extended in terms of its spatial scope through user actions such as clicking on the area's borders or utilizing dedicated buttons. Each click on the designated button "+" results in an incremental extension along the corresponding border, with the step size predetermined. This dynamic extension process offers flexibility and personalized adjustment possibilities to users for the answer box area. For instance, when students click the "+" button beneath the answer area, it automatically extends downwards in a predefined step (like 1cm or another set value), with further extensions occurring after each subsequent click, up to a predetermined extension limit (e.g., a predefined upper limit of 15 extensions). In case the extended answer area's lower edge extends beyond the display interface, a scrollbar is enabled, enabling the user to navigate the entire answer area. Alternatively, once the answer area reaches the bottom, it can continue extending downwards, either displaying on the current page or automatically transitioning to the next blank page when the current page is filled. This adaptability caters to diverse user needs for personalized answer area adjustments, simplifying subsequent tasks such as direct answer booklet printing.

Specifically, as depicted in FIGS. 10-12, through a click on the "+" button beneath the answer area, a sequential extension of the corresponding answer area downwards is achieved. Conversely, by clicking on the "-" button beneath the answer area, the corresponding answer area is progressively reduced upwards.

It's important to note that while the answer area can be extended, it isn't designed for indefinite expansion. This dual consideration ensures that the needs of both students and teachers are met while preventing unnecessary space wastage resulting from poor answering habits. Moreover, it standardizes students' answering behaviour effectively.

For instance, when a user finds the automatically extended area excessively large and wishes to restore some space, the user can click the "-" button located beneath the answer area. This triggers a vertical reduction in a predetermined step (such as 1cm or other designated values) with each click. The step-wise reduction continues until the desired answer area size is achieved. This approach provides an even more versatile adjustment mechanism, catering comprehensively to users' distinct requirements in various real-world answering scenarios. This advanced flexibility accommodates users' genuine needs during practical question-answering scenarios.

Furthermore, beyond the described method of answer area adjustment, alternative methods can be implemented. For instance, users could extend the answer area downwards by clicking the lower edge of the area or shrink the area upwards by double-clicking on the lower edge. The choice of method can be customized and adapted to fit specific scene requirements.

In an implementable embodiment, a third size adjustment insertion is provided, corresponding to the third predetermined position of the handwritten answer region.
Step S105 comprises:
   1. Triggering the display of the Parameter Input screen upon interaction with the Third Size Adjustment plugin. The Parameter Input screen allows for the reception of externally entered area size parameters.
Step S106 comprises:
   1. Adjusting the size of the handwritten answer area to the third predetermined size based on the area size parameters received.

In this program, a designated button is pre-positioned within the answer area, serving the purpose of summoning a size area parameter setting pop-up window within the system interface upon being clicked. Within this pop-up window interface, users can input specific size range parameters for the answer box area. The adjustment of the size range of the answer area can be finalized through a click, allowing for a refined and precise adjustment of the answer area's size. This sophisticated approach facilitates a granular and accurate modification of the answer area's dimensions, thus catering to users with higher precision requirements and further enhancing their overall user experience.

When the user's pen leaves the current answer region, the system automatically calculates the actual writing area height based on the trajectory position on the canvas and adjusts the canvas height accordingly. It can also automatically trim off the excess blank area at the bottom.

Specifically, the system obtains the position data of the latest writing trajectory within the answer region and the position data of the current answer region's lower border, calculating the distance between these two positions in real time. When this distance is less than the set value, the system automatically extends the lower border by the set distance. If the user erases some of the written content during this process, causing the distance to become greater than or equal to the set value, the system automatically retracts the lower border by the set distance. The retracted answer region will not be smaller than the initially generated answer region.

In an implementable embodiment, the handwritten answer region supports the retrieval of writing track correlation data. This writing track association data is stored within a predetermined storage space.

The writing track correlation data encompasses multiple segments of writing track data, along with corresponding first-time frame data and/or answer writing speed data for each segment of writing track data.

On the student portal, the writing track data pertains to answer track data. Conversely, on the teacher's portal, the writing track data is composed of answer marking data.

The predetermined storage space encompasses both local storage and/or cloud storage options. This arrangement facilitates seamless access to the relevant writing track correlation data whenever specific queries or retrieval needs arise. The writing track correlation data can be transferred to the predetermined storage space through one or more of the following methods: initiation of pen movement to activate the current answering area, departure from the current answering area, and extended stay within the answering area for a defined duration (e.g., 30 seconds).

On the student portal, the writing track data corresponds to the answer track data.

On the teacher's portal, the writing track data pertains to answer marking data.

In this context, the acquisition of data linked to the writing trajectory within the answering area can be undertaken at a higher frequency (e.g., 0.1 seconds per data point) without impeding the trajectory reduction process. This approach ensures the collection of ample data, thus enhancing the precision and dependability of subsequent data analyses.

Identify the student's answer content from the image and compare the recognized content with multiple scoring points for that question. Calculate whether each scoring point is reflected in the answer content. If reflected, determine which area of the answer content image corresponds to each scoring point and retrieve the start time and duration of each pen stroke in this area. This allows calculation of the timeline information of when the student started and finished each step while answering the question.

In other words, obtain the writing content corresponding to each scoring point for the current question, then find the corresponding trajectory data within the entire trajectory to determine the start and end times for each scoring point, calculating the corresponding duration. This also allows for identifying the time spent writing incorrect answer content and other dimensions. Additionally, it can generate a chart corresponding to the timeline information to provide a more intuitive understanding.

Specifically, the following time segments can be obtained based on the above method:
1. **Question Review Duration:** The time from entering the question page to the first pen stroke.
2. **First Point Duration:** The time taken to earn the first point based on the scoring points, obtained from the backend data.
3. **Second Point Duration:** The time taken to earn the second point based on the scoring points, obtained from the backend data.
4. And so on, obtaining the time taken for the student to earn each point.

This data can be used to statistically compare the student's time with peers, performing a horizontal comparison. For instance, determining the student's time rank within a normal distribution (e.g., the longest 5%) or the difference between the student's time and the average time, if greater than n standard deviations.

After obtaining the normal distribution chart, if the student's time rank for the first step is in the longer 30%, the second step in the longer 40%, and the third step in the longer 10%, it identifies the weakest area of the student's knowledge as related to the third step. This is where the student has the most potential for improvement. This approach allows for pinpointing the specific steps where the student struggled and the weak subject concepts, enabling targeted interventions. For students who answer slowly, it can further analyze whether they are slow in reviewing the question or in calculations, providing a detailed understanding of each student's situation for targeted intervention and tutoring.

The automatic identification of the student's scoring points in the answer content can be achieved through the following methods:
1. **Scoring Point Output Model:** Determine the scoring points in the student's answer content using a scoring point output model. Specifically, use several answer contents for the same question as input, label each scorable content in each answer content, and use this as the model output. Train the model using a preset network model to obtain the scoring point output model. For any given question's answer content, input it into the scoring point output model to automatically output multiple scorable contents (scoring points).
2. **Teacher Annotation and OCR Recognition:** Teachers mark each scorable point (manually marking the correct areas), and then use OCR recognition technology to automatically identify each scorable content.
3. **OCR Recognition and Comparison with Reference Answer:** Use OCR recognition technology to identify the student's answer content and compare it with the reference answer. Identify the areas where the content overlap exceeds a set value to automatically identify each scorable content.

This program facilitates the comprehensive, real-time, and dynamic tracking of all student and teacher interactions within the question-answering area. The system records the corresponding time for each writing track. For students, this entails the real-time recording and processing of their ongoing question-answering trajectory. Through the synchronization of question-answering tracks with timestamps, detailed analyses can be conducted. This enables insights into the specific steps that a student may take for an extended duration, revealing areas of weakness. Such insights provide targeted guidance for improving students' mastery levels, ultimately enhancing the learning experience. This precise and prompt positioning of students' questions is accomplished automatically, eliminating the need for manual segmentation of tracks and significantly boosting processing efficiency. Examples of tracked parameters include the time of the initial pen movement upon entering a handwritten question, the cessation of writing, total time spent on answering the question (the cumulative sum of trajectory segments), answer speed, answer content, edits and modifications during the writing process, and more.

For teachers, this solution records real-time marking applied to students' answers within the current answer area. This enables other supervisors to review the teacher's marking data and assess the thoroughness of each marking. The recording ensures that marking data is comprehensive and reasonable, facilitating effective supervision. It also empowers teachers to offer targeted improvement suggestions, thereby optimizing the overall teaching and learning quality.

In an implementable embodiment, the answer box region facilitates the dynamic display of writing track correlation data on the designated portal.

For example, in the classroom, the teacher assigns a problem on the blackboard, and the students write their answers. When the live broadcast function is enabled, it allows the teacher to see each student's answer in real-time on their portal without having to walk around to each student for detailed inspection, thereby greatly simplifying the supervision and management process.

The page refreshes at preset sampling frequencies to timely obtain the images corresponding to the writing trajectory data and report them to the teacher's portal. In practical assignment scenarios, different sampling frequencies can be applied based on the type of assignment (classroom assignments, homework). Important assignments have higher data collection frequencies, while less important ones have lower frequencies, ensuring the overall efficiency and rationality of data management.

This program enables the real-time, dynamic broadcast of all writing track data within the question-answering area. This feature achieves the live display of user interactions in the designated area. Different portal types possess distinct viewing permission for track data, including but not limited to: the teacher's portal can monitor and view real-time writing track data from each student's portal, while the supervisor's portal can observe and review real-time marking track data from each teacher's portal.

Specifically, consider the scenario of exam invigilation. On the teacher's portal, clicking on any student's electronic assignment permits the teacher to observe the student's current question-answering interface. This feature facilitates real-time insights into where the student has made progress, what has been written, and more. Similarly, on the supervisory portal (e.g., school portal), the ability to click on any teacher's ongoing marking provides access to the teacher's current marking interface. This capability enables random checks and supervision of teacher marking, thereby contributing to the enhancement of overall teaching quality.

In an implementable embodiment, the handwritten answer area supports an action layer display on the student's portal within the first predefined user interface.

The handwritten answer region enables the playback of stored answer track data within a predetermined storage space on the second designated user portal.

Furthermore, the handwritten answer area supports the display of an action layer on the teacher's portal within the third predefined user interface.

This program also facilitates the playback of stored answer marking data within a preset storage space on the fourth designated user portal.

The selection of the corresponding data playback mode is determined by different instructions made by the user.

Specifically, the first, second, third, and fourth preset user portals represent operational interfaces with different permissions tailored to the teacher portal, student portal, and similar roles. The specific operational permissions are determined through pre-configuration but are adjustable based on actual requirements.

This program allows the viewing of the student portal's operational layer from the teacher's portal. The teacher can playback the answer track data of each student's answer area and students can review their answer track data. Similarly, the operational layer of the teacher's portal can be observed from the supervisory portal (e.g., the school portal). The supervisory portal can playback the teacher's answer marking data under each answer area and even the answer correction data from the student portal.

In a supervisory portal (e.g., school portal), teachers' operational layers can be viewed, and the playback of their answer marking data under each answer area can be performed. Similar interactions apply to other combinations of portals, such as teacher and student portals, or student and teacher portals. Playback can occur at normal speed, be accelerated, or slowed down based on personal preferences (e.g., 0.75x, 1.25x, 1.5x, etc.). Users can also opt to skip certain content, allowing tailored viewing and analysis to fulfil diverse user needs and enhance user experience.

In an implementable embodiment, the handwritten answer area integrates corresponding fundamental functional components. These components include several basic functional plug-ins.

For instance, refer to FIG. 13, where users can encircle the handwritten answer area (representing the writing track) using an electronic pen. Clicking on different positions within the handwritten answer area invokes distinct basic functional plug-ins. As shown in FIG. 14, users can access the electronic pen settings plug-in to configure parameters like pen colour and handwriting thickness. Analogous operations apply to other functions and are consistent with standard practices.

In this solution, recognizing the diverse operational needs of students and teachers when answering questions or marking students' answers, such as employing electronic pen tools to choose preferred pens (where users can personalize pen type, colour, etc.), using eraser tools for corrections, and accessing draft paper tools for calculations, a dynamic solution is provided. This approach not only auto-generates answer areas but also corresponding functional setting plug-ins, referred to as toolbars. This advancement in comparison to existing solutions involving paper-based or dot matrix pen-based scenarios offers a heightened degree of electronic assignment. In this program, the auto-generation of answer areas is complemented by auto-generating toolbars, fostering efficient student and teacher handwriting. While fulfilling fundamental operational needs, the solution adapts to personalized usage requirements, granting flexibility and an enriched user experience.

In an implementable embodiment, the basic functionality plug-in encompasses a draft paper calling plug-in. This plug-in serves to summon or conceal draft paper. The draft paper area aligns with the handwritten answer area, with each handwritten answer area corresponding to one draft paper. Alternatively, all handwritten answer areas under a given question correspond to a single draft paper. These draft papers are dynamically stored within the preset storage space of the smart terminal.

In an implementable embodiment, the attributes of the draft paper are adjustable. The draft paper area, where the draft paper resides, is visually distinct from the handwritten answer area. The recall of the draft paper influences the availability of the eraser function within the handwritten answer area, based on actual selection operations. Draft paper attributes include, but are not limited to, transparency, size, colour, draggable position, etc. Flexibly adjusting draft paper attributes caters to diverse user habits and ensures an optimized question-answering experience.

Typically, upon invoking the draft area, it is positioned to the right of the current answer area. Users can seamlessly relocate it within the current answer interface as per their requirements. To ensure the visibility of both question and answer content, the draft paper is made partially transparent when in use. Differentiating between draft and answer areas is achieved through font colour. For instance, answer areas often have white backgrounds with black font, while draft areas have darker backgrounds (black or grey) and white font. The recall of the draft paper prompts evaluation of whether the eraser function in the answer area should be disabled based on user selections.

In this program, for instance, in a simple physics question, students frequently invoke the draft paper for calculations and derivations, showcasing their thought processes and progress. This extends to teachers marking student answers - upon identifying errors, teachers can inspect the draft area to understand students' thought processes, uncovering specific mistakes. For example, an error might be in a certain step's written calculation, leading to an incorrect final result. By pinpointing such details, targeted marking can be made instead of generalized evaluations. This fosters effective teaching outcomes.

Furthermore, when students detect errors in their answers, they can recall the draft paper for self-assessment, expediting error identification. This boosts operational efficiency. Additionally, this disclosure integrates the entire assignment writing process into the electronic assignment system. Students need not use external drawing board software for drafting, facilitating swift and flexible draft utilization. This ensures students can accomplish all question-answering operations within the system, including online exam proctoring functionality.

In an implementable embodiment, the draft paper area occupies a first predetermined blank canvas alongside the handwritten answer area.

The draft paper area can be positioned either in front of or behind the handwritten answer area, offering flexibility in arrangement. Furthermore, the draft paper area and the handwritten answer area can be displayed adjacently in separate sections.

In this program, the draft paper area is integrated into the same canvas as the answer area, offering options for its display. The draft paper area can be suspended above the answer area or positioned below it, with mode-switching enabled through specific actions, like double-clicking on the front section of the display. This approach ensures versatile and convenient switching between display modes. Moreover, the draft paper area can be displayed alongside the answer area, either horizontally or vertically, or in other practical display orientations based on specific needs. These configurations offer adaptability to diverse usage scenarios, enhancing user experience.

Specifically, as illustrated in Figure 15 and Figure 16, the draft paper area is depicted as floating above the answer area. Students are empowered to adjust the draft paper area's transparency to their liking by manipulating a slider bar located above the draft paper area. This is exemplified by higher transparency in Figure 15 and lower transparency in Figure 16. The draft paper can be deactivated by using the close button situated in the upper-right corner of the draft paper area. If students wish to re-activate the draft paper, they can simply click on the draft paper call plug-in again, thereby enabling the draft paper function.

In an implementable embodiment, the draft paper region also supports the acquisition of draft track association data. The draft track association data is stored within a predefined storage space. It encompasses various segments of draft trajectory data, and includes second time frame data and/or draft writing speed data corresponding to each segment of the draft trajectory data.

For students' use, the draft track association data pertains to the drafting writing track data. For the teachers' use, the draft track association data is related to the draft marking track data.

This preset storage space includes both local storage and cloud storage options. This design ensures straightforward access to the pertinent draft track association data, catering to specific queries or calls as required. The draft track association data can be transferred to the designated storage space through various means, such as starting pen movement to activate the current draft area, exiting the current draft area, or remaining within the draft area for an extended period (e.g., around 30 seconds).

Notably, the collection of draft trajectory association data within the draft paper area may involve frequent data capture at a higher frequency (e.g., 0.1 second per capture) without disrupting the trajectory restoration process. This approach aims to accumulate ample data to uphold the accuracy and dependability of subsequent data analyses.

Within this solution, the question-answering area is equipped with comprehensive, real-time, and dynamic tracking capabilities to monitor the activities of both students and teachers within the draft paper area. This tracking includes capturing the associated time for each action, thereby enabling the coupling of writing track correlation data within the question-answering area with corresponding draft track correlation data. This integration aims to support teachers and students in reviewing the problem-solving process for specific challenges. Through this approach, teachers can gain a deeper understanding of student question-answering behaviour, while students can better comprehend teacher marking. This synergy enhances the overall teaching quality.

In an implementable embodiment, the answer box region encompasses the dynamic display of draft track association data from the draft paper area onto the intended terminal.

The page refreshes at preset sampling frequencies to timely obtain the images corresponding to the draft trajectory data and report them to the teacher's portal, allowing the teacher to view them on time. In practical assignment scenarios, different sampling frequencies can be applied based on the type of assignment (classroom assignments, homework). Important assignments have higher data collection frequencies, while less important ones have lower frequencies, ensuring the overall efficiency and rationality of data management.

This program allows for the dynamic real-time display of all draft contents within the draft paper area. This functionality enables the live broadcasting of user activities within the draft area. Diverse target portals possess varying permission for data viewing, which encompass but are not limited to: teachers on their portal can actively monitor and observe the real-time draft writing content of each student in the draft paper area; supervisors can closely track and assess the real-time corrected content of each teacher within the draft paper area on the teacher portal. Correspondingly, the supervisory portal can monitor and assess the real-time marking content of each teacher's draft paper on the teacher portal.

For instance, in a supervisory context, teachers can interact with the electronic assignments currently being written by students to access the real-time view of each student's question-answering interface. Through this interface, they can ascertain whether a student is currently writing within the question-answering area or the draft area. Additionally, they can view real-time draft content, thereby obtaining precise insights into each student's specific question-answering activity. This real-time supervision approach significantly contributes to the realization of high-quality teaching standards.

In an implementable embodiment, the draft paper area facilitates the presentation of draft writing track data on the student portal within the first designated user interface. The draft paper region also supports the playback of stored draft writing track data in the second designated user portal. Additionally, the draft paper area accommodates the display of draft marking track data from the teacher's portal within the third predetermined user interface. Furthermore, the draft paper area enables the playback of stored draft marking track data within the fourth designated user portal. The selection of the appropriate data playback mode is determined by distinct selection instructions.

The first, second, third, and fourth preset user portals are operational terminals with different permissions for users such as teachers and students. The specific operational permissions are initially defined but can be adjusted as required based on actual needs. This design fosters adaptability and customization in accordance with real-time requirements.

Within this program, the operational layer on the student portal can be accessed from the teacher portal. This allows playback of the draft trajectory associated data under each draft area from the student portal on the teacher portal. Conversely, students can review their own draft trajectory-associated data under each draft area. In a supervisory context (e.g., school management), playback of the teacher's draft marking data for each draft paper area is possible. Additionally, playback of draft marking data under each draft area from the student and teacher portals is also viable. This innovative feature enables the playback of operational layers and stored draft track data across various preset user portals, thus regulating the corresponding response scenarios. Playback content can be adjusted for varying playback speeds to cater to individual preferences (e.g., 0.75 times, 1.25 times, 1.5 times, etc.). Alternatively, selective content playback within a certain time frame enhances adaptability to different viewing requirements, thereby ensuring an optimal user experience.

Specifically, from the teacher's portal, educators can access the content of students' draft writing. When the answer content is unclear or questionable within the answer area, teachers can utilize the draft paper function to review draft content and identify errors. This process is particularly effective in scenarios where students' logical processes are correct, but calculation errors are made during the transcription of intermediate results. Through feedback methods such as messages, teachers can offer targeted instructions, pinpointing the actual reasons for the students' incorrect answers. For students, viewing teacher marking helps identify where draft errors occurred, facilitating the quick identification of reasons for incorrect responses. When students access the marking from teachers, they can review the feedback at their own pace. By slowing down playback or repeatedly reviewing the approval process, students can gain a clearer understanding of the draft, ultimately leading to enhanced learning outcomes.

In an implementable embodiment, the method of acquisition encompasses the following steps:
1. Gathering Actual Writing Data Under Dynamic Follow Display Answer Area:
   The method involves retrieving the real-time writing data within the dynamic follow display answer area. The real-time writing data can comprise writing track correlation data or be derived from a combination of writing track correlation data and draft track correlation data.
2. Analysis of Actual Writing Data Using Predefined Anomalous Answer Monitoring Rules:
   The gathered actual writing data undergoes analysis using predefined rules for detecting anomalous answers. The outcome of this analysis yields the first set of results.
3. Generation and Issuance of First Alert Message Based on First Analysis Results:
   The results of the initial analysis are employed to ascertain whether any anomalies in question-answering behaviour or approval behaviour are present. In the event of the detection of an anomaly, a first alert message is generated and disseminated.

Specifically, the following methods are used to determine whether there are anomalies in answering or marking behaviours:
**Scheme (1):** Compare the student's current answer data with their historical answer data and determine anomalies based on data characteristics. Calculate the time spent per point based on scores and answering time. Statistically analyze the time spent per point for each student, and use a normal distribution to calculate the mean and standard deviation. Mark data beyond n times the standard deviation as potential anomalies for further assessment. Similarly, statistically analyze the time all students take to answer the same question, use a normal distribution to calculate the mean and standard deviation, and mark data beyond n times the standard deviation as potential anomalies for further assessment.
**Scheme (2):** Combine manual invigilation with Scheme (1) to accumulate confirmed cases of cheating, resulting in several data pairs (student answer records - whether cheating occurred). Use answer record characteristics such as answering time, operation frequency, and the number of times the student switches out of the application as high-dimensional vector inputs for the model. The model can be any neural network, and the output is a two-dimensional vector representing the probability of cheating. Calculate the cross-entropy loss using the accumulated data and update the model weights using a backpropagation algorithm until convergence to obtain a cheating detection model, maximizing the probability of correct predictions. Additionally, perform manual checks, update the data, and periodically retrain the model to optimize and improve the accuracy of the judgment.

Input the first analysis results of the actual writing data into the cheating detection model to output whether there is any cheating. If the output indicates a suspicion of cheating, provide specific information on where the student's writing is abnormal (e.g., indicating that a specific question may have been cheated on) and display this information directly on the teacher's marking page to facilitate verification.

**Scheme (3):** For the entire test paper, compare the answers of all students in the same exam session with each other and with the standard answers. If a high similarity (e.g., a preset threshold of 95%) is detected, it is judged as potential cheating. Multiple-choice questions, very simple short-answer questions, and questions with short and unique answers are excluded from this detection method.

This inventive solution involves the real-time tracking and analysis of user writing activities within the question-answering area. The system automatically identifies abnormal occurrences and dispatches alert messages as needed, offering timely reminders to relevant parties.

To enhance anomaly detection accuracy, it's imperative to consider factors such as the content of a student's draft in the draft paper area, the duration spent on drafting, and compare these with the content of the student's answer in the answer area and the time allocated for writing. This ensures that situations where a student predominantly invests time in drafting and quickly transcribes answers are not misidentified as copying behaviour.

For instance, if analysis reveals that a student's answer score for a particular question is high, but the combined actual writing time for both the corresponding answer area and the draft area is significantly shorter than the total time of an average high-score answer, it may suggest the possibility of answer copying. This analysis outcome can be communicated to teachers, parents, etc., facilitating prompt intervention by concerned individuals to correct the student's behaviour. This approach effectively mitigates undesirable copying behaviours and improves the overall management of school activities, all without manual intervention due to the full automation of the analysis process.

In an implementable embodiment, the handwritten answer area is furnished with an audio interaction plug-in. Additionally, the acquisition method includes the following steps:
1. Response to Audio Interaction Plug-In for Audio Content Acquisition:
   The method involves reacting to audio interaction plug-ins to capture and store externally provided audio content and associated audio data.

Within this framework, every question-answering area is seamlessly equipped with audio content input plug-ins, enhancing students' interaction in answering questions. If there are questions requiring clarification from the teacher, students can utilize the button to leave an audio message. This voice communication aids students in expressing their doubts effectively and also facilitates teachers in better understanding the queries. Consequently, this setup streamlines the process of question and answer, enabling efficient and convenient exchanges. Moreover, teachers can use the audio interaction plug-in to leave explanatory remarks and comments when marking assignments. This not only provides immediate insights but also fosters verbal explanations for better student comprehension. This dual functionality enhances interactivity and contributes to the overall effectiveness of teaching and learning management.

Additionally, the acquisition method encompasses the following steps:
1. Capturing and Merging Audio Content and Writing Track Correlation Data:
   In response to an audio interaction plug-in, the system acquires audio content and audio correlation data from an external source and stores them. By utilizing the audio correlation data, the audio content and writing track correlation data belonging to the same time frame are synchronized and merged to create a unified set of merged data.
2. Playback of Merged Data in Handwritten Answer Area:
   One of the features of this approach is the support for the playback of merged data directly within the handwritten answer area at the intended destination.

This approach effectively synchronizes audio data and writing track data within the answering area by aligning them temporally. This synchronization enables the correlation of voice, video, and writing content within the same time frame. At the teacher's portal, the correspondence between a student's voice message, the questions asked, and the associated writing content is established. This provides clarity on the timing of the student's message, as well as the content being written before and after the message. This synchronization aids in delivering improved guidance and better-addressing questions.

For students, the synchronized notes made by the teacher during a voice explanation become accessible. For instance, if a teacher verbally discusses a certain error, the teacher's synchronous circling of a specific step in the student's writing visually reinforces the marking. This creates an environment resembling face-to-face interaction, where students can observe the actual marking process in tandem with the teacher's explanation. This synchronized playback allows repeated viewing and learning, enhancing the precision of problem identification, question answering, and problem-solving.

By implementing this approach, the entire process of tracking and analyzing any handwritten question within the context of electronic assignment becomes feasible. This ensures high-quality guidance for every student's electronic assignment. As a result, sustained high-quality mentoring and teaching are assured, fostering an environment of consistent excellence.

### Embodiment 3:

The method for processing electronic assignments according to the present embodiment is implemented in accordance with the answer area acquisition method presented in embodiments 1 or 2.

As illustrated in FIG. 17, the process for handling electronic assignments in this embodiment involves the following steps:

### S201: Selection of Topics Based on Predefined Learning Objectives:

Drawing from a predefined question bank, a collection of questions is selected. Teachers can manually choose questions that align with the requirements from the predetermined question bank. Additionally, automated identification can also be employed for question selection. To ensure question quality, teachers can screen and select questions based on their quality. The method chosen for question selection depends on the specific context.

The process of selecting questions can be achieved through the following methods:
1. **Based on a Previously Selected Exam Paper:** Analyze the text and images in a previously selected exam paper chosen by the teacher using a feature extraction model to obtain the feature data corresponding to that exam paper. Match these feature data within the entire question bank to find questions with a correlation greater than a set value, and generate new questions based on these matched questions.
2. **Using Tagged Subject concepts:** Find questions chosen by other teachers for the same tagged subject concepts and directly use these questions to generate new questions.
3. **Selecting Subject concepts:** Select subject concepts to obtain all related questions in the question bank. Use this as a basis for further selecting the desired questions.
4. **Determining Each Major Question Type:** Manually select two questions that fit each major question type from the question bank. Use these selected questions as a basis to automatically generate the remaining questions for that major question type.

### S202: Generation of Handwritten Answer Areas:

For each question categorized as a handwritten question type, a corresponding handwritten answer area is generated using the acquisition method.

### S203: Generation of Set Answer Positions for Non-Handwritten Questions:

For the remaining questions categorized as non-handwritten question types, the appropriate set of answer positions is generated.

### S204: Creation of Electronic Assignments and Allocation of Answer Positions:

Electronic assignments are generated based on specific questions, each paired with a corresponding handwritten answer area. The answer positions for these assignments are also established.

In this scenario, the electronic assignment encompasses questions that support various media types, such as voice-interactive questions and video-interactive questions. In this context, question stems are presented and answers are input through diverse multimedia channels.

Specifically, for student A, based on his/her basic information (such as grade), historical performance, and preset goals, identify the most similar student B from accumulated data (student goals - assigned assignments). Randomly select questions from student B's assignments.

The similarity calculation method for determining the most similar student is as follows: if two students share a common feature, they receive a corresponding similarity score. The student with the highest similarity score to student A among all students is identified as the most similar student. It is important to note that if all similarity scores are below the minimum similarity score threshold (e.g., 60% of the highest score), it is determined that there is no similar student, and this method will not be used for recommendation. If multiple students have the same similarity score, one of these students' assignments is randomly selected to identify the most similar student.

Additionally, record the results of manual screening, including the features used for automatic question identification and whether the final questions were adopted. When randomly selecting questions with the same features as qualified questions, initially, all questions have the same probability of being selected. Subsequently, the probability of recommending a question decreases based on the number of times it has been previously discarded.

This approach utilizes a preset question bank containing a wide array of questions, each aligned with corresponding subject concepts and levels of difficulty. Different learning objectives require assessments of distinct subject concepts. Thus, questions are chosen from the question bank to create a relevant set that caters to the students' practice needs, enabling them to master the necessary subject concepts and achieve their specified learning objectives.

Once the chosen questions pertain to handwritten formats, the corresponding answer areas are generated using the acquisition method described in the aforementioned embodiment.

Multiple questions can be collectively selected, such as 20 questions at once, of which 8 questions are automatically categorized as handwritten. The answer areas corresponding to these 8 handwritten questions are concurrently generated, streamlining the process of electronic assignment creation. Alternatively, answer areas for each handwritten question can be generated sequentially as per specific requirements. Alternatively, questions can be selected one by one based on actual needs. Each question is assessed individually to determine if it belongs to the handwritten category, following which the answer area for each handwritten question is produced.

For non-handwritten questions, like multiple-choice or true/false questions, a uniform approach is employed to create corresponding answer positions, such as checkboxes or answer lines. This entire procedure is automated and doesn't necessitate human intervention. It seamlessly identifies handwritten and non-handwritten questions, ensuring an efficient and distinct electronic assignment generation process.

In detail, for any chosen handwritten questions aligned with learning objectives, corresponding handwritten answer areas are automatically generated. These answer areas enable the composition of individual electronic assignment encompassing handwritten questions. Furthermore, these assignments can be aggregated into a collection of electronic assignments with handwritten components, essentially forming an electronic assignment book. This novel approach revolutionizes and optimizes the utility of educational scenarios, such as increasing teacher efficiency and streamlining the assignment process. For instance, through electronic assignments, the system can personalize student learning statistics, assisting teachers in offering tailored guidance. Similarly, students can utilize electronic assignments for enhanced goal attainment, such as automatic identification of incorrect answers and targeted practice suggestions. This methodology also facilitates school management oversight, providing data for teacher-teaching processes and assignment tracking.

In comparison to existing teaching scenarios, conventional methods of paper-based answering require advanced printing and scanning, leading to inefficiency and reduced automation. Alternatively, dot matrix paper with electronic pens necessitates complex software installations, limiting one-to-one correspondence between questions and answers, and hindering personalized statistics. Another approach involves picture uploads, which students resist due to additional steps and mismatched font sizes, demarking the overall experience for both students and teachers. These shortcomings result in reduced efficiency and automation, failing to meet the rigorous demands of teaching and learning scenarios. The result is a deficient level of efficiency and automation in electronic assignments, unable to meet the high standards of educational contexts.

### Embodiment 4:

The method for processing electronic assignments in this embodiment is a refinement of the program in embodiment 3, specifically enhancing:
In a feasible implementation, the handwritten answer area facilitates the acquisition of writing track correlation data. This data includes multiple segments of writing track data, with corresponding first-time frame data for each segment. As illustrated in FIG. 18, after step S204:
S205 involves gathering dwell time data for each question in the electronic assignment on both the teacher's and student's portals, alongside the first time frame data for the handwritten answer area.
S206 encompasses the analysis and processing of the dwell time data and first-time frame data, leading to the derivation of a second analysis result.
S207 involves evaluating question marking and/or answers on the teacher's and/or student's portal, based on the outcomes of the second analysis.

By recording writing trajectories and their corresponding time stamps within the answer area, it becomes effortless to calculate the total time students spend on each question and teachers take to mark each question. This analysis encompasses individual entry times, exit times, duration of repeated entries, and corresponding exit times. Such data facilitates retrospective assessment and analysis of students' answering behaviours, proficiency, and more. Similarly, it enables the evaluation of teachers' marking habits and the precision of their marking.

For instance, when a student enters the question page at time T1 and initiates answering by touching the answer area at time T2, their review time t1 can be established (t1 = T2 - T1). This allows the computation of the average length of time t for a class on a particular question. If a student's review time t1 is notably shorter than the class's average length of time t and their scores are low, it can be inferred that the student's "review habits need improvement." Likewise, the presence of repeated access times can indicate whether a student revisits questions for checking or retries. Other dimensions of analysis can also lead to the conclusion of "review habits need improvement." The existence of repeated entry times can also indicate whether a student re-attempts or revisits questions. Various analytical approaches can be applied to identify possible student issues, enabling targeted adjustments to rectify problems.

This program's execution of data recording and analysis during question-answering and marking processes facilitates the efficient and accurate identification of problems for each student and teacher. This, in turn, aids in developing more targeted teaching strategies to guide instruction, thereby ensuring sustained high-quality teaching.

In a feasible implementation, as illustrated in Figure 19, step S204 is followed by:
S208 involves tallying the dwell time data each time the same question in the electronic assignment is accessed to derive the corresponding first dwell time length for that question.
S209 encompasses summing the first dwell times corresponding to each question in the electronic assignment to derive the second dwell time for all questions.
S2010 involves analytical processing based on the first and second dwell time lengths to yield a third analysis result.
S2011 comprises determining the time spent in answering and/or marking on the student's and/or teacher's portals based on the outcomes of the third analysis.

By recording the time a student spends on each entry for the same question, the cumulative time spent on that question can be calculated. By comparing the student's score with the total time spent on the question, their mastery of the question's assessed knowledge can be gauged. Specifically, if a student achieves a high score on a question and their total time spent is in line with the class average, it indicates good mastery. If a high score is accompanied by significantly longer time spent (e.g., exceeding the class average by 3 minutes), it suggests a need for further practice to consolidate knowledge. Similarly, a teacher's cumulative time spent on a question can be obtained by recording their time spent on that question. This cumulative time is used to assess the efficiency of the teacher's marking; a longer cumulative time signifies lower marking efficiency, prompting the teacher to improve their marking speed to enhance efficiency.

By analyzing the accumulated time spent on individual questions, the total time invested by a student in completing an entire set of electronic assignments can be determined. Based on this cumulative time and the overall score achieved, an assessment of the student's performance can be made to identify areas that require improvement. This assessment allows for tailored guidance and teaching for individual students, leading to an enhancement of the overall quality of teaching and learning.

Specifically, for the entirety of the electronic assignment:
1. If a student's total elapsed time is significantly shorter and the total score is notably higher, it may raise suspicion of plagiarism or indicate exceptional prior mastery of the subject matter. A comparison with the student's past test scores can be made to establish the reason behind this achievement, such as strong learning ability, etc.
2. If a student's total elapsed time is notably shorter but the total score is lower, it suggests a lack of seriousness in tackling the questions or insufficient time investment in them.
3. If the total elapsed time is longer but the total score is lower, it may imply that the student is facing challenges and requires intervention from teachers, parents, etc., for improvement.
4. If the total elapsed time is significantly longer and the total score is higher, it may suggest that the student is diligent and hardworking.
5. If the total elapsed time is longer but the total score is lower, it signifies difficulties that necessitate intervention from teachers, parents, etc., to facilitate improvement.
6. If the total elapsed time is longer and the total score is higher, it indicates he/she is a diligent student. It means the student grasps the knowledge well, while needing guidance to enhance problem-solving efficiency.

For all teachers' marking duration data for a specific question or an electronic assignment, the system uses normal distribution statistics to calculate the mean and standard deviation. Data points beyond n times the standard deviation are marked as potential anomalies. Similarly, for the same teacher's historical marking duration for the same question, normal distribution statistics are used to calculate the mean and standard deviation, and data points beyond n times the standard deviation are marked as potential anomalies. For example, if a teacher previously took an average of 2 minutes to mark a particular question, but during the current monitoring period, the average marking time is 20 seconds, it indicates that the teacher was not diligent in marking this question during the current monitoring period.

The monitoring module in the system accumulates the time students spend on each assignment to obtain the total time spent on each assignment, the total time spent studying each subject daily, and the total time spent studying all subjects daily. Similarly, weekly and monthly study data can be obtained. Based on these statistics, the system can accurately determine the learning burden of individual students, the entire class, and the entire school, achieving the purpose of monitoring and reducing the burden. It can also automatically calculate and update the average study time for each school, ranking each school within the province and nationwide, and automatically highlighting the top-ranked schools.

Additionally, the system can generate a personal profile for each student: it can calculate the percentile of the student's time investment in different subjects compared to similar students. For example, if a student is in the top 10% in mathematics study time among students of the same grade and region, the system can send encouraging messages based on this data. It can also compare the student's interest in different subjects. If the student spends more time on mathematics and average time on other subjects, it can be inferred that the student has a greater interest in mathematics. The system can then recommend additional extracurricular math knowledge for the student.

For potential anomalies detected in the analysis, the system can automatically generate labels for each assignment based on the marked potential anomalies and provide feedback to teachers, students, or other relevant personnel. These can be visual labels that teachers or students can click on to view detailed information. This helps teachers understand where they were not diligent or too slow in marking and helps students understand where their answers were not diligent or too slow, serving as a means of supervision, reminder, and improvement.

In this program, the recording of data including teachers' and students' time spent on each question, multiple entries into a question, and time taken for the entire electronic assignment enable specific tracing of students' question-answering processes and teachers' marking methods. This facilitates the identification of issues like processing efficiency and learning ability, allowing timely adjustments for improvement, thereby supporting effective long-term teaching and learning management.

In a realizable embodiment, as depicted in Figure 20, step S204 is followed by:
S2012 involves tallying the dwell time data each time the same question is accessed within the electronic assignment to derive the corresponding first dwell time length for that question.
S20123 encompasses obtaining the first time frame data corresponding to the writing track data in the handwritten answer region of the question.
S2014 involves analytical processing based on the first time frame data and the first dwell time duration to yield a fourth analysis result.
S2015 involves determining whether there is an abnormality in the question-answering behaviour or the marking behaviour based on the fourth analysis result. If such abnormality exists, a corresponding second alert message is generated and issued.

The method for determining whether there are anomalies in answering or marking behaviours is similar to the aforementioned method based on the first analysis result. Therefore, it will not be elaborated here.

If a student's total time spent on an entire question process (reading, thinking, writing the answer, and drafting) is less than a certain threshold, and the intervals between writing instances are analyzed as extremely short, it may indicate that the student attempted the question hastily without thoughtful consideration, possibly involving plagiarism or random writing of the answer.

By recording the time each teacher spends on the same question during multiple accesses, the cumulative time a teacher invests in that question can be compiled. Furthermore, the time a teacher spends on marking the answer within the question can be logged. If the marking time is notably brief, and the analysis is merely based on correctness without scrutiny of the student's answer process, such as simply checking right or wrong without considering the reasoning, and allocating zero points for incorrect responses, it may indicate that the teacher's marking speed is too rapid, lacking thoroughness and attention to detail. It necessitates the teacher to adjust their marking habits to ensure the quality of assessments.

In this program, through the combined analysis of the total time expended by teachers and students on each question and the entire question-answering process, along with the trajectory data for marking procedures, anomalies such as plagiarism or careless marking can be identified for each teacher and student. Once such anomalies are detected, automatic alerts are generated to promptly inform the relevant parties (e.g., via operating terminals or email addresses). This enables personnel with authorization to intervene in a timely manner. Simultaneously, teachers and students can recognize their own shortcomings based on these alerts, enabling timely adjustments to improve subsequent assignment processing, thus enhancing the supervision of teaching and learning.

In an implementable embodiment, as depicted in FIG. 21, step S204 is succeeded by:
S2016 involves obtaining question-answering progress data and storing it in a predefined storage space. This data includes initial characterization data indicating whether the student portal is accessing the question, along with question-answering trajectory data within the student's response area or draft writing trajectory data for the draft paper.
S2017, when the initial characterization data indicates the student's access to the question, the display interface of the student's portal is shared on the first predefined user portal.
S2018, following submission of the question on the student portal, control is exercised over the playback of question-answering track data or draft writing track data in the first predetermined user portal.

Alternatively, as illustrated in FIG. 22, step S204 is succeeded by:
S2019 involves obtaining marking progress data corresponding to the question and storing it in a predefined storage space. This data includes secondary representation data indicating whether the teacher's portal accesses the question, along with marking track data within the teacher's response area or draft marking track data for the draft paper.
S2020, when the secondary representation data indicates the teacher's access to the question, the second current display interface of the teacher's portal is shared on the second predefined use portal.
S2021, upon the teacher's portal completing the marking of the question, control is exerted over the playback of marking track data or draft marking track data in the second predefined use portal.

In this program, when a student commences entering handwritten questions, the operator with monitoring permissions (e.g., teacher, parent, etc.) can dynamically track and statically display the student's answers and draft writing under the question. Similarly, when a teacher begins working on handwritten questions, the operator with monitoring permissions (e.g., school portal) can dynamically follow and statically display the teacher's handwritten marking and draft marking under the question. This functionality provides a real-time and static display of the student's answering status and the teacher's marking process, simulating on-site supervision to address specific teaching supervision needs.

Furthermore, it is possible to determine whether a student initiates writing or when they commence writing, facilitating an understanding of the progress of each student's work. For instance, if a student consistently begins assignments after 10:00 p.m. every night for a week, it can be inferred that the student's motivation is relatively low and prone to procrastination. Timely intervention can then be implemented.

### Specifically, realise the following four scenarios:

Scenario (1) In-Class Practice: During the class, the teacher assigns an in-class practice question that students need to complete in real-time. The system can dynamically display multiple students' answers on the same page, allowing the teacher to see each student's progress. The teacher can identify which students understand the question, which students are quick in thinking and coming up with the correct method, and which students are struggling or using incorrect methods. This helps the teacher provide targeted explanations based on the specific situation.

Scenario (2) Regular Evening Study: The system can summarize the self-study status of students from multiple classes and automatically mark out students who show abnormal behaviour. Specifically, if 70% of the students in a class have started their evening study tasks, the system will mark the 30% who have not started. During the entire evening study session, the system calculates each student's progress based on the scores of completed questions (or the number of answer regions with written content if questions are not scored). It then identifies the students in the bottom 10% of progress. With the system's assistance, a single teacher can manage the evening study discipline of multiple classes, only needing to remind the students showing abnormal behaviour based on the statistical results. If necessary, the teacher can click on detailed data for each student to view their evening study progress, including which question they are on, the time spent on each question, and the time spent writing, to monitor and supervise specific aspects.

Scenario (3) Holiday Homework: Throughout the holiday period, the system calculates each student's assignment progress based on the scores of completed questions (or the number of answer regions with written content if questions are not scored). It then identifies the students in the bottom 10% of progress. The system automatically sends a reminder to the student, their parents, or teachers about the student's lagging progress, prompting them to take corrective actions.

Scenario (4) Exam Supervision: The system monitors and automatically records students' answering behaviour, including the time spent on each question and whether they used other software during the exam. For example, the system can capture, save, and transmit the following data: 8:00-8:05 the student uses the designated exam software, 8:05-8:10 the student does not use the designated exam software, 8:10-8:15 the student uses the exam software in split-screen mode. During the exam, the system can automatically mark students who are not using the exam software or are using it in split-screen mode and promptly send reminders to the teacher for intervention. After the exam, the system can calculate the total duration of abnormal behaviour for each student (time not using the exam software + time using the exam software in split-screen mode) and automatically mark students whose abnormal duration exceeds a certain threshold. This allows the teacher to timely intervene and inquire, significantly reducing the occurrence of abnormal behaviour on the student's portal and ensuring the feasibility and reliability of online exams.

On the teacher's portal, in large-scale exam marking scenarios, the current marking progress of each teacher can be monitored. The supervisory portal can also observe the live marking processes of each teacher and identify instances of careless marking and pinpoint the associated students and questions.

In an implementable embodiment, as depicted in Figure 23, following step S204:
S2022 involves at least one of the following operations for a plurality of electronic assignments in the same batch:
   1. Retrieving the completion progress of each electronic assignment.
   2. Dynamically tracking and displaying the progress of each electronic assignment.
   3. Statically displaying the current state of each electronic assignment.
   4. Playback of each electronic assignment.
S2023 controls the static display or playback of distinct handwritten answers corresponding to the same handwritten question in different electronic assignments.

This program enables the tracking and supervision of the handwritten answer content for the four scenarios mentioned above to be displayed statically or replayed. Specifically, it allows for monitoring the completion progress of multiple electronic assignments for all students, real-time live display of each student's answering situation in their electronic assignments, static display of the current view of each electronic assignment, and playback of the complete answering process of each electronic assignment corresponding to each student. This playback capability enables a comprehensive and timely understanding of each student's learning situation within the entire class, thereby enhancing the optimization of overall teaching management quality.

Specifically, on the student portal: (1) During regular evening study, teachers can assess the class's assignment progress, including whether each student has accessed the assignment, entered specific questions, and the time spent on each question. This information can be accessed by clicking on a student's electronic assignment for a detailed view. (2) For regular evening study, teachers can quickly analyze the progress of the entire class's assignments, sort each student's completion status, identify any unusual delays, and then focus on specific students to provide appropriate follow-up. (3) For holiday assignments, teachers can remotely review the overall class's progress, highlighting students with slow or stagnant progress, and sending timely reminders to address the situation. This targeted supervision approach enhances efficiency. (4) In examination scenarios, teachers can observe real-time progress of each student's answers and verify if they've used external software during the exam. Data, such as intervals of software usage (e.g., from 8:00 to 8:05, the student used the program's question software, and from 8:05 to 8:10, they didn't), can be captured, stored, and transmitted. By clicking on each student's progress for a specific question, teachers can view their real-time status, knowing where they've been and what they've written. Additionally, teachers can remotely assess the overall class's progress, highlighting both slow and fast learners.

In the teacher's portal, in the context of large-scale examination marking scenarios, the current progress of each teacher's marking can be observed. The supervisory portal can also live-track the marking process of each teacher and identify instances of hasty or careless marking on specific students' questions.

In an implementable embodiment, the method of treatment additionally includes:
1. Determining the mode of invoking draft paper in an electronic assignment based on a selection command.
2. In this scenario, the calling mode corresponds to utilizing a shared draft paper for multiple questions.
3. The shared draft paper is designed for reusability.

In another implementable embodiment, individual draft sheets are invoked for corresponding questions, with one individual draft sheet designated per question.

This program provides the flexibility to either use a shared draft paper for all questions in the entire electronic assignment or have a dedicated draft paper for each question. The choice of invoking a specific kind of draft paper, or even allowing both modes simultaneously, can be adjusted based on actual needs to cater to user preferences and enhance the user experience.

Specifically, using a single shared draft paper for the entire electronic assignment is useful for formal examinations that require the review of archived draft papers. On the other hand, employing a separate draft paper for each question makes it easier for students and teachers to locate specific drafts corresponding to individual questions, simplifying post-assessment review.

Teachers can leave annotations on the draft paper while marking assignments. After marking, students can further add annotations or notes to the draft paper. The track data added by different users includes their respective account names, operation times, and other information to differentiate and review additions made by various users.

In an additional implementable embodiment, the method of treatment also encompasses:
1. Retrieving the annotation data generated by teachers and/or students when annotating the area of the question stem through handwritten touch.
2. The annotated data is layered atop the question stem layer.
3. Stored annotation data is saved to a preset memory.

This program enables students and teachers to circle and draw on the question stem, with all markings being retained. This preserves the experience of using paper test papers while enhancing the user experience. Keywords can be circled for review purposes on the students' side, while teachers can emphasize parts students may have overlooked, guiding them to specific key information within the question stem for faster understanding and improved teaching interaction. Annotations can continue after approval, allowing revisions and notes to be made. Different users can choose various styles for their markings (e.g., students' markings in blue, teachers' in red) to facilitate easy differentiation. This adaptable approach caters to the preferences of various users, ultimately enhancing the user experience for students and teachers alike.

In an implementable embodiment, the method of treatment further comprises:
1. Constructing the question data architecture utilized for question creation.
2. In this context, the question data architecture encompasses multiple question hierarchies, each comprising several sub-questions.
3. Obtaining distinct sub-questions corresponding to various sub-question identification data, sub-question label data, and the hierarchical association data for each sub-question's question level. This data is stored within the storage mapping data table.

Specifically, by constructing the question data architecture, all the constituent content of an electronic assignment is clearly defined, including but not limited to question types, each question, sub-questions at various levels under each question, and corresponding identifiers and label data. This ensures that logical judgment and artificial intelligence algorithms can automatically identify each sub-question.

In this program, each electronic question includes one or more levels of sub-questions. Some questions correspond to 1-2 levels, while others may involve 3 levels or more. The number of levels can be tailored based on the needs of different subject areas for questioning. This ensures that the question setup meets the demands of questioning while maintaining operational flexibility. This model's data structure can be utilized for various subject backgrounds when entering the electronic assignment questioning system.

Moreover, each sub-question within a question level possesses corresponding identification information (e.g., sub-question 2's ID designates the second sub-question under the current main question) and labelling information (such as subject concept type, difficulty level, and question quality). Specifically, this labelling data for sub-questions facilitates the subsequent determination of students' mastery levels based on their scores in different sub-questions. There is also correspondence to sub-question hierarchical relationship data (e.g., hierarchical correlation data 2.3 signifies that the current question corresponds to the third sub-question under the second sub-question of the current question, forming a three-level question data structure). This information is stored within the appropriate mapping data table, enabling organized data management, querying, and modification operations.

In an additional implementable embodiment, the method of treatment also encompasses:
1. Retrieving multiple sub-questions that have been selected within the question data architecture.
2. Based on external selection instructions, identifying target sub-questions for deletion and updating to achieve a new set of selected sub-questions within the question data architecture.
3. In this context, the number of question levels is adaptable.

In this program, for an existing set of sub-questions under a question, one or more sub-questions can be selected and removed as needed. This updating process yields the final set of sub-questions under the question, forming the ultimate question composition. This flexibility allows for modifications to the selected sub-questions, making the assignment editing process more adaptable. This ensures the formation of the final electronic assignment is effective and rational. For instance, a teacher issuing a question can omit a more challenging or yet-to-be-taught sub-question, such as leaving out the fourth sub-question temporarily and only including the first three. This selection or deselection of sub-questions is achieved through simple checkbox selection or cancellation, eliminating the need to edit question documents separately. Similarly, new sub-questions can be added under a sub-question, accommodating specific question requirements.

In an implementable embodiment, the step of constructing the question bank is preceded by an additional step comprising:
1. Processing predefined textual content using predetermined decomposition and reconstruction rules to establish a table of stored data mapping relationships, facilitating multidimensional parsing of the question data architecture.
   As shown in Figure 24, the storage data mapping relationship table is constructed based on decomposing and reconstructing specific actual textual content. The dimensions for data decomposition include score, source, serial_number, year_start, year_end, etc. The table formed by these dimensions is the storage data mapping relationship table.
   The specific construction operation is generally achieved through manual intervention. However, it can also be automatically achieved using applicable technological means according to the actual situation, without specific constraints detailed here.
2. In this context, the predetermined decomposition and reconstruction rules are tailored to accommodate scenarios under various pedagogical specifications.
3. The steps involved in constructing a question data architecture for question building encompass:
   a. Generating a question data architecture for question building based on a table of stored data mapping relationships.

Specific questions can be selected from the storage data mapping relationship table according to actual needs and arranged in different positions to construct the required question data architecture. Different actual needs will result in different question data architectures.

In this program, the preset textual content, including but not limited to content from Word documents, undergoes decomposition and reconstruction processing according to predetermined rules. This process yields a corresponding data mapping table (or database) containing an array of questions and data associated with sub-questions. This data includes, but is not limited to: sub-question serial number data storage unit, addition of source labels to titles, and more. This approach allows for comprehensive storage of diverse questions while retaining all original question information. Additionally, it streamlines question information management and other operations, ensuring an enhanced user experience. Thus, a variety of questions can be stored while preserving the entirety of their original content, facilitating question management and improving user engagement.

Among these advantages, the data storage unit includes sub-question serial numbers functioning as IDs for sub-questions. These IDs can be used to identify specific sub-questions, aiding quick location for purposes such as evaluating sub-question performance (e.g., performance assessment, student performance). This aids in the efficient management and implementation of sub-questions at this level. Moreover, the addition of source labels to titles is intended to assist students and teachers in categorizing and managing various types of questions, making future retrieval convenient.

Specifically, the usage rates of different types of questions by teachers can be statistically analyzed, such as the usage rate of real exam questions (e.g., questions from the past three years) and self-created questions. By analyzing the usage rates, the system can identify the tendencies of teachers towards different question banks and question attributes. The system can then recommend question attributes preferred by teachers with good teaching outcomes to other teachers, provided authorization is obtained from the excellent teachers. Additionally, certain questions can be locked based on their attributes, such as locking last year's real exam questions in the question bank to prevent them from being assigned in regular homework and only allowing their use in exams.

In an additional implementable embodiment, the method of treatment also encompasses:
1. Capturing user-performed title label editing operations during title data schema construction or after obtaining the electronic assignment.
2. Responding to title label edit operations by modifying title label data or sub-title label data for a title.

In this program, during the process of forming electronic assignments or after their completion, authorized users (including students, teachers, schools, educational bodies, etc.) with editing permission can modify label information for questions and their respective sub-questions. This facilitates the customization of label information across all questions. For example, teachers can adapt their own labelling system to match their usage habits. Over time, teachers can search and locate questions based on these custom labels. This customized labelling system enables efficient question selection for electronic assignments, thus enhancing teachers' efficiency and experience.

For instance, teachers can establish their own distinct labelling system to align with their preferred categorization practices, streamlining their use and retrieval of questions. Similarly, students can label questions they've engaged with, allowing easy filtering for future review or additional attempts. Schools can also adopt standardized labelling systems to be utilized across all teachers in the institution.

In an implementable embodiment, the multi-label setting is aimed at enhancing question searchability. More labels result in increased retrieval paths, enabling teachers to search from various label dimensions. This ensures efficient question queries, which in turn speeds up the generation of electronic assignments.

Specifically, the system categorizes labels for each disciplinary background into three major categories: mandatory, high-frequency optional, and low-frequency self-created. This classification can be extended or adjusted as per specific requirements. Differentiating between these label types reduces initial complexity. Mandatory labels are essential and must be filled in, without which questions cannot be located. These labels often correspond to question sources. High-frequency optional labels guide teachers in labelling and enhancing question classification. However, they are not mandatory and often correspond to subject concepts. Low-frequency self-created labels are customizable and can be added by users, providing flexibility for individual teacher preferences and enhancing personalized query habits. Notably, low-frequency self-created labels for the same question can be the same or different across different users. Operators (students, teachers, schools, education boards, etc.) with editing permissions can also edit labels, offering similar operational functions.

Additionally, for determining question labels:
1. Each teacher can create their own subject concept labels. These labels may differ from the official labels provided by the examination bureau and may be more suitable for the teacher's own teaching methods. Teachers can label questions using their own classification methods.
2. With authorization from excellent teachers, the system can obtain and share the question label dimensions used by these teachers with other teachers in the same subject.
3. Based on students' past answering behaviours, such as when students tend to get certain types of questions wrong, a batch of similar questions can be compiled. These questions may not assess the same subject concepts but have a certain dimension of similarity. This batch of questions can be provided to teachers or research staff to deduce new question feature dimensions. If these questions are frequently answered incorrectly by students, a new assessment capability can be identified, allowing teachers to add a new label to these questions for targeted practice.

**Obtaining Similar Questions Using Clustering Algorithms:** The system automatically identifies the dimensions for classifying questions, finding the most useful dimensions for classification (those with the largest variance). This standard can be used to more effectively group questions and find similar ones.

### Question Feature Extraction:

- **Static Features:** Subject, standard grade level for the question (which grade should be able to solve the question), and extracted text features.
- **Dynamic Features:** Data on correct and incorrect answers and scores from m students who attempted the question.

Due to the potential connections and certain structural properties among features, items of the same category are not necessarily distributed in Euclidean space. Moreover, given the large number of students, a density-based clustering algorithm (such as the HDBSCAN clustering algorithm) is adopted to achieve good clustering effects in non-Euclidean space; it also reduces the impact of outliers, and there is no need for manual selection of hyperparameters such as the number of clusters.

Alternatively, classify the questions:
- The first dimension is generally the subject concepts assessed by the question.
- The second, third, and fourth dimensions are for aspects that are traditionally difficult to extract manually.

For example, Group A students are top-performing students, and Group B students are aboveaverage students. Based on historical answering data, questions that Group A students can answer correctly but Group B students cannot are identified. These questions may be spread across different subject concepts but reflect the challenges Group B students face. Further, subdivide these questions into those that Group B.1 students can answer correctly and those that Group B.2 students cannot, and so on, to precisely identify students' learning bottlenecks and provide targeted improvement. These groups of questions and corresponding students are then sent to professional teachers for categorization and naming.

In an additional implementable embodiment, the method of treatment further includes:
1. Predefining sub-questions to correspond with predefined reference answers.
2. The pre-defined reference answer comprises multiple sub-scores, each aligning with a scored element and a sub-score. The sum of these sub-scores constitutes the total sub-question score.
3. Obtaining student's handwritten answers corresponding to the answer writing trajectory data in the handwritten answer area.
4. Identifying actual answer points within a student's handwritten answer.
5. Comparing to determine the overlap between actual answer points and predefined sub-scores.
6. Calculating the total sub-question score and actual sub-scores for each actual answer point based on the overlap.

In this program, each sub-question is associated with a predefined reference answer consisting of multiple sub-scoring points. These points, each corresponding to a sub-score, cumulatively form the sub-question's total score. After a student submits an electronic assignment, the degree of overlap between their answer content and the reference answer's sub-scoring points is determined. If this degree surpasses a certain threshold (e.g., 95%), the corresponding sub-score is assigned. By statistically breaking down students' actual answer content into sub-scored points (typically based on manual marking by teachers or machine recognition technology), their scores for each sub-question are calculated. This detailed analysis helps students understand their areas of strength and weakness in specific sub-scored points, enabling targeted improvement. Similarly, teachers can offer more focused guidance. Additionally, when multiple markers are involved, scoring based on sub-scored points aids individual markers' understanding of marking criteria and question intent, enhancing fairness.

To illustrate further, the smallest sub-question unit records the question stem and total sub-question score. Each sub-question's scoring points are documented. For instance, a sub-question with a total score of 4 points and three scoring points (1, 1, 2 points) might require different answers for each scoring point. The specificity of this record enhances accurate assessment and feedback.

In an implementable embodiment, the plurality of predetermined sub-scores encompasses a first number of substantial sub-scores and a second number of non-substantial sub-scores. These substantive and non-substantive sub-scores are organized in a predefined order. Non-substantive sub-score points are identified with a zero or non-score label.

In this program, each question's reference answer encompasses not only content corresponding to scoring points but also supplementary content that forms a complete answer to the question, extending beyond the scoring points. An answer featuring both scoring and supplementary content is generally more comprehensive than a student's full-score response. Supplementary content involves elements such as a list of relevant formulas for solving basic solutions, corresponding to scoring points labeled with 0 or left empty. Such points demand students to incorporate the specific answer writing in a designated place, enhancing the overall completeness and rationality of the answer. This regulation of answering habits aims to improve overall question-answering proficiency.

In particular, the 0 Score Points feature elucidates the distinction between a comprehensive answer process and a scored point, facilitating quicker comprehension by educators and lesson planners of question solutions and intentions. While students might overlook steps with zeroscore values, these points enhance understanding of the reasoning behind the approach, thereby aiding comprehension reinforcement. By studying the full explanation of the question before class and resolving any remaining issues during class, students can gain a deeper grasp of the subject matter. Additionally, using the complete parsing process as a model answer can enhance students' written expression and boost their paper scores.

Specifically, this scheme uses AI to generate, supplement, and automatically mark handwritten question answers through the following process:
1. **Generating Answers Based on AI:**
   - The content of the question stem is used as input, and a generative language model (such as GPT) generates an array of answers. The answer array consists of several lines, each representing a step or a scoring point.
   - If there are no score requirements, a separate answer array is generated.
   - If the user requires scores, the content of the question stem and the target total score are used as inputs. The answer array will consist of several scoring points, each being a combination of content and score. Each scoring point can have values such as 0.5 points, 1 point, 1.5 points, or other values. Some scoring points can have a score of 0, and the total of all scoring points equals the target total score.
   - In actual use, the teacher's workflow might involve first creating the question and then marking the assignments without writing the answers. After marking, the teacher can use OCR to convert the correct student answers into rich text format. The content of the question stem and the correct student answers are then input into the generative language model to generate an answer array, improving the accuracy of the generated answers. If the question is difficult and no student has scored full marks, the answers of the highest-scoring students are selected, and their answers, along with the question stem content and scores, are used as inputs to generate the corresponding answer array.
2. **Enriching Answers Based on AI:**
   - Some multiple choice questions used by teachers might only have the correct options without the answer process, or some answer questions might only have the final answer or a brief solution process without a complete solution process. To solve such issues, the content of the question stem and the current simplified version of the answer are used as inputs, and the generative language model generates the corresponding answer array.
3. **Automatic Marking Based on AI:**
   - The content of the question stem, answer array, and student answer images are used as inputs to the language generation model. Instructions given to the model include but are not limited to: question information (including the question stem, text, formulas in LaTeX format, and images, if any), standard answers (content and scoring points), and student answers (converted to text and LaTeX format mathematical formulas using OCR technology). The model is asked how many points should be awarded.
   - Due to the uncertainty of outputs from untrained large language models, such as responses not following instructions, the following methods are used to train an automatic marking model to improve marking quality and efficiency:
      - Ask GPT the same question multiple times, analyze the responses, and use the most frequently occurring score as the final result.
      - Pre-check the quality of student answers, such as checking for blank answers or low OCR confidence indicating blurry handwriting, and only mark answers that meet the criteria for automatic marking.
      - Fine-tune the large language model: organize training data by inputting the content of the question stem and answer content, with the target output being the manually marked results. Train the model using the dataset and apply LoRA technology to reduce training costs and resource consumption.

In an additional implementable embodiment, the method of treatment further includes:
1. Determine if the current moment meets the conditions for viewing answers; if it does, then obtain the requirements for the progress of answer display on the student portal for sub-questions.
2. Displaying parts of the preset reference answer content that correspond to sub-questions step by step based on answer display progress requirements, until the complete preset reference answer is shown.

Specifically, the user inputs the question stem content and the answer, and the generative model is required to output a detailed explanation script. The explanation script includes detailed steps and explanations for each part. The content of the explanation script is divided into two parts: the first part is displayed in writing, such as important derivation formulas and theoretical explanations of related subject concepts; the second part is played as audio, where some supplementary explanations are converted from text to audio playback. The written step-by-step display and audio playback are presented synchronously to achieve an automatic explanation effect, providing the user with a more convenient and efficient learning experience.

The generative model needs to be pre-trained with GPT. The training inputs for the model are the question stems and answers of several questions, with the output being the corresponding detailed explanation scripts. For any given question, the system automatically extracts the question and answer from the page and sends them to GPT to automatically obtain the output of detailed explanation scripts.

In this program, students can be granted reference answer viewing permissions under specific scenarios, determined by actual situations or adjustable according to needs. For example, after teachers mark electronic assignment and return it to students, or if students complete assignment independently, they can click a designated button in the relevant answer area (fulfilling the need for answer access) to view the corresponding reference answer. The functionality to access the reference answer in other scenarios is not responsive to clicking.

Furthermore, to ensure question contemplation, the answer display employs a step-by-step approach. For instance, each click reveals content corresponding to a scoring point until the total score's complete reference answer is displayed. Alternatively, each click could unveil 20% of the reference answer's content, requiring five clicks for the complete reference answer to appear. This approach simultaneously provides supportive student reference and monitors the quality of revisions, aiming to optimize the assessment of students' subject concept mastery level for the given question.

Of course, as per actual requirements, the complete reference answer can be directly displayed to ensure efficient student answer comparison. For instance, if assessing the student-written question's revised content involves tracking the total length of the student's revision, exceeding a certain threshold indicates the need to view the complete reference answer. In this case, when the student clicks the designated button to access the reference answer, the complete answer is displayed.

In one embodiment, the trigger conditions for enabling the function of viewing the answers can be customized or adjusted according to actual requirements, enhancing flexibility in implementation and further improving user experience with the electronic assignment system. In an implementable embodiment, the processing method further encompasses:
1. Generating pre-defined layout templates for questions based on physical assignment styles or electronic document assignment styles;
2. The pre-defined layout template comprises various editable regions associated with different sub-questions.

Traditionally, users designing pages for computer system programs need to align with the system's data requirements, placing corresponding data input boxes on the page. However, this process can be complex and user-unfriendly, often not meeting user preferences and resulting in reluctance to use the system at all.

This program, based on paper-based assignments or electronic documents like Word or PDF, designs layout templates following paper assignment styles. This approach allows teachers to edit in Word-like layouts, enabling familiar editing processes and maintaining adaptability. It ensures convenience for teachers' usage by supporting a preview function, aiming to match the preview display with the actual interface as closely as possible.

The treatment also includes:
1. Displaying corresponding editing boxes and tools upon the first click action in the editable area;
2. Hiding the edit box and editing tool of the editable region either in its default state or upon a second click action in a region other than the current editable area.

Editing tools encompass functions such as font adjustments, picture insertions, formulas, and more. These editing tools facilitate the entry of complete question content into the system.

In this program, each question corresponds to an editable area. By default, the editing box and tools in the editable area are concealed. Users can click the corresponding area to reveal the editing box and tools, and clicking any other blank area hides them again. This allows for flexible access to the editing box and tools without disrupting the overall workflow. The display effect closely aligns with the user's original usage habits.

Specifically, when the question or paper is in a non-edited state, various box toolbars in each answer area are hidden, maintaining the question/paper's resemblance to the style the original teacher saw in Word or on paper.

In an additional implementable embodiment, the method of treatment further includes:
1. Receiving an external input image of the question;
2. Performing a recognition process on the question image and extracting entry content;
3. The entry encompasses the question to be input and/or the answer corresponding to the question to be input;
4. Generating corresponding sub-questions or questions based on the entered content and storing them in the pre-defined question bank.

In this program, titles can be obtained through external image input, where title images may include images containing text content from printed materials, handwritten text, and more. Utilizing existing image recognition technology, the title and/or answers are automatically identified and converted into electronic format. This facilitates automatic and efficient title acquisition, avoiding the inefficiencies and error-prone situations associated with manual input.

Specifically, teachers can find desired questions from sources like books and websites, capturing screenshots or images. Alternatively, teachers can handwrite question-and-answer content on paper or electronic devices, capturing corresponding images through photography or screenshots. After translation and processing technology like automatic OCR (Optical Character Recognition) is done by the system, teachers can make fine adjustments before electronically storing the questions for subsequent use.

In an implementable embodiment, entry content encompasses text, image, and code content corresponding to calculation formulas within externally input images, among other content types.

Title images are generated based on handwritten, printed, or electronic content. Handwritten content refers to content created on paper-based materials or electronic handwritten pages.

The entry content may encompass various types such as text, images, formulae corresponding to code, and more. For instance, in a physics question with handwritten components, the title could consist of text, images, and formulas. OCR technology can identify and extract text, images, and even high-quality formulas. For example, a predefined formula "y = ax" corresponds to code "0101". If this formula appears in an image, it's automatically identified and converted to "0101" for entry. This automation applies in scenarios such as teachers selecting questions from a question bank or students completing assignments, ensuring a seamless transition and display.

Note that the entry of these contents can generally be adapted for editing to meet title entry requirements. However, formulas entered via screenshots cannot be edited; formulas converted into electronic code can be edited.

Additionally, handwritten questions and answers can be captured by photographing or screenshotting content written on paper or a pad. For example, a teacher's handwritten solutions, involving mathematical and physical formulas along with diagrams, can be captured and processed automatically. This content is transformed into electronic storage without requiring manual retyping, ensuring efficient and user-friendly content entry.

In an additional implementable embodiment, the step of selecting questions from a predefined question bank based on learning objectives is preceded by:
1. Constructing multiple questions;
2. Receiving user-checked results to identify predefined errors in the questions;
3. If errors are identified, generating a prompt message for the user to correct the question until a version without errors is obtained;
4. When no errors are identified, storing the corresponding question in the predefined question bank.

Predetermined errors encompass but aren't limited to typographical errors and academic errors. Specifically, typographical errors cover issues like typographical mistakes and misspellings. Academic errors may involve omissions based on conditions or factual inaccuracies.

Specifically, targeted detection technologies can be used for different preset errors. For textual errors, spelling and grammar-checking technologies are implemented. For academic errors, such as *x+x*=3*x,* or misalignment of questions and answers (e.g., the answer for question 2 is entered in the position for question 1, the answer for question 3 is entered in the position for question 2, and so on), the following method is used for error detection:
For each question and sub-question, there is a data grid marking the inspection status of the question: uninspected, automatically inspected, manually inspected, and erroneous. Initially, every question added to the system is in the uninspected status. After a period, a batch of newly added uninspected questions is input into a multi-layer perceptron neural network model for inspection. The neural network outputs a question reliability variable between 0 and 1, where a variable closer to 1 indicates a higher probability of the question being erroneous. Questions with reliability variables exceeding the set threshold are submitted for manual inspection to reduce the workload of manual checks. After manual inspection, these questions are marked as either manually inspected or erroneous. The algorithm also adjusts the weight parameters in the neural network based on the results of the manual inspection to improve the accuracy and efficiency of the system's automatic inspection.

In this program, ensuring the ultimate quality of electronic assignment requires guaranteeing the integrity of fundamental questions within the question bank. Enhancing question quality verification involves assessing each question for errors. If an error is detected, the teacher is prompted to make corrections before the question is directly added to the question bank. This process ensures subsequent users access accurate and error-free questions, preventing the dissemination of incorrect content.

Specifically, when questions are recorded by first-line personnel (full-time staff, teachers, etc.), errors may naturally occur. Even when recorded questions are drawn from past years' question banks, inadequate quality control can lead to erroneous content. If such errors go unnoticed, it could adversely impact other users' experience and trust in the answer system. Therefore, incorporating a quality control function is essential. A designated inspector meticulously verifies the questions to eliminate errors before final inclusion in the question bank. This guarantees the accuracy of questions accessible to subsequent users and eliminates instances of incorrect questions being propagated.

In an implementable embodiment, the treatment method further includes:
1. Pre-constructing a range of electronic question folders;
2. Each electronic question folder corresponds to a collection of questions related to the same subject and grade, as illustrated in Figure 25.

In the teaching and learning process, standardized construction and management of question banks are crucial. This ensures efficient question selection, thus improving access to electronic assignments. Differentiation between subjects, grades, and even content within the same subject is necessary. For instance, distinctions should exist between Senior 2 Maths and Senior 3 Maths, as well as between Senior 3 Maths and Senior 3 Languages.

To cater to different teaching classes of the same subject and grade with identical content, shared lesson materials and homework exercises are often prepared together. A dedicated question bank for each subject is established in advance to house available questions. These questions can be searched and selected for electronic assignments. If new questions, such as teacher-created questions, emerge, they can be added to the corresponding question bank and updated as needed.

During lesson preparation, teachers assign relevant questions to corresponding electronic question folders. Customized labels can be added to each question, such as chapter unit labels, subject concept labels, and difficulty labels. This facilitates multidimensional question searches. Additional dimensions can also be added, such as indicating whether a question is intended for exams or regular homework. By using labels, teachers can efficiently distinguish questions for different purposes, streamlining electronic assignment formation and enhancing the teacher's experience with the assignment management system.

The assignment management system can further perform statistical analysis based on these question labels. For instance, it can statistically analyze the chapter unit labels within the current electronic question folder to assess if each chapter unit has an adequate number of questions. Similarly, analysis of difficulty level labels can determine the proportion of questions with different levels of difficulty. This data informs adjustments and enhancements to the electronic question folder, ensuring timely improvements to the question bank. The statistical analysis process is automated, ensuring efficiency, accuracy, and ease of use.

Among various aspects, the rules dictating the creation of distinct electronic question folders for different school subject groups and their corresponding classes can be flexibly configured by educational administrators. Subsequently, as long as the teaching content across classes remains consistent, the same electronic question folder can be reused within the same school year, as well as in subsequent years, offering a reusable resource.

The process of constructing and enhancing the question bank can be a collaborative effort involving multiple users. Alternatively, it can be initiated centrally by the school's teaching and research group before the semester commences. Specific teachers can then continue to contribute by adding new questions and removing less suitable ones throughout the semester, gradually improving question quality. The question bank established in the initial year can be continuously updated based on actual teaching experiences and outcomes in subsequent years.

The IT platform provides a practical and efficient foundation for question bank construction. Traditional document-based approaches struggle to facilitate collaborative updates by multiple users. Often, question banks become chaotic or misplaced when managed across multiple academic years, leading to a failure to capture and solidify valuable teaching feedback and experiences. The IT platform forms the basis for iterative question quality enhancement, improving students' regular practice work quality, enabling students to achieve learning objectives with fewer questions, and alleviating the students' burden. This optimization significantly enhances the rationale of existing teaching and learning methods.

Teaching parameters specific to each subject within each class of the same grade are obtained. These teaching-related parameters encompass distinct teaching schedules associated with different lesson preparation content.

A set of initial electronic assignments corresponding to each class is generated by utilizing the pedagogical correlation parameters and questions from the relevant electronic question folder.

Notably, as depicted in Figure 26, several initial electronic assignments for each class are stored within the same assignment folder, all originating from a single electronic question folder. Various initial electronic assignments correspond to predetermined teaching schedules.

The target electronic assignments required for each allocation cycle are determined based on the collection of initial electronic assignments and are then distributed to the student portal.

More specifically, each class is assigned multiple assignments in a semester, necessitating organized management of these class assignments. For instance, if a teacher simultaneously instructs four classes, each assigned two weekly tasks, a total of 160 distinct electronic assignments would occur within a semester. Managing and storing these assignment files more conveniently and efficiently is crucial for teachers.

When users first enter the electronic question folder, they can choose to manually add questions or automatically import questions. The automatic import module executes the import operation as follows:
**Method (1):** The user inputs the desired total number of questions for the question bank and specifies the range of years for real exam questions. The system reads the subject concept outline corresponding to the subject background and establishes question bank folders according to the first-level directory of the subject concept outline. If the first-level directory has fewer than 5 entries, indicating that the subject background subject concept outline is not detailed enough, the system then establishes question bank folders according to the secondlevel and third-level directories.

The system scans all real exam questions within the specified time range for the subject background, obtains the subject concepts corresponding to each question, and calculates the proportion of questions for each subject concept relative to the total number of questions. Based on this proportion, the system determines the number of questions in each subject concept folder and assigns the corresponding questions to the respective folders. Selection criteria can include random selection or prioritizing questions most frequently chosen by other users in the system. After generating the initial question bank, the system can display it to the user and ask if they want to modify the expected total number of questions or replace all the questions.

**Method (2):** Borrow from other teachers' question banks. Specifically, the system asks teacher users if they are willing to share their question bank resources with other teachers of the same subject. With the consent of the sharing teachers, the system evaluates their teaching ability to decide whether to adopt their question bank. By learning the folder classification methods of multiple excellent teachers, the system establishes question bank folders and incorporates the questions selected by these teachers into the respective subject concept folders.

Next, the refinement step can be performed in various modes, illustrated by the following two examples:
Mode 1: Users choose which folders' questions do not need adjustment and which folders' questions need adjustment. For folders requiring adjustment, a new batch of questions is selected.
Mode 2: Users delete unwanted questions from each folder, and the system automatically supplements the folders with an equal number of new questions, repeating until the user is satisfied. During this process, the system updates the "quality" rating of each question based on multiple users' feedback, optimizing the quality of future initial recommendations.

### Implementation Process for Question Bank Evaluation and Suggestion Module:

Once a user has created their own electronic question bank folder, the AI model analyzes the following data and provides the following suggestions, each with associated questions that the teacher can directly select for their lesson preparation folder or manually choose their desired questions:
**Suggestion 1:** Compare the exam background subject concept outline with the teacher's established folder and suggest: "The XX chapter subject concepts are not covered. Would you like to add a lesson preparation folder for this chapter?"
**Suggestion 2:** Automatically calculate the percentage of each subject concept in the question bank and compare it with the teacher's actual number of questions. Suggest: "Should more questions be added to this chapter?"
**Suggestion 3:** Based on teaching data from the previous academic year or earlier, identify subject concepts where the teaching effect was not good and suggest: "Should more questions be added to this chapter?"
**Suggestion 4:** Based on historical answering data, suggest: "The questions in this chapter are relatively easy. Should more difficult questions be added?" "The questions in this chapter have a high repetition rate. Should some be deleted?" Based on historical exam data, if the average difficulty of a subject concept in historical real exam questions is relatively high, remind the teacher: "The XX subject concept historically has a high difficulty in exams. Should more practice be added for this chapter?"

### Difficulty Variable Setting Function:

Each question has a difficulty variable xx, which marks the difficulty level of the question. The difficulty variable is dynamically calculated based on the answering process. The difficulty variable ranges from 0 to 1, with an initial value of 0.5 for all questions, and each question corresponds to a theoretical grade level, such as fourth grade or high school senior. Each time a student completes the question, the difficulty variable is updated based on whether the student answers correctly.

### Dynamic Update Function:

Calculate a student ability variable yy ranging from 0 to 1 based on the student's relative ranking among all students in the grade. An ability variable of 1 represents the student leading all students in the grade, and an ability variable of 0 represents the student lagging behind all students in the grade.
- If a student answers questions across grades, adjust the ability variable. For example, if a third-grade student attempts fourth-grade questions, adjust y to y/2. If a fourth-grade student attempts third-grade questions, adjust *y* to (1+y)/2.
- If the student ability variable is higher than the question difficulty variable and the student answers incorrectly, increase the question difficulty variable xx using x=x+(y-x)·k, where k is a fixed coefficient, e.g., 0.001.
- If the student ability variable is lower than the question difficulty variable and the student answers correctly, decrease the question difficulty variable xx using x=x-(x-y)·k, where k is a fixed coefficient, e.g., 0.001.

### Lesson Preparation Folder Analysis:

This scheme allows fully automated analysis of the lesson preparation folder, reducing the time teachers spend preparing lessons, thereby improving the quality of assignments and enhancing students' learning efficiency.

Teachers can create numerous new electronic assignments for each class, predetermine assignment names, anticipated release times, etc. At this stage, each electronic assignment is blank. Subsequently, questions from the electronic question folder can be incorporated into specific electronic assignments using different methods. During the editing process, assignments can be temporarily saved as drafts at varying stages of development before culminating in a confirmed version as the initial electronic assignment. This approach ensures standardized archiving and management of all electronic assignments. After a semester concludes, teachers can revisit and review assignments. The system automatically completes the archiving process for the assignments assigned to each class during the semester, streamlining electronic assignment management and reducing teachers' time investment. The advantages of this standardized archiving and management system for electronic assignments become more pronounced over time.

In an exemplary embodiment, the treatment method additionally encompasses:
The configuration of a predefined first search interface within the teacher's interface. This first search interface comprises multiple first search boxes, with each search box containing search content that corresponds to distinct search parameters, enabling searches across various dimensions. Alternatively, the search content in these first search boxes can encompass predetermined portions of question or answer contents.

A step wherein a plurality of initial electronic assignments is generated for each class based on teaching correlation parameters and questions located in an electronic question folder associated with the relevant subject. This process involves:
Determining a first actual search on the input search screen, guided by any predefined teaching schedule, to acquire a matching set of initial questions from the electronic question folder of the relevant subject.

Selecting a designated number of target questions from the set of initial questions to assemble an initial electronic assignment tailored to the corresponding class. This process is repeated until a plurality of initial electronic assignments, aligned with distinct predefined teaching schedules, is achieved.

**Table 1**

| search criteria | Subject concept dimension labels | Difficulty dimension labels | Question Dimension Label |
|---|---|---|---|
| 1 | addition | not have | not have |
| 2 | addition | 4 stars | not have |
| 3 | addition | 3 or 4 stars | not have |
| 4 | Addition or subtraction | 3 stars | not have |
| 5 | Addition or subtraction | 3 stars | not have |
| 6 | addition | extended question | not have |
| 7 | addition | four-star | extended question |

In this solution, referring to above Table 1, the electronic question folders for each subject generally contain a multitude of questions. Teachers can retrieve appropriate questions from these folders based on students' learning progress and objectives. For instance, questions are categorized using various dimensions such as difficulty levels (1 to 5 stars), knowledge dimensions (addition, subtraction, multiplication, division), and attribute labels (single choice, multiple choice). For example, question A might be labelled with "2 stars" and "addition," while question B could be labelled with "3 stars," "addition," and "multiplication." Additional labels and questions exist within the question bank. Users can initiate a search by entering "subject concept addition" into the search box, view results, add selected questions, and subsequently refine their search with conditions like "1-star difficulty + subtraction of subject concepts + multiple choice." When providing suggestions and associated questions, the following search methods will be used: for example, searching by subject concept, or searching by subject concept combined with difficulty level.

Furthermore, if a teacher recalls a portion of the question stem, they can input that content, like "Xiao Ming has 5 apples," to match and locate a relevant question. This approach empowers teachers to efficiently find associated questions based on tagging information across different dimensions or content within the question stem or reference answer.

In an exemplary embodiment, the step of determining a target electronic assignment to be assigned before delivering it to the student portal, based on several initial electronic assignments, further includes:
1. Selecting the first class from previous years in the same grade, where the instructional correlation parameter exceeds the first threshold.
2. Retrieving historically correlated assignments posted for the same instructional schedule under the chosen first class. Using these historical correlated assignments as initial electronic assignments for the current class, or
3. Choosing a second set of target questions from the historical correlated assignments and a third set of target questions from several initial questions obtained via a search box search to create an initial electronic assignment for the corresponding class. Or
4. Selecting a second class in the same grade for the current year with a correlation surpassing a second threshold for the current class's instructional correlation parameter. Accessing the first electronic assignment of the same teaching schedule within the second class's assignment folder. Using this first electronic assignment as the initial electronic assignment for the current class, or
5. Choosing a fourth set of target questions from the first electronic assignment, and a fifth set of target questions from a number of initial questions acquired through a search box search, creating an initial electronic assignment for the corresponding class.
6. Selecting a sixth set of target questions from a number of first electronic assignments to form the initial electronic assignment for the corresponding class.

In this approach, teachers can utilize the previous year's electronic assignments for the same subject in the same time frame, and adapt them for the current class. This involves using the electronic assignment as is, or modifying it by adding or removing questions based on the current class's needs. This method ensures the efficient adaptation of previous electronic assignments for use in the current class.

The process of automatically obtaining the teacher's teaching progress is as follows: For the 2022-2023 academic year, the teacher assigned five assignments in Class A: Assignment 1, Assignment 2, Assignment 3, Assignment 4, and Assignment 5. For the 2023-2024 academic year, in classes with the same teaching content, when the teacher first enters the class to assign homework, the system will automatically prompt: "Do you want to assign Class A Assignment 1?" If the teacher has already assigned it, the system will automatically calculate that the content of Class B Assignment 1 overlaps 80% with Class A Assignment 1, and Class B Assignment 2 overlaps 80% with Class A Assignment 2. When the teacher next enters the system, it will automatically prompt: "Do you want to assign Class A Assignment 3?" The teacher can then make adjustments based on this to ensure the efficiency of assignments.

Furthermore, consider a scenario where a teacher is simultaneously instructing two classes, and Class 1 is progressing slightly faster than Class 2. When preparing electronic assignments for Class 2, the teacher can choose an electronic assignment from those already designed for Class 1 and then customize it by adding or removing questions to tailor it for Class 2. Similarly, for the same subject, the relevance of each other class to the current class is calculated. A list of classes corresponding to the current class is displayed in descending order based on relevance. This facilitates easy selection by teachers of the class most relevant to the current class, along with its electronic assignments for the same time frame.

As demonstrated in Figure 26, the historical class list for, let's say, four (1) math classes for the year 2023 could be: Class 4(2) Math in 2023, Class 4(3) Math in 2023, Class 4(1) Math in 2022, Class 4(2) Math in 2022, Class 4(3) Math in 2022, Class 5(1) Math in 2023, Class 5(2) Math in 2023, Class 5(3) Math in 2023, Class 3(1) Math in 2023, and Class 3(2) Math in 2023. Among these, the most relevant class is 2022 Class 4(2) Math. From this class, the teacher can select 9.1 electronic assignments set within the same period, extract Topic 1 and Topic 2, and incorporate them into the 2023 academic year's Class 4(1) Math electronic assignments.

Moreover, the system also permits cross-grade reference. If a Grade 4 math class requires a question from a Grade 5 math class, the teacher can access the relevant question via the historical class list. This program allows teachers to conveniently refer to available assignments without necessitating re-creation, significantly reducing their workload. Moreover, leveraging past assignments contributes to enhancing the quality of electronic assignments to a certain extent.

In an exemplary embodiment, the search interface encompasses both a question overview area and a question detail preview area. Following the step of acquiring a matching number of first questions from the corresponding subject's electronic question folder:
1. The system controls the question overview area, displaying a sequential list of questions based on a number of first questions.
2. The process of selecting a first set of target questions from a number of first questions to construct an initial electronic assignment for a corresponding class involves:
   a. Displaying the content of the selected first questions in the question detail preview area when one or more first questions are selected.
   b. Determining the use of selected first questions as target questions based on the actual selection operation. This is repeated until the first set number of target questions is acquired, shaping the initial electronic assignments for corresponding classes.

**In** this system, users conduct searches within a subject's question folder to identify and sort questions. The system displays a list of these questions in the question overview area, showcasing the beginning of each question's stem content. Users can delete questions by clicking on the deletion plugin in the question overview area or by selecting a question and right-clicking, then choosing the Delete option. When users select one or more questions, the content of these selected questions is displayed in the question detail preview area, providing a detailed view of each question's content. The arrangement of questions in the preview area can be in the order of selection or based on the order of questions in the overview area. Control options, accessed through plug-ins, allow users to perform actions such as displaying or hiding answers, expanding all questions for viewing, or collapsing questions for a brief preview. This user-friendly interface streamlines the assignment preparation process.

For instance, if 10 questions meeting the requirements are identified in the question bank, these 10 questions are initially displayed in a list within the question overview area. The system automatically computes and displays the question number for each question on the left side. This automation prevents manual editing of question numbers, which can be cumbersome and error-prone. Initially, none of the questions are added to the ongoing assignment being edited. Upon the user's selection of the 3rd, 5th, and 7th questions among the 10, or choosing to select all questions with a single click, the chosen questions expand within the question detail preview area. Subsequently, the teacher can edit the assignment questions directly within this area.

This system strategically arranges functional areas within the search interface, streamlining teachers' flexibility to perform operations like searching, viewing, selecting, and editing. This design ensures an efficient creation of electronic assignment while enhancing the user's operational experience.

**In** an implementable embodiment, the method further includes:
1. Summarizing and displaying the number of questions and their corresponding total scores based on the questions within the question detail preview area. This serves to ascertain if assignment formation criteria have been met.

For instance, the total score value of each question is identified in the last row of the rightmost side of the corresponding question. The system tallies the total score for the current assignment by summing up the scores of the individual questions and displaying the cumulative points. This information is user-referenced. Notably, users have the freedom to adjust the score value for each question within the electronic assignment. This feature permits modification of a question's score value, for instance, adjusting a question from its original 4 points to 5 points.

In this solution, before finalizing a usable electronic assignment, the system automatically computes the number of selected questions and their corresponding cumulative scores. This assists teachers in deciding whether to continue question selection, replace certain questions, or modify scores until the desired number of questions and total score are attained. This information, including the number of questions and the cumulative score, is displayed in a specific section of the search interface. The automated process enhances efficiency and convenience in obtaining electronic assignments.

In an implementable embodiment, the system enables the following operations on different first questions within the question details preview area:
1. Reordering a set of first questions.
2. Editing the associated content of any first question.
3. Deleting one or more first questions.
4. Sequential numbering of title numbers for a set of first questions.

Within this framework, the arrangement of various questions in the question details preview area can be adjusted through drag-and-drop interactions. Label information for any question can be edited, added, or removed. Topics can be deleted individually or collectively by selecting multiple questions and confirming their deletion. The system can automatically sort, number, and display questions in sequential order, from top to bottom. This versatile approach caters to different teachers' personalized assignment formation requirements.

In an implementable embodiment, as directed by the selected display mode switching instruction, the title contents of the multiple first questions within the title details preview area are presented using the appropriate display mode.

Within this system, the question details preview area allows for the display of not only the content of each question but also the corresponding reference answer, if desired. This can serve as a default display mode. Users have the flexibility to switch the display mode by clicking on specific plugins within the search interface. This allows for the adjustment of question display to cater to the varying control preferences of different teachers. The switching can be applied to all questions collectively or to individual questions within the question details preview area. This feature accommodates the display needs of different teachers.

In an implementable embodiment, the process of selecting a first set number of target questions from among a number of first questions to create an initial electronic assignment for a corresponding class encompasses:
1. Selection of a first set number of target questions from the available first questions. The selection process involves generating an initial electronic assignment for the corresponding class using either a physical assignment style or an electronic document assignment style.

This mechanism allows for the generation of electronic assignment in either a physical assignment style or an electronic document assignment style. This approach aligns with students' and teachers' accustomed use of assignment templates, closely resembling the traditional pen-and-paper format. This design ensures that students are comfortable with answering questions, and teachers can follow their habitual approach to marking, thus enhancing user experience.

In an implementable embodiment, the method further includes:
1. Capture of the user's actual actions within the first search screen.
2. Identification of the multi-dimensional information associated with the corresponding first question based on the user's actions.
3. Evaluation of whether the current first question should be used as the target question based on the identification information.

This feature allows the user to click within the question details preview area to expand and view relevant information about a specific question. This information includes whether the question has appeared in previous question papers, the answers previously provided by students and the historical error rate associated with the question. This assists teachers in selecting higher-quality practice questions, facilitating efficient teaching and reducing students' burdens.

Following the step of generating an initial electronic assignment for the corresponding class:
The identification parameters for the initial electronic assignment are constructed based on the identification information of each target question.

These identification parameters encompass the assignment's name and mode. The assignment mode offers several settings, such as homework mode and exam mode.

If the identification parameters contain an assignment mode, and the mode selected is exam mode, a sub-score for each target question and a total score for the entire initial electronic assignment are identified. Optionally, a fixed answer duration is defined to trigger the submission of the initial electronic assignment when the countdown reaches zero, thereby providing a countdown reminder during exams.

Alternatively, if the marking parameters contain the assignment mode and the mode selected is after-school assignment mode, no marking of the initial electronic assignment is conducted, and/or the suggested answer length may be determined.

In this solution, as illustrated in Figure 28, within the assignment mode, users have the ability to define both the release time and the submission deadline for assignments. Students are prevented from accessing the assignment before the specified release time. The system enforces submission before the set deadline, and timely completion is tracked. The system keeps a record of submissions that adhere to the deadline and those submitted late. While assignments within the assignment mode do not inherently have time limits, users can opt to include a time constraint. In such cases, students must complete the assignments within the designated timeframe, and submissions will automatically occur upon the expiration of the specified time.

When operating in homework mode, users can decide whether to include a marking component. If no marking is configured, individual question scores and total scores will not be visible. Teachers can then assess correctness, provide commentary, and omit marking when reviewing the work. Conversely, if scoring is enabled, question and total scores will be displayed. Teachers are responsible for assigning scores to each question and its sub-questions during assessment.

Notably, the system pre-calculates an initial suggested answer length based on the total score. Users can use this reference to adjust assignment or exam lengths as desired. The calculation takes the teaching content into account, such as allocating a proportion of 150 points corresponding to 120 minutes for exams aligned with college entrance exams.

As depicted in Figure 29, within the Exam Mode, a countdown timer accompanies the question paper. Users must specify the exam's total duration, and students are required to complete the exam within the stipulated time-frame. Exam papers within this mode have designated open time slots. During these slots, also referred to as exam time slots, students can access and answer the paper. Outside of these time slots, the content is inaccessible and cannot be answered.

In an implementable embodiment, the method further includes:
When identifying a first question as a target question, and the identification information signifies that the question has been selected and incorporated into an electronic assignment intended for distribution to the current class within a defined period from the present moment, a reminder message is generated.

In this mechanism, automatically identifying selected questions within the electronic assignment also triggers the automatic generation of reminder messages. These messages are designed to prevent the repeated assignment of the same question. The system prompts for manual review, allowing users to decide whether to reuse the same question. If not, the question can be manually deleted. This functionality mitigates the recurrence of the same question in multiple assignment, thus maintaining the quality and accuracy of electronic assignment.

In an implementable embodiment, the method further includes:
Add the newly added questions to the corresponding subject's eBook folder or a temporary eBook folder.

Within this system, if no suitable question is found from the queried questions within the question bank, users have the option to introduce self-created questions. Based on user evaluations (which may come from teachers themselves, other teachers, subject coordinators, etc.), users can decide whether to integrate this question into the relevant question bank folder aligned with teaching content. Alternatively, users can place the question in a temporary question bank folder, allowing them to reuse it in subsequent instances. This approach facilitates the timely accumulation and storage of new questions, thereby enriching the question pool and aiding future question selection.

In an implementable embodiment, the process of determining a target electronic assignment to be allocated during each instance, based on multiple initial electronic assignments, comprises the following steps:
1. Retrieve the real-time teaching progress for each class within the current subject;
2. Compare the actual teaching schedule with the predetermined teaching schedule of the initial electronic assignment corresponding to the respective subject, resulting in a comparative outcome;
3. Based on these comparison results, adjust the specified questions or sub-questions, positioned within the assigned questions of the initial electronic assignments, to formulate target electronic assignments that align with the actual teaching schedule for each class.

Within this mechanism, during lesson preparation, the teacher initially selects 10 questions to establish the initial electronic assignment. Subsequent to the lesson, the questions within the initial electronic assignment are fine-tuned to suit the actual progression of the lesson, yielding a target electronic assignment suitable for distribution. Such adjustments encompass the removal or addition of primary questions or subquestions, depending on the teaching pace and subject matter.

In an implementable embodiment, the process of adapting a designated question or sub-question within an initial electronic assignment based on the comparison outcomes to create a target electronic assignment in accordance with the authentic instructional schedule of each class, encompasses the ensuing actions:
If the comparison outcome reflects a slower actual teaching pace relative to the preset teaching pace delineated within the lesson planning content, eliminate the assigned questions or subquestions, pertaining to incomplete subject concepts in the predetermined teaching schedule, from the initial electronic assignment. This leads to the generation of a target electronic assignment harmonizing with the authentic teaching progression for each class. Alternatively, after removal, the questions can be appended to the initial electronic assignment based on external demands for additions.

Conversely, if the comparison outcomes portray a faster actual teaching pace than the predetermined teaching pace within the preparation content, integrate the assigned questions or sub-questions linked to subject concepts surpassing the predetermined teaching pace into the initial electronic assignments. This produces target electronic assignments in sync with the genuine teaching pace for each class.

For scenarios in which the actual teaching pace and the preset teaching pace correspond to a sequence of new subject concepts to be mastered, matching the same range of newly mastered subject concepts signifies equivalency. Otherwise, if the actual teaching pace involves a greater number of newly mastered points compared to the preset teaching pace, it indicates a faster pace. Conversely, if the actual teaching schedule involves fewer newly mastered points, it implies a slower pace.

This approach acknowledges the potential divergence between the predetermined teaching pace derived from lesson preparation and the actual teaching pace, which can vary, whether faster or slower. Adjustments are needed for the initial electronic assignments. For example, consider a scenario where question 10 comprises four sub-questions, and the actual lesson progress is marginally slower than the preset teaching pace. Sub-question 4 has not yet been covered. Thus, sub-question 4 in question 10 needs to be excluded. This removal is reversible, allowing for subsequent restoration. The user can then assess the total sub-questions and opt for deletion, addition, or modification. This strategy maintains the flexibility and rationality of electronic assignment configuration.

In an implementable embodiment, the method further includes the following steps:
1. Previewing or editing target electronic assignments prior to their release on the teacher's portal.

In this approach, the teacher portal can preview the electronic assignment from the student's standpoint prior to releasing it. This allows the teacher to identify errors within the test paper. If errors or modifications are required, the paper can be returned to the editing phase. This process can be repeated multiple times, thereby ensuring the convenience of the teacher portal in managing the electronic assignment.

The step of publishing the target electronic assignment to the student portal encompasses:
1. Monitoring the system time on the teacher's portal before releasing the target electronic assignment. If a release time has been pre-set, the system will distribute the target electronic assignment to all students within the current class once the system time aligns with the release time.

Specifically, after the teacher uploads a timetable in formats such as PDF, Excel, or Word, a language analysis model (trained based on Chat GPT) analyzes the timetable content to determine the teacher's class times. For example, the model automatically outputs that the teacher's class times are every Monday, Wednesday, and Friday. Based on this timetable, it calculates the current assignment schedule and automatically generates the due date for the next assignment.

The Chat GPT model learns the teacher's pattern for setting assignment deadlines. Refer to Figure 30: for example, if the deadlines for the first four assignments in this class are set by the teacher as follows-Monday 8:30, Wednesday 8:30, Friday 8:30, Monday 8:30-the model detects a second Monday occurrence and identifies a cycle of 3. Through model training and learning, it will automatically set future assignment deadlines as Wednesday 8:30 and Friday 8:30.

This approach offers the user the flexibility to decide between instant or delayed publication, based on actual requirements. For instance, if an exam commences at 9 AM on Friday, the teacher can schedule the release of the exam paper at that precise time. Alternatively, the teacher can advance the release by completing the roll-out on Thursday morning and scheduling its release at 9 AM the following morning, eliminating the need for a temporary morning operation. This setup ensures that students only receive the paper in their accounts when the scheduled time arrives, enhancing the flexibility and ease of releasing electronic assignments on the teacher's portal. Moreover, to ensure students receive examination mode electronic assignments on time, advance reminders can be dispatched to students five minutes before the exam begins, accompanied by a notification message indicating that the examination mode electronic assignment is accessible. This guarantees a seamless online teaching experience.

In an implementable embodiment, the method further comprises the following steps:
1. Collecting data regarding the actual learning status corresponding to any subject for the target student.

Based on the actual learning data, determining the second actual search parameters to input into the first search box within the search interface. This step retrieves a number of corresponding second questions from the electronic question repository.

Selecting the eighth set number of questions from a variety of third questions to form a target electronic assignment that caters to the actual assignment needs of the target students for the respective subjects.

When a student completes an initial assignment, such as correctly answering questions 1, 4, and 5, but incorrectly answering questions 2 and 3, the teacher can further assign reinforcement exercises based on the incorrect answers, or the system can automatically push reinforcement exercises to the student.

The methods for pushing questions are as follows:
**Method (1):** Based on manual implementation. The teacher pre-selects reinforcement exercises, such as exercise 1a and 1b for question 1, exercise 2a and 2b for question 2, and so on. Based on each student's incorrect answers in the initial assignment, the system pushes the corresponding reinforcement exercises.
**Method (2):** Automatic pushing method. The system identifies questions with the same labels as the incorrectly answered questions that the student has not attempted before or finds questions with a similarity within a certain range to the original incorrect questions. These additional exercises are automatically pushed to the student. Based on the student's performance in the additional exercises, the system decides whether to push more exercises until the student has mastered the subject concepts corresponding to the questions.

This strategy employs the actual learning status of each student for a particular subject, such as their proficiency in various subject concepts. This information aids in determining the necessity for question searches. By querying the database, relevant questions are sourced and incorporated into electronic assignments, aligning with the students' weaker knowledge areas. This results in high-quality assignments, minimizing the burden on both students and teachers.

Furthermore, the electronic assignments can be disseminated to entire classes or other units (e.g., specific students or a single student). When released to a class, students assigned to that class collectively receive the question paper. Alternatively, when distributed to individual students or groups with similar learning conditions, questions are selected from the question bank. They can be chosen from historical assignments or new questions created by the user, after which they are distributed to the designated users. This flexibility accommodates scenarios where individual students need supplementary support due to specific challenges or circumstances.

In an implementable embodiment, the method further comprises:
1. Constructing a second search interface within the student portal or the parent portal, containing multiple second search boxes.
2. Gathering the current user's actual question needs and determining the second actual search content based on these needs.
3. Retrieving the second actual search input from the second search box and collecting a corresponding number of third questions from the corresponding first predetermined electronic question folder.
4. Choosing the eighth set number of questions from a range of third questions to construct a target electronic assignment that caters to the current students' actual question requirements.

This design allows students or parents to select questions from the question bank folder according to their specific needs, resulting in the formation of electronic assignments. The process is analogous to that of forming electronic assignments based on the first search interface on the teacher's portal.

It's important to note that while the student or parent portal shares similarities with the master question bank, search modes, and homework assignment modes used by teachers, there are slight variations. For instance, students can assign questions to themselves, making it more applicable to adult users. For example, college students can prepare for their own exams, such as the SAT, LSAT, or others, using the question bank to create their assignments.

If in the homework arrangement process students complete assignments independently without teacher intervention, the electronic homework will automatically transition into self-corrected homework. Students can review the reference answers for each question to gauge their own accuracy rates. This feature enhances the applicability of the electronic homework across various scenarios, catering to a broader range of user needs.

In an implementable embodiment, the method further includes the following steps:
1. Creating a pre-configured student assignment management interface within the student portal.

The student assignment management interface encompasses multiple assignment folders, each utilizing different predefined filing methods based on the subject matter.

These predefined filing methods correspond to distinct categories such as unsubmitted, submitted, and marked benchmarks.

Moreover, assignments can be categorized based on their status, such as unsubmitted, submitted, and marked. When a student encounters an unsubmitted assignment, they proceed to complete it, thereby clearing it from the unsubmitted category.

During the assignment archiving process, assignments are automatically categorized by subject based on question labels and class labels, and then archived into the corresponding subject folders. Once the electronic assignments are archived into the appropriate folders, the system automatically adds a label to mark them as submitted assignments. For assignments in the folders that the teacher has already marked, the system also automatically marks them as marked assignments. Based on all the assignments that should be submitted and those that have been submitted for a class, the system automatically calculates the unsubmitted assignments for the class and creates a corresponding special folder. If the unsubmitted assignments are submitted within the specified time, the system automatically updates them to the submitted assignments folder, thereby completing the automatic and efficient management of all assignments.

Additionally, filing can be based on various factors, including subjects and assignment release times. The specific filing method can be selected or altered according to students' preferences, accommodating diverse students' personalized filing management needs.

In an implementable scenario, a teacher assignment management interface is pre-configured on the teacher's portal.

The teacher assignment management interface provides information about the processing status of each electronic assignment.

Within each teacher portal's assignment management interface, the completion status of electronic assignments issued for each class under the teacher's responsibility can be displayed sequentially. This display is organized based on the order of assignment release time, from the nearest to the farthest. For electronic assignments released within the same batch, specific statistics regarding submitted, unsubmitted, and marked assignments for each class are provided. The display can be tailored to showcase various data dimensions as required, optimizing the viewing and management of electronic assignments.

In an implementable embodiment, the method further comprises the following steps:
1. Obtaining the target electronic assignments submitted from the student's portal based on the Active Assignment Submission operation.
2. Obtaining the target electronic assignments submitted from the student's portal based on the passive trigger submission operation.

In this context, passive trigger submission operations encompass instances where the student's answer length reaches the fixed answer length in examination mode, or when external intervention prompts submission.

In this system, students have the option to actively submit assignments by clicking a submit button. For assignments set with timers, the system will automatically submit them when the countdown time expires. Additionally, users on the other portal of the system can enforce submission, as in the case of a student's late submission. Teachers can use preset permissions to access and collect corresponding test papers. For example, if a student submits an assignment late, teachers can retrieve the paper, marking the part the student has answered so far, and recording the unanswered portion as blank. This ensures timely and effective collection of each electronic assignment, facilitating subsequent marking and teaching management processes.

In an implementable embodiment, the method further includes the following steps:
After an assignment is submitted, the questions in the electronic assignment corresponding to the assignment's folder selected on the student's portal are displayed along with trajectory data from each operation layer within each question.

In this solution, for unfinished assignments on the student's portal, students can continue working within the initial layer. For submitted assignments, students can review the previous layer but cannot modify the initial layer any further. For marked assignments, which are papers labeled as marked and completed by the teacher, students can view both the original layer and the teacher-marking layer, and can continue taking notes or making revisions. If the corresponding assignment has a score, the total score and individual question scores are displayed.

In an implementable embodiment, if a predefined user view attribute is set for the electronic assignment, the student's viewing rights for the electronic assignment are controlled based on this user view attribute.

In this solution, it's possible to preset whether students can view standard answers for submitted or marked assignments according to the teacher's settings. Students' access to corresponding standard answers is determined by the set permissions.

For submitted assignments, based on pre-settings, some assignments can be viewable but not modifiable after submission. For examinations, to ensure the confidentiality of the exam paper, it can be preset that it cannot be viewed after submission, or it can only be viewed a certain time after the submission (e.g., 10 minutes). Once this time limit is reached, students cannot continue viewing the assignment. Therefore, by setting assignment viewing rights, multifaceted management of electronic assignment can be achieved.

In an implementable embodiment, the method further includes the following steps:
1. For the same batch of target electronic assignments issued to the same class, the submitted and/or unsubmitted electronic assignments are counted and analyzed to gather data on assignment submission progress.
2. For submitted target electronic assignments, the marked and/or unmarked electronic assignments are counted and analyzed to obtain data on assignment approval progress.

In the teacher's assignment management interface, multiple electronic assignments for the same class are displayed sequentially. Assignment submission progress and/or assignment marking progress data are displayed under each electronic assignment.

This setup is particularly useful when a teacher is managing multiple classes concurrently. The system helps record, manage, and display the status of assignments for each class. The status can include pending release, released, awaiting collection, awaiting for marking, marked, explained, etc.

For instance, to remind themselves to publish assignments on Wednesday, teachers can first create a new draft assignment and set a publication date and time, and then the system will prompt the teacher to finalize the assignment before the publication time arrives. After releasing an electronic assignment, the system displays the number of assignments due and the number that has been submitted in the class, illustrating the progress of assignment submission. If the assignment is not yet due, the teacher doesn't need to focus on it. However, if the deadline has passed and many haven't submitted, the teacher can inquire about the situation or delegate a class representative to help collect assignments. The class representative can be granted the authority to collect assignments from classmates. This way, the teacher can monitor the status of assignment collection while not accessing specific answers from other students. This mechanism supports efficient assignment collection, and the teacher can also send individual or group reminders to students who haven't submitted assignments on time.

If the assignment deadline has been reached and a majority of assignments have been collected, the teacher can start the marking process. For assignments requiring marking, the system will display the number of assignment not marked and the number of assignment already marked, indicating the progress of the marking. Teachers can complete the entire assignment process by labeling assignments that have already been reviewed.

The summary page on the teacher's interface provides an overview of the status of all assignments for classes under the teacher's responsibility, including pending tasks and other relevant information, ensuring the teacher is well-informed about each assignment's status. This aids the teacher in obtaining a clear understanding of the latest status of all assignments, preventing the oversight of assignments requiring marking and review. This feature significantly assists the teacher in managing assignments and eases the pressure of assignment management during actual teaching.

In an implementable embodiment, the method further includes the following steps:
1. If an unsubmitted electronic assignment remains incomplete within the first preset time period, a first reminder message is generated to prompt the student to submit the assignment.
2. If an unmarked electronic assignment is either within the first set value from the preset deadline or has exceeded the second set value of the preset deadline, a second reminder message is generated to prompt approval of the corresponding assignment.

In this solution, the system generates automated reminder messages for students who have not completed and submitted assignments by the deadline. The reminders can be pushed to the student portal. Similarly, teachers are alerted by automatic reminder messages if assignments remain uncorrected and are distant from the electronic assignment release time. Teachers can also manually trigger reminders from their operating platform. This continuous monitoring and timely reminders guarantee the comprehensive and effective management of electronic assignments.

In an implementable embodiment, the method further includes the following steps:
1. In the Assignment Review screen on the Teacher's portal, select the Target Review Mode to assess multiple electronic assignments from the same batch.

The targeted review modes encompass individually reviewing each student's entire electronic assignment until all students' assignments are covered. Alternatively, batch reviewing can be carried out, focusing on a specific question and sequentially handling students' assignments question by question until all assignments are reviewed.

The marking mode can be switched by clicking the mode switch button to generate switch commands. For example, Command 1 triggers the marking of the entire electronic assignment; Command 2 triggers batch marking of the same question.

Under Command 1, the entire electronic assignment is marked, which can be automatically arranged by student name (randomly). Under Command 2, based on question labels, the same question from different test papers is automatically extracted for marking. The principle of automatic marking refers to the similar content mentioned earlier and will not be repeated here.

In this solution, for instance, consider a class assignment consisting of 1-10 questions, with students labelled A, B, C, D, and E. For individualized review, the system presents each student's questions one by one for marking, first showing student A's question 1, then 2, and so on, until the five students' assignments are completed. For question-based review, the system displays question 1 of students A, B, C, D, and E's assignments consecutively, followed by question 2, and so forth, until all students' 10 questions are collectively reviewed. This approach ensures teachers focus on one question at a time, expediting the marking process. For larger classes, question-based review improves efficiency, eases marking burden, and reduces marking time input.

In an implementable embodiment, the method further includes the following steps:
1. Retrieve a number of target electronic assignments submitted from the student portal for the same batch, all belonging to the exam mode.
2. Extract the set of student-answer questions corresponding to one or more questions from the collected target electronic assignments.
3. Divide the set of student-answer questions into multiple sub-answer question sets using predefined allocation rules.
4. Distribute these sub-answer question sets to distinct teacher portals for marking until every assignment is marked.

Specifically, if m classes participate in a joint exam, with a total of a1+a2+...+am*a*1+*a*2+...+*am* students participating, and n teachers marking:
- Enter the username of each teacher.
- The system automatically completes the marking of multiple-choice questions and determines the distribution range.
- For the remaining questions, the system distributes the tasks among the teachers based on the principle that the marking time is proportional to the score of the question.
- The system automatically outputs the initial distribution results. After outputting the distribution results, manual adjustments can be made:
   • Select p teachers to reduce their tasks.
   • Select q teachers to increase their tasks.
- The system then redistributes the tasks to obtain the final distribution results.

In this solution, particularly in the context of examinations involving a significant number of students, such as municipal examinations, where student participation might exceed 10,000, fairness is vital. To ensure impartiality, teachers should remain unaware of whose answer sheets they are assessing. In such cases, assignments must be allocated among multiple teachers for collaborative marking. The exam organizer can predefine rules for task allocation, automatically segment submitted electronic assignments of the same batch into various sets based on question. These segments are then assigned to different teachers, distributing the marking workload. Each teacher manages their designated segment, allowing collective batch marking. This approach guarantees efficient, effective, and accurate marking, along with fairness in marking.

In an implementable embodiment, the method further includes the following steps:
1. After marking several target electronic assignments of the same batch, the error rate for the same question and sub-question is statistically calculated.
2. Label each question and sub-question based on their respective error rates.

This solution allows the assignment management system to compute and categorize error rates for each question and sub-question. This provides teachers with insights into students' overall grasp of particular subject concepts, enabling them to focus on tailored explanations. This contributes to achieving high-quality teaching assistance.

In an implementable embodiment, the method further includes the following steps:
1. Organize different questions and sub-questions according to their error rates and display them in sorted order.

The program arranges questions and sub-questions within the electronic assignments of the same batch in a descending order based on error rates. This ordering helps teachers identify questions requiring more extensive explanation. High error rates highlight areas where students struggle, indicating that these subject concepts or methods necessitate additional focused teaching. This approach enhances the effectiveness and reasonability of teaching assistance, ultimately upholding teaching quality.

Moreover, compared to conventional paper-and-pencil homework scenarios, this solution leverages the teacher's marking records across several electronic assignments of the same batch. Through the assignment management system, the solution automatically generates statistics (such as the highest score, lowest score, average score, corresponding students, etc.) for these electronic assignments. These statistical insights provide teachers with a comprehensive understanding of the class's mastery of each subject concept. This allows them to offer targeted explanations and tailored teaching approaches for different questions, leading to improved teaching quality and effectiveness.

In an implementable embodiment, the method further includes the following steps:
2. On the teacher's portal, retrieve a preconfigured action, and obtain several student answers corresponding to the currently selected question or sub-question in the target electronic assignment, based on the preset action.
3. Select a viewing mode, utilizing an adapted viewing mode, to review all incorrect answers and/or all correct answers in multiple sets of student answer content.

This solution facilitates a teacher's preparation for lessons or lectures. The system automatically fetches the answer contents and scores of diverse students for the present question, displaying them coherently. This enables the teacher to discern varying mistakes made by different students, like incorrect steps or failed attempts at solving questions.

As depicted in Figure 31, when selecting the synchronization of all students' incorrect and correct answer contents, the displayed answers are arranged in a sequence. Deducted answer contents are presented before full answer contents. For multiple-choice questions, the system automates the tally of option selections for each choice. Display order can vary, from default student order to erroneous answers preceding correct ones. This presentation aids in intuitive explanation, simplifying the identification of mistakes for students, improving their understanding of subjects, and ultimately enhancing teaching quality and methodology.

In an implementable embodiment, the method further includes the following steps:
1. For several targeted electronic assignments marked within the same batch, obtain multiple student answers for the same question or sub-question based on the actual selection operation, generating various lesson plans.

The assignment management system leverages marked electronic assignment of the same batch for targeted statistical analysis. It automatically generates an illustrative page for explanations. Users can invoke this demonstration page while explaining questions, employing content from selected questions, standard answers, and chosen student answers, such as displaying question content and answers from three students who didn't score full marks. This process analyzes students' error patterns, directing their problem-solving approaches. The demonstration page streamlines these operations and can optionally hide student names for privacy protection.

Specifically, for any given question, GPT is used to sequentially generate and concatenate the following contents:
1. The explanation script corresponding to the question.
2. Questions and answers related to the question from students.
3. Typical incorrect methods and explanations of why they are wrong.

This results in high-quality explanation content that helps students understand and digest the material. For each question, 1-2 of the most common mistakes are selected to facilitate understanding and improve the effectiveness of the explanation.

**In** an implementable embodiment, the method further includes the following steps:
1. Retrieve all previously marked historical electronic assignments under the same subject for the same student within a designated period preceding the current moment.
2. Gather data on the current student's initial handling path for each question across all marked historical electronic assignments.
3. Extract the initial handling path data into first-handling trajectory data, characterizing a student's path in revising a question with errors in an marked electronic assignment.
4. Analyze and obtain data on the current student's homework revision tendencies over the designated time frame based on the first-handling trajectory data and the total count of error-prone questions in the marked target electronic assignments.

This approach permits regular statistical summaries and analyses of each student's history of electronic assignment for a subject. It assesses data on revisions made for erroneous questions in each electronic assignment, determining the student's homework revision tendencies. For those with poor revision habits, targeted interventions can be offered to develop more effective learning habits. Analyzed data may also be shared with teachers and parents, alerting them to whether and how often wrong questions have been revisited in each assignment. This feature assists students with sub-optimal revision habits by triggering reminders to make timely marking through the system or manual notifications. Additionally, the assignment management system tallies the number of questions where a student did not achieve full marks over a specific period and records how many of those questions have been reviewed. This information statistically assesses a student's assignment revision habits during that time-frame.

For a specific electronic assignment, if a user has not engaged in revision activities for the assignment over a certain period, the system generates a reminder to prompt the user for revision. Multiple reminders can be established if necessary, with reminders sent every two days until the user initiates revision, at which point the reminders cease.

For student mistakes, the system will trace back after a certain period to check whether marking have been made and the status of those marking. For questions that have been marked, the system will automatically label them as marked and save the corresponding marking data. During the process of tracing the correction status, the system determines whether each incorrect question has been corrected, thus knowing the completion rate of corrections for all mistakes.

Generally, the more points lost on a question, the longer the correction time required. For questions that have been corrected, the system will evaluate whether the correction was done thoroughly based on the points lost and the correction time. If the corrections appear to be done carelessly, the system can provide targeted reminders.

In an implementable embodiment, the process of analyzing and obtaining data on a current student's homework revision patterns over a designated time frame based on the first processing trajectory data and the total number of questions requiring improvement in the marked assignment includes the following steps:
For a marked assignment, if the first processing trajectory data indicates that the student triggered a revision layer, edited the revision, or re-generated a handwritten response area, it is inferred that the student revised the corresponding weak question. The system generates a first determination to indicate that the student has addressed the revision for that specific question.

If the initial processing trajectory data shows that the student accessed the draft paper with draft track data or interacted with the question stem layer, generating annotation data in the stem area, it is deduced that the student revised the corresponding weak question. The system generates a second determination indicating the student's revision activity for that question.

Otherwise, a third determination is generated, signifying that the student did not revise the particular weak question.

Using the first determination, second determination, and third determination, the system calculates the count of revised completions for marked electronic assignments by the current student. The ratio of revised completions to the total number of incorrect questions in marked electronic assignments provides the current student's completion rate for revising marked electronic assignments. Data on the current student's homework revision habits over the designated time frame is derived from the revision completion for each marked assignment.

This process ensures that when a student receives a marked electronic assignment, the system monitors their interactions. Actions like adding a new answer area, leaving a writing track on a new layer, marking draft paper, or adding new annotations to the stem area indicate revision efforts. By analyzing such data changes automatically, the system identifies whether a student has carried out revisions in a timely and precise manner.

In an implementable embodiment, the method further includes the following steps:
1. Obtain marking data for X electronic assignments or marking data for Y marked questions for each student, where X and Y are positive integers.
2. Derive scores for each question or sub-question based on the marking data.
3. Obtain answer correlation data for each user's response to each question or sub-question.
4. Generate a first assignment analysis report for each student, leveraging their score profiles and/or answer correlation data. Additionally, generate a second assignment analysis report for one or more peers in the class.

The first assignment analysis reports encompass mastery of learning objectives and changes in the learning situation for individual students.

The second assignment analysis report encompasses mastery of learning objectives and changes in the learning situation for one or more classes.

The first assignment analysis report and the second assignment analysis report are examined against incorrect questions or all questions to yield analysis outcomes.

In this embodiment, the assignment management system accumulates raw student learning data throughout the assignment process. This includes, but is not confined to, details about attempted questions, the teacher's marking scheme, and whether the student received deductions and the extent thereof. These raw data are processed to generate statistical data to fulfil distinct objectives:

For students, a. After a student receives a marked assignment, they can access the assignment summary report, featuring the total score, score percentage, and correctness of each question. Scores for individual questions can be aligned with question-specific information to determine a student's mastery of learning objectives. This mastery can span dimensions like subject concepts or problem-solving skills. b. Over time, scores from multiple assignments can be amalgamated to gauge a student's proficiency in diverse subject concepts. c. Comparative analysis of summary reports from different times or assignments for the same student reveals shifts in their learning journey.

For the class, a. Statistical data for an assignment across the entire class encompasses scores, frequently incorrect questions, highest and lowest scores, and the score distribution for each student. It also extends to gauging the class's collective mastery of a learning objective and comparing it with other classes. b. Aggregating class scores across several assignments over time yields insights into the class's mastery of distinct subject concepts. c. Comparing class summary analysis reports from varying times or assignments offers a broader view of the class's learning trajectory.

For grades, a. An overall learning overview can be obtained for an entire grade level, allowing comparisons with other schools to derive relative results. b. Aggregate analyses over different times or assignments for a grade can unveil the grade's overarching learning progression.

These statistics, in addition to score data, may incorporate parameters such as question response time. For instance, if a student meets the required percentage of correct answers for a learning objective but takes significantly longer than the average time, this factor influences the evaluation of their mastery level for that objective, subsequently impacting overall class and grade level analyses.

In an implementable embodiment, the marked questions align with label information spanning multiple dimensions.

The current student's scores for each question or sub-question across numerous marked assignments within a specified period are obtained.

Additionally, the current user's answer correlation data during question response for each question or sub-question is collected.

Leveraging score and/or answer correlation data, the current students' mastery of the target assessment's subject concepts is determined across various statistical dimensions represented by labelled information.

To determine the student's progress in mastering subject concepts: A knowledge graph, which outlines the subject concepts for each subject, serves as the student's learning objectives. The mastery variable xx measures the student's progress in each subject concept, where x=1x=1 indicates complete mastery and x=0x=0 indicates no mastery. Mastery is associated with the difficulty variable of the questions.

Group all questions related to the same subject concept and calculate the scoring rate for that subject concept using the formula: score rate = (score obtained / total score) * 100%.

For each subject concept, compile all related questions and create a normal distribution of their difficulty levels (ymin=µ-2σ*y*min=*µ*-2*σ*, ymax=µ+2*σy*max=*µ*+2*σ*). Obtain the last five questions the student attempted for that subject concept, with difficulty coefficients y1,y2,y3,y4,y5*y*1,*y*2,*y*3,*y*4,*y*5 and mastery variables e1*,*e2*,*e3,e4,e5*e*1*,e*2*,e*3*,e*4*,e*5*.* The mastery variable xx is calculated as the average value of (yi-ymin-σ)(ymax-ymin)×ei(*y*max-*y*min)(*y*i *-y*min-*σ*)×*ei.*

The initial setting for the mastery variable *ei* is the score percentage for each question. If the student's score percentage on a question is above 80%, but the time taken to complete the question is on the longer end of the normal distribution, *ei* is adjusted downward.

The student's mastery of a subject concept is related to the relative position of the difficulty of the questions they have attempted within the overall difficulty distribution of questions for that subject concept. If the student has only attempted simple questions and answered them all correctly, this calculation method will still indicate poor mastery. For example, for some subject concepts:
- If the difficulty variable ranges from 0 to 0.4 and the student correctly answers all five questions with a difficulty of 0.4, x=1.
- If the difficulty variable ranges from 0.2 to 1 and the student correctly answers all five questions with a difficulty of 1, x=1.
- If the difficulty variable ranges from 0.2 to 1 and the student correctly answers all five questions with a difficulty of 0.2, x will be very low.

### Determining the Overall Academic Profile of a Student (Combining Study Habits and Attitude):

- **Total Weekly Study Hours:** Track whether the student has a consistent study schedule on weekdays. For example, do they study every day from 5-6 pm or 8-9 pm?
- **Study Time Pattern:** Determine whether the student prefers long study sessions (e.g., 1-hour sessions) or segmented study sessions (e.g., multiple 20-minute sessions throughout the day).
- **Habit of Correcting Mistakes:** Monitor whether the student regularly corrects their mistakes.
- **Engagement with Recommended Extracurricular Knowledge:** Check if the student clicks on and engages with recommended extracurricular knowledge links provided by the system and how they perform in these additional learning activities.

### Subject Interest: Determine the student's interest in various subjects by analyzing:

- The distribution of study time across different subjects.
- The differences in mastery levels across subjects.
- The frequency of clicking on recommended extracurricular knowledge links and the correlation between these clicks and specific subjects.

This embodiment computes a student's mastery of distinct learning objectives based on scores garnered from all attempted questions and question-response correlation data (e.g., response time, trajectory data, draft data, etc.). For instance, in mathematical learning objectives, each student's personalized mastery of specific subject concepts and a comprehensive overview of their learning journey can be determined based on question-response patterns. This empowers students to identify areas they've mastered and those that require attention, aiding focused learning. Similarly, teachers can offer targeted guidance based on this data.

In an implementable embodiment, the method of treatment further comprises:
1. Acquiring a set of incorrect questions for each marked assignment within the same subject for the current student and storing them within the current student's error question repository.
2. A selection of questions is made from the weak question collection, forming the first electronic assignment for error-based training, adhering to predefined error training guidelines.
3. Alternatively, error selection parameters input by the student are employed, where a number of questions are chosen from the error database to create a second error-focused electronic assignment.

These error question selection parameters encompass question identification information and potentially other predetermined selection criteria.

In this embodiment, questions on which the student did not achieve full marks, i.e., historical mistakes, are automatically catalogued in the associated mistake collection. Additionally, students possess the ability to manually include questions in this bank if they scored full marks yet remain uncertain about their proficiency, perhaps due to a degree of guessing.

Among these, erroneous questions can be categorized by subjects, subject concepts, the time at which they were attempted, whether they've been reattempted, and more. Optionally, categorization can follow the student's personalized labelled information.

Students can click to access all erroneous questions within their question bank, enabling them to select these for training purposes. Alternatively, the assignment management system can autonomously provide erroneous questions based on certain rules. For instance, upon selecting a math subject for error-based training, the system can analyze historical errors in math and gradually recommend incorrect questions spanning various subject concepts, aligned with forgetting curves, to ensure timely reinforcement of corresponding knowledge.

Specifically, the following methods can be used to automatically organize an error notebook (refer to Figure 32 for the display interface of different error notebooks):
**Method (1):** Automatically classify errors based on subject concepts. Specifically, categorize errors according to other system dimensions, such as thematic exercises to address specific types of mistakes like careless errors, reading errors, and calculation errors.
**Method (2):** Recommend the classification methods of students who have a high mastery level of the subject concepts in that subject to other students. This mainly involves recommending the classification methods of students whose progress in mastering subject concepts has significantly improved over a period.

Additionally, the system automatically specifies an error review plan, formulating a consolidation plan based on the forgetting curve. The consolidation plan consists of two parts: reviewing errors and redoing errors. For example, consider the marking result release day as day 0. The plan might schedule redoing the errors on days 2, 7, and 15, and reviewing the errors (just reading the question and notes, not redoing) on day 4.

The system can also automatically calculate the daily tasks based on the student's error records and make adjustments accordingly. Specific adjustment methods include:
- If the student has many errors, prioritize the most beneficial questions.
- Follow a plan to review 1-2 subjects daily, completing the exercises for that subject within the next three days. Each subject has one day per week for review.
- Schedule the weekly distribution of practice questions based on the student's learning differences in each subject.

**In** an implementable embodiment, the method of treatment further comprises:
Upon the current student engaging with questions from the mistake collection using distinct question identification information, an updated mistake collection is generated.

This embodiment also encompasses:
1. Producing a training collection of questions tailored to each student.
2. Based on the specific training needs arising from actual homework, a set of questions is chosen from the training collection to create training assignments.

**In** this embodiment, the system automatically selects unattempted questions from the corresponding subject's question bank folder and recommends them to students for practice. For example, it can recommend questions aligned with weakly mastered subject concepts as indicated in the user's subject concept mapping, or suggest questions that correspond to previously missed questions, be it from the question bank folder or the error question bank. This targeted approach optimizes training outcomes.

**In** an implementable embodiment, the step of generating a collection of question training for each student comprises:
1. Determining the student's learning context type based on their current mastery of assessment content.
2. Producing a training question collection for the current student, encompassing questions that align with the determined learning context type and those corresponding to assessment content with mastery levels below a predefined threshold.

This embodiment devises a training question collection matching the current student based on questions correlating with the student's learning context type and subject concepts exhibiting subpar mastery.

Moreover, recommendations can be based on preset big data algorithms. Specifically, such algorithms can ascertain a student's learning context type by scrutinizing shared mistakes among different students. Subsequently, these frequently erroneous questions for students of the same learning context type can be integrated into the question training collection and recommended to the current student, fostering focused training objectives.

In an implementable scenario, a collection of incorrect questions along with their corresponding subject concepts are gathered for each of the current student's marked assignments within the same subject.

A set of questions is compiled for the current student's training purposes, drawn from both the incorrect question pool and a predefined question repository aligned with the relevant subject concepts.

In this solution, the system automatically analyzes the weakly mastered subject concepts of the current students and subsequently identifies and suggests related questions for inclusion within the question training collection. This recommendation strategy ensures targeted training outcomes for the students.

In an implementable embodiment, the method of treatment further comprises:
1. Acquiring a set of training sample data.
   This training sample data encompasses student-specific feature data as well as label data characterizing the corresponding student category.
   The individual student sample feature data is treated as input while the corresponding sample labels function as output. The predefined network model is utilized for training purposes, resulting in the prediction model for student categorization.
   Actual characteristic data for a multitude of students is gathered. This data is input into the developed student-type prediction model, yielding the student category for each individual.

Based on the determined student category, an appropriate first counselling strategy is formulated and transmitted to the parental side; additionally, a suitable second counselling strategy is devised and communicated to the student portal.

In the absence of technological assistance, teachers often rely on experience-based intuition to classify students based on traits such as intellectual aptitude, work ethic, affinity for arts or sciences, and more. Through extensive data analysis, previously unknown attributes of students can be uncovered, leading to the identification of diverse student categories. This innovation provides novel insights for educational research, aiding teachers in effectively guiding and nurturing students according to their unique strengths and capabilities, thereby enhancing the overall quality of the teaching and learning process.

Leveraging the operational records of students within the system, relevant characteristics of each student can be extracted and utilized to determine the student's category via the trained prediction model. This approach enables educational researchers to predefine distinct counselling strategies based on different student categories, subsequently recommending these strategies to both students and their parents who align with those profiles. This facilitates tailored learning methods for students and equips parents with suitable approaches to support them.

The operational records of students within the system serve as the basis for generating student-specific sample characteristic data. This encompasses various aspects such as students' subject scores, study habits (completion of homework, punctuality in submission, consistent timing of homework completion, etc.), as well as additional usage data (frequency of revisions, revisiting previous questions for note-taking, regular study report checks, etc.). By training a predefined network model using ample historical data from diverse schools and grade levels, several common student categories can be identified through clustering.

Specifically, clustering is used to classify students:

### Extracting Student Features:

- **Static Features:** Region, grade, exam scores in various subjects, mastery level of each question, study time data, etc.
- **Dynamic Features:** Changes in scores, changes in answering speed, etc.

For categorical features like grade, use one-hot vectors. Specifically, if there are m grades and the student is in the i-th grade, the vector will have a dimension of m, with all elements being 0 except the i-th element, which is 1. For numerical features, store normalized values. For example, if a score is 60 out of 100, store it as 0.6, keeping it within the range of 0 to 1. Combine all these into an n-dimensional vector representing the student's features. Pre-set values like n and m to obtain enough information for student samples for clustering.

Since there are potential connections and a certain structure among features, similar categories do not necessarily distribute in Euclidean space, and the number of students is large. Therefore, use a density-based clustering algorithm (such as HDBSCAN) to achieve good clustering effects in non-Euclidean space while reducing the impact of outliers. This method does not require manually selecting the number of clusters or other hyperparameters. For each cluster, provide several student samples from the cluster centre to education experts to create labels manually.

### Generating Tutoring Strategies:

- **Gather Information:** Collect data on the parents' anxiety levels and their understanding of educational methods.
- **Chat Functionality:** The system supports chat functionality, allowing direct communication between students and teachers, and between teachers and parents. Parents' anxiety levels can be determined by analyzing the chat content between the student and parents over a period. Analyze the text for keywords (e.g., pre-set keywords for positivity, negativity, high expectations, confusion, etc.). Based on the frequency of one or more keywords, determine if the parent is in a positive or anxious state. Use semantic analysis models for this analysis. Additionally, consider the frequency of parent-teacher interactions (generally, higher frequency indicates higher anxiety; lower frequency indicates lower anxiety).
- **Understanding of Educational Methods:** Determine through self-assessment, peer assessment, and surveys.

### Labelling Students Across Different Dimensions:

- Include, but are not limited to, the student's starting level and learning speed.
- Identify students with good learning outcomes and similar starting backgrounds.
- Extract and share effective learning methods and parental education methods from successful students and parents. Share student and parent case studies on how parents can participate in their children's learning, and push these to students and parents with similar labels to achieve collective improvement.
- Conversely, identify students with poor results and similar starting backgrounds. Share these as negative examples with students having similar labels to provide cautionary insights.

This solution constructs a predictive model for student categorization based on a predetermined network model, offering the capability to recommend tailored tutoring strategies to both parents and students in accordance with their respective student categories, thereby facilitating more accurate and effective teaching and mentoring.

In an implementable embodiment, the method of treatment further comprises:
Accessing the content of the syllabus as defined by the predetermined authoritative source; the pre-defined authoritative source encompasses entities such as exam boards.

In this context, the content of the syllabus corresponds to the subject concepts covered within the scope of assessment.

Upon selecting a question from the electronic question repository, an evaluation is conducted to ascertain if the current question falls within the assessment's scope, determined by the knowledge associated with the current question. This evaluation is carried out for all target questions.

The examination bureau updates the syllabus and exam scope annually. By uploading both the new and old versions of the syllabus, the system automatically highlights the changes (including removed and added content) through text comparison. Content in the old lesson preparation folders that exceed the new syllabus is automatically moved to the "Old Syllabus" folder. For added content, the system can select questions on the same subject concepts from other examination bureaus to provide to teachers for lesson preparation reference.

Comparing the question styles between different examination bureaus, such as the Renjiao version and Sujiao version for the mathematics subject, teachers may perceive differences in question styles and focus areas for the same subject concept. Data analysis quantifies this perception, identifying fixed examples in clustering algorithms and determining the dimensions where significant differences exist. The system uses clustering algorithms to find questions in the Renjiao version that closely resemble the Sujiao version's style and recommends them to Sujiao teachers, and vice versa. If teachers or examination bureau researchers wish to understand the question styles and focus areas of other examination bureaus or borrow questions from them, the system can generate questions on a specific subject concept from other examination bureaus. The questions are displayed to the teachers or examination bureau researchers, categorized by similar exam style, different exam style, and significantly different exam style.

For the examination bureau, based on last year's exam results and students' performance, the system can recommend adjustments to the examination scope. For instance, some questions allow teachers to help students improve scores through repetitive practice without enhancing the students' abilities. Such questions, which have a strong test-preparation nature and can be improved through extensive practice, should be recommended for deletion. The system uses clustering algorithms to identify which dimensions correspond to this criterion, distinguishing between questions that can be improved by practice and those that require understanding or evaluating students' abilities.

In this solution, various examination boards, such as the HKALE National Mathematics Paper or the HKALE English Language Paper conducted by the Beijing Paper, are authorized to define the syllabus content or the assessment scope. This syllabus content outlines the specific subject concepts to be covered in the examination paper, indicating the areas from which questions will be derived. Once the syllabus content for different examination boards is stored in electronic form, the system can compare questions against the syllabus of the relevant examination board. Over time, examination boards update the syllabus to reflect changes in students' learning needs. The system automatically tracks modifications in the syllabus, including additions or removals. Schools preparing for the corresponding exams can align their electronic question bank by excluding questions that exceed the syllabus content. For newly added syllabus content, the system can suggest appropriate questions, allowing schools to update their question bank content. This process prevents unnecessary practice on irrelevant questions while ensuring the timely inclusion of questions related to the newly introduced subject concepts.

In an implementable embodiment, the method of treatment further comprises:
1. Determining the operational permissions of executing entities at varying levels within the same educational institution.

For a given educational institution, a positive relationship exists between the level of authority to access the statistics of the subject being executed and the hierarchical position within the institution.

Across educational institutions, the scope of statistics viewed by each institution is restricted compared to the broader perspective available to higher levels of management.

In this solution, school administrators are empowered to manage student and teacher accounts, assigning unique accounts to each user. Different user roles within the school possess distinct accounts, granting access to relevant content for their respective tasks.

The process for establishing a particular school architecture is detailed as follows:
1. Define the number of departments within the school, such as junior high school, senior high school, and an international students department. A school may encompass various departments.
2. Select the syllabus for each department; for instance, the main department adopts the Hanyu Jiao Tong version, while the international students department selects the international examination syllabus. Once configured, the system establishes connections between examination boards and school departments. This enables examination boards to manage school departments and disseminate notices. Schools implementing the same syllabus can also exchange teaching experiences.
3. Determine the number of grade levels for each department. For example, in a senior high school system: senior year, sophomore year, junior year; and in an international school: 9th grade, 10th grade, 11th grade, 12th grade. This accommodates varying educational structures.
4. Establish data for all subjects offered by the school, forming subject groups and appointing subject group leaders.
5. Establish administrative classes and teaching classes. For example, in domestic universities, grades are set up first, followed by administrative classes assigned to each student. In practice, teaching is conducted based on the assigned teaching classes.
6. Establish individual teacher accounts under the subject group, linking subject groups with teachers assigned to the classes.
7. Set up student accounts, assign them to administrative classes, and place them in their respective teaching classes. This links the subject content to the students enrolled in that class.

Based on statistical data, schools can evaluate teachers and teachers can perform selfevaluations. For example, at the school level, the following aspects can be statistically obtained:

### (1) Learning Burden Statistics and Monitoring:

- **Total Homework Time and Workload Function:** Sum the time students spend on each task to get the total time spent on a single assignment, the total time spent studying each subject daily, and the total time spent studying all subjects daily. Similarly, weekly and monthly study data can be obtained.
- **Monitoring:** From the above data, accurately determine the learning burden of each student, the average learning burden of the entire class, and the average learning burden of the entire school to achieve monitoring and burden reduction goals. Automatically calculate and update the average study time for each school at regular intervals, rank each school within the province and nationwide, and automatically highlight top-ranked schools.
- **Dashboard Display:** The statistics can be displayed in a layered manner:
   - First layer: School comparison.
   - Second layer: Breakdown of the learning burden for each school by subject group.
   - Third layer: Comparison of the burden from different teachers within a subject group at one school.

### (2) Teaching Progress Measurement:

- Obtain a list of subject concepts to be taught during the semester and, at a certain point in the semester, calculate how many subject concepts have been assigned homework and the proportion of the total. Determine how much content has not yet been taught and calculate if the teaching progress is on track based on the timeline.

### (3) Teacher Performance Measurement (Outcome Indicators):

- Indicator 1: x1x1 is the average score.
- Indicator 2: x2x2 is the percentage of scores above 90.
- Indicator 3: x3x3 is...
- The overall performance x⁻=a1x1+b1x2+c1x3+...*x*⁻=*a*1*x*1+*b*1*x*2+*c*1*x*3+..., where a1+b1+c1+···=1*a*1+*b*1+*c*1+···=1. Parameters a1*,*b1*,*c1*a*1*,b*1*,c*1 can vary based on the specific management needs of the school, representing the weights given to different indicators.

If using *x*⁻*x*⁻ alone as the indicator does not consider the varying student levels across classes, a class calibration factor *y*⁻*y*⁻ is introduced. The class calibration factor is obtained by averaging the individual student coefficients.
- Average level class calibration factor = 1.
- Weaker class calibration factor = 1.2.
- Stronger class calibration factor = 0.8.

The individual coefficient yy is calculated as a2y1*+*b2y2+c2y3*+...a*2*y*1*+b*2*y*2*+c*2*y*3*+...,* where a2+b2+c2+···=1*a*2+*b*2+*c*2+···=1. Parameters a2,b2,*c*2*a*2*,b*2*,c*2 can vary based on specific school management needs.
- Indicator 1: y1*y*1 is the accuracy and time taken to complete standard questions at the beginning of the semester.
- Indicator 2: *y*2*y*2 is the accuracy and time taken for flexible questions at the beginning of the semester, including interest in the subject (e.g., clicking on additional resources and time spent learning additional materials).
- Indicator 3: *y*3*y*3 is the degree of diligence, such as the completion rate of tasks and total time spent on small tasks in the subject (with a lower weight).

The final function for evaluating a teacher's teaching level is the average of *x*⁻*x*⁻ and *y*⁻*y*⁻ for the multiple classes the teacher teaches.

### (4) Organizing Joint Exams:

If the above methods do not meet the needs of educational management, such as students not taking assignments seriously affecting the indicator results, mock exams can be organized. This allows educational management to understand the teaching situation and progress of frontline teachers mid-semester, identifying problems early rather than waiting until after the final exams.
- Automatically select questions to create a standard difficulty mock exam paper, and organize mock exams across campuses within a school group or across multiple schools.
- The content of the mock exam papers can vary by school, but the difficulty remains consistent (based on difficulty coefficients).
- Question selection method: Convert the subject concepts within the exam syllabus into a subject concept set A. Obtain a list of subject concepts already taught by the school and convert it into subject concept set B. Determine the expected proportion of each subject concept in set B based on past exam papers. Select questions of corresponding values based on the expected proportions of each subject concept, allowing for some margin of error, and avoid questions that have been previously assigned as homework at the school. Determine the expected difficulty of the exam paper, adjust it to match the difficulty of the past five years' exam papers, or set it to a specific year's exam difficulty, or adjust it to a certain multiple (e.g., 0.9x, 1.2x) of the difficulty. The difficulty of the exam paper is the weighted average of question difficulty multiplied by their values. This ensures uniform difficulty but different content for mock exams based on what has been taught in each school, ensuring fairness in testing.

### (5) Teacher Performance Measurement (Process Indicators):

- Effective Marking: The marking function ensures that for each assignment, at least 50% of students receive feedback that includes more than just marks (i.e., comments or rankings).
- Feedback and Explanation.

### (6) Student Study Habits and Methods:

- Measure the extent to which students use tools like correcting errors, organizing error notebooks, and AI explanations.

In an implementable embodiment, the method of treatment further comprises:
1. Acquiring statistical data for each statistical dimension associated with the electronic assignment.

Analyses are conducted based on the statistical data to derive corresponding insights.

The system gathers raw data, and processes it to provide the analyses desired by school administrators. This aids schools in monitoring and supervising the teaching process and outcomes.

Within this framework, aspects of analysis based on statistical data include, but are not limited to: assessing the appropriateness of homework assignments in terms of quantity for various classes, grades, and teachers - striking a balance between not overloading or underwhelming students; evaluating if the average time spent by each student on homework aligns with management requirements, thus mitigating undue academic stress; appraising the efficacy of teacher marking and feedback on students' completed assignments, ensuring comprehensive analysis and feedback to prevent overwhelming students with a multitude of questions; gauging the utility of individual questions to prevent excessive practice; evaluating the quality of assignment assigned across classes and grades, focusing on high-quality completion, meaningful questions, and differentiation; comparing the overall difficulty of homework within the school's academic landscape; monitoring students' completion of revisions; overseeing teaching and learning outcomes, tracking progress in homework and exams, evaluating the progression of teaching phases, and assessing whether teaching results meet predetermined standards; analyzing the relative performance of students across different school contexts; ensuring the teaching content aligns with the curriculum timeline and avoids contentious questions; obtaining student satisfaction with teaching through the system to ensure authenticity - this can be done without teachers' involvement, if desired. Teaching supervisors may opt to share certain data with lower-level schools for viewing; measuring and comparing the teaching competencies across schools under their purview.

Under a single educational group, it's possible to statistically supervise joint examinations across multiple campuses. Long-term statistics can assess student performance and teaching teams' effectiveness across different campuses, facilitating unified model tests and crosscampus comparisons of diverse data. School administrators can opt to selectively share data with lower-level teachers.

Furthermore, question-related labels, for example subject concepts, yield statistical outcomes, which are then relayed to examination boards to assist in teaching, research, and syllabus or textbook updates.

Additional dimensions of information can also be included in the statistical analysis as long as the data can be analyzed to determine the corresponding teaching situation.

In an implementable embodiment, the method of treatment further comprises:
During a pre-defined identification session, capturing the user's actual operation data and the entered actual authentication data.

If the entered actual authentication data matches the preset authentication data, the actual operation data is deemed valid. Otherwise, a third reminder message is generated.

Actual authentication data encompasses biometric data, preset fixed password data, dynamic password data, and the like. Biometric data may comprise facial features, fingerprint patterns, iris characteristics, and more.

In this scenario, an additional identification step is incorporated to confirm the identity of the person conducting the operation. Potential scenarios include, but are not limited to: ensuring the individual participating in a significant exam is indeed the exam taker; confirming the identity of the person assigned a specific task or accessing sensitive student data shared by the teacher; verifying parental receipt of information; implementing additional authentication for teachers, school administrators, and parents when viewing sensitive or private information; confirming the authenticity of school administrators when setting up or reviewing large-scale exams; confirming the user's identity when actual authentication data aligns with preset authentication data, validating the user's operation, and triggering the corresponding operation. In case of a mismatch, a third reminder message is generated, alerting relevant personnel to the potential unauthorized operation and enabling timely intervention.

### Embodiment 5:

As illustrated in FIG. 33, the current embodiment discloses a handwritten answer region acquisition system, applicable to an electronic assignment, comprising:
1. A question determination module 1 for identifying the questions to be processed.
   In this context, the questions to be processed are generally selected from a predefine question bank.
2. Attribute information obtaining module 2 for retrieving attribute information of a question to be processed.
   Specifically, question attribute information includes, but is not limited to, question content, and question type details.
3. A first judgment module 3 is employed to determine, based on the question attribute information, whether the question to be processed falls within the handwritten question category. If it does, the region generation module 4 is triggered.
4. The region generation module 4 creates a handwritten answer region within the first designated blank canvas, tailored to the question under consideration.
   Here, the first predetermined blank canvas serves as a platform for handwritten input content.

Handwritten questions are a subset of questions that demand handwritten responses from students. The predefined blank canvas serves as the medium for users to input content via handwriting.

The answer area retrieval method in the current embodiment can be employed on the teacher portal, the student portal, or both, catering to the distinct operational requirements of teachers and students respectively.

In this embodiment, due to the discernible distinctions between the specific characteristics of handwritten and non-handwritten questions, the corresponding question attributes are identified through the question attribute information. This facilitates a prompt and effective differentiation between the two question types. The emphasis is not on the specific identification technology utilized for processing; rather, the focus is on accurate analysis to ascertain whether a question is handwritten or not.

For handwritten questions, the corresponding answer area can be auto-generated. This answer area serves as a space for students to provide handwritten responses, and also for teachers to evaluate and mark the students' answers.

In this embodiment, the automatic detection and generation of answer areas for handwritten questions in an electronic assignment enable a multitude of electronic functionalities for such questions. This includes, but is not limited to:
1. Facilitating a single electronic assignment incorporating answer areas for handwritten questions;
2. Enabling a collection of multiple electronic assignments containing handwritten questions, forming an electronic workbook (for example, several mathematics electronic assignments culminate in a digital electronic workbook);
3. Implementation of electronic workbook fosters revolutionary optimization of diverse educational scenarios, including but not limited to:
   a. Enhanced teacher efficiency through electronic workbook, e.g., system-aided personalized learning progress tracking;
   b. Streamlined targeted guidance by teachers for individual students, leveraging automated exercise collection and dissemination;
   c. Provision of information for specific organizations to oversee school and teacher teaching processes, such as homework assessment;
   d. Promotion of digital transformation in education as a core component, further unlocking the potential of business data value;
   e. Facilitation of artificial intelligence integration in education, parallel to advancements in other industries;
   f. Advancement of education's digital transformation, contributing to the equitable, balanced, and high-quality development of regional education via technological means.

Hence, the automated generation of answer areas for any handwritten question within the subject of interest is an essential prerequisite to optimizing diverse educational scenarios. In simpler terms, this embodiment ensures that by automatically identifying and processing pending questions within an electronic assignment and subsequently generating suitable handwritten answer areas for the identified handwritten questions, the entire process operates autonomously without the need for human intervention. This not only enhances the overall efficiency of electronic assignment processing and the level of electronic processing but also elevates the user experience.

It is important to note that the operational principle of the handwritten answer region acquisition system in this embodiment mirrors that of the method for acquiring the handwritten answer region as demonstrated in Example 1, and therefore does not require repetition here.

### Embodiment 6:

As depicted in FIG. 31, the present embodiment, which is an advancement of embodiment 5, specifically:
**In** a feasible scenario, the handwritten answer region is employed to display the stacked content pertinent to all completed and most recently generated operation layers arranged in sequence.

Here, the sequence of operation layers is established sequentially based on the instances when various users access the handwritten answer area at predefined stages of use.

**In** a practical implementation, the operational layers generated at distinct predefined stages of use encompass: an initial layer, intended for student use; an marking writing layer, aimed at teachers; a revised layer, tailored to students; or an further marking layer, targeted at teachers. The first predetermined blank canvas serves as the foundation for the initial layer, derived from a canvas in picture format. During the N revision processes, the handwritten answer region consecutively generates a revision layer for students and a marking layer for teachers, with N representing a positive integer.

In an executable implementation, the acquisition system further incorporates:
1. A question-answering instruction acquisition module 5 that fetches a re-answering instruction corresponding to the question under consideration.

The region generation module 4, in addition to generating a new handwritten answer region on the second predetermined blank canvas aligned with the question to be processed, based on the re-answer instruction. A display control module for regulating the display status, whether visible or hidden, of all operation layers within the handwritten answer area, acquired from the first predetermined blank canvas.

In a viable implementation, the handwritten answer area denotes an area designated for generating and displaying handwritten touch content. It can also serve as an area to generate and display content originating from an external input device. Moreover, the handwritten answer region is showcased within the display interface of an intelligent terminal that supports handwritten touch operations.

In an implementable embodiment, the electronic assignment encompasses several questions to be processed. The region generation module 4 is additionally employed to create a handwritten answer region for each pending question classified as handwritten within the electronic assignment. These answer regions are individually placed on the first predetermined blank canvas.

In an implementable embodiment, the questions for processing encompass multiple hierarchical levels, each level containing several sub-questions. The region generation module 4 is also utilized to establish a handwritten answer region for a sub-question on the first predetermined blank canvas, provided the sub-question belongs to the handwritten question type. This results in multiple handwritten answer regions corresponding to the questions to be processed.

In a workable embodiment, when multiple sub-questions are part of the handwritten question type, the region generation module 4 generates handwritten answer regions for all these subquestions. These regions can be displayed separately based on the corresponding sub-question's location or sequentially and centrally, in accordance with the order of the questions.

In a realizable embodiment, the acquisition system is further equipped with:
2. An adjustment instruction receiving module 6 tasked with receiving instructions for adjusting the area size;
3. An area size adjustment module 7 aimed at modifying the dimensions of a handwritten answer area based on the instructions for area size adjustment.

In an implementable embodiment, a first size adjustment plug-in is strategically positioned at the first predetermined location of the handwritten answer region. The adjustment instruction receiving module 6 is responsible for obtaining an area size expansion instruction triggered by the first size adjustment plug-in. The area size adjustment module 7 is then engaged to augment the dimensions of the handwritten answer area to a first predetermined size, in accordance with the area size expansion instruction.

A second size adjustment plug-in is presented corresponding to a second predetermined position within the handwritten answer region. Upon interaction with the second size adjustment plug-in, the adjustment instruction receiving module 6 acquires an area size reduction instruction. The area size adjustment module 7 is subsequently invoked to reduce the dimensions of the handwritten answer area to a second predetermined size, based on the area size reduction instruction.

In a workable embodiment, a third size adjustment plug-in is placed in correspondence with the third predetermined position of the handwritten answer region.

In response to activating the third size adjustment plug-in, the adjustment instruction receiving module 6 presents a parameter input interface. This interface facilitates the reception of externally inputted area size parameters.

Leveraging these parameters, the area size adjustment module 7 is utilized to fine-tune the dimensions of the handwritten answer area to a third predetermined size.

In an implementable embodiment, the default dimensions of the handwritten answer area exhibit a positive correlation with the score dimensions of the associated question intended for processing.

In a viable embodiment, the handwritten answer region is equipped to gather data regarding writing track correlations. The writing track correlation data is securely stored in a designated storage space. This data comprises multiple segments of writing track data, accompanied by first-time frame data and/or answer writing speed data corresponding to each segment of writing track data. On the student's portal, the writing track data serves as the answer track data. For the teacher, the writing track data assumes the form of answer marking data.

In an implementable embodiment, the answer box region supports dynamic real-time display of the writing track correlation data on the target portal.

In an implementable embodiment, the handwritten answer area accommodates the presentation of an action layer on the student's portal within the first predefined user side. Additionally, the handwritten answer region enables playback of stored answer track data in a predetermined storage space on the second predefined user portal. Furthermore, the handwritten answer area supports the display of an action layer on the teacher's portal within the third predefined user side. This area also enables playback of stored answer marking data in a designated storage space on the fourth predefined user portal. The appropriate data playback mode is determined based on distinct selection instructions.

In a realizable embodiment, the handwritten answer area is equipped with a corresponding basic functional component, which encompasses various basic functional plug-ins.

In a workable embodiment, the basic functionality plug-in includes a draft paper calling plugin. This plug-in facilitates the retrieval or concealment of draft paper. The draft paper area where the draft paper is situated is generated alongside the corresponding handwritten answer area. Each handwritten answer area corresponds to one draft paper, or alternatively, all handwritten answer areas under each pending question correspond to a single draft paper. These draft papers are dynamically stored within the predetermined storage space of the intelligent terminal.

In an implementable embodiment, the property attributes of the draft paper are adjustable.

The draft paper area, where the draft paper is located, exhibits a distinct display style compared to the handwritten answer area. A determination is made regarding the disabling of the eraser function within the handwritten answer area based on the actual selection operation during the retrieval of the draft paper. The draft paper area is situated on the first preset blank canvas, the same location as the handwritten answer area. This draft paper area can be displayed in either the foreground or the background of the handwritten answer area. Alternatively, the draft paper area and the handwritten answer area can be displayed side by side in separate sections.

In a realizable embodiment, the draft paper region supports the acquisition of draft track correlation data. This draft track correlation data is securely stored in a predetermined storage space. The draft trajectory correlation data comprises numerous segments of draft trajectory data. Each segment of draft trajectory data is accompanied by second-time frame data and/or draft writing speed data that correspond to that specific segment. On the student's portal, the draft track correlated data pertains to the draft writing track data. For the teacher's portal, the draft track correlated data is associated with the draft marking track data.

In an implementable embodiment, the answer box region facilitates the dynamic real-time display of draft track correlated data from the draft paper on the target portal.

In an implementable embodiment, the draft paper area supports the display of draft writing track data on the student's portal within the first predefined user side. Furthermore, the draft paper area supports playback of stored draft writing track data on the second predefined user portal. Additionally, the draft paper area supports the display of draft marking track data from the teacher's portal within the third predefined user side. Likewise, the draft paper area also allows for playback of stored draft marking track data on the fourth predefined user portal. The corresponding data playback mode is determined based on distinct selection instructions.

In a realizable embodiment, the acquisition system further encompasses:
4. The actual writing data acquisition module 8, tasked with collecting actual writing data within the dynamically followed display answer area. This actual writing data encompasses writing track correlation data, or alternatively, it is derived from a combination of writing track correlation data and draft track correlation data.
5. A first analysis module 9 is employed to analyze the actual writing data utilizing a predetermined rule for monitoring abnormal answers, thereby generating a first analysis result.
6. In addition, a first warning message generation module 10 is utilized to assess the presence of anomalies in question-answering behaviour or approval behaviour, based on the results of the first analysis. If anomalies are detected, the module generates and disseminates a first warning message.

In an implementable embodiment, the handwritten answer area is equipped with an audio interaction plug-in. The acquisition system further encompasses:
7. An audio acquisition module 11, dedicated to acquiring and storing externally inputted audio content and audio correlation data in response to activating an audio interaction plug-in.

This module synchronizes externally inputted audio content and audio correlation data, matching audio content and writing track correlation data from the same timeframe. By merging these data sets, merged data is obtained. Importantly, the handwritten answer area supports the playback of merged data within the target area.

It should be noted that the operational principle of the acquisition system for the handwritten answer region in this embodiment remains consistent with that of the method for acquiring the handwritten answer region described in embodiment 2, and therefore is not reiterated here.

### Embodiment 7:

The electronic assignment processing system in this embodiment is designed in accordance with the handwritten answer area acquisition system of embodiments 5 or 6.

As illustrated in FIG. 35, the electronic assignment processing system in this embodiment comprises:
1. The question selection module 12, responsible for selecting multiple questions from a predetermined question bank based on predetermined learning objectives.
2. The answer area determination module 13, dedicated to generating a handwritten answer area for each question categorized as a handwritten question type, utilizing the previously mentioned acquisition system.
3. The answer position generation module 14, tasked with creating designated answer positions for the remaining questions classified as non-handwritten question types.
4. The electronic assignment acquisition module 15, focused on obtaining an electronic assignment linked with a specific question, the corresponding handwritten answer area, and designated answer positions.

In this context, the electronic assignment may encompass a range of question formats that support multiple media inputs, such as voice-interactive questions or video-interactive questions. In such cases, question presentation and response entry are facilitated through a multimedia channel.

In this system, the predefined question bank incorporates an extensive array of questions, each tailored to correspond with specific subject concepts and levels of difficulty. Depending on the learning objectives, students are assessed on different subject concepts, necessitating the selection of appropriate questions from the question bank to formulate a matching assignment. This approach ensures that the chosen questions align with the learning objectives, enabling students to practice and master relevant subject concepts in line with their intended study objectives.

It's worth noting that the operational principle of the electronic assignment processing system in this embodiment is in congruence with that of the method for processing electronic assignments in embodiment 3, and hence will not be reiterated here.

### Embodiment 8:

As depicted in Figure 36, the electronic assignment processing system of this embodiment represents a further enhancement of the configuration presented in Example 7. Specifically:
In an implementable embodiment, the handwritten answer region is capable of capturing writing track correlation data. This writing track correlation data comprises multiple segments of writing track data, each segment accompanied by corresponding first time frame data.

The processing system additionally comprises:
5. The time acquisition module 16, responsible for retrieving the dwell time data of each question within the electronic assignment, both on the teacher's portal and the student's portal, alongside the first time frame data of the handwritten answer area.
6. A second analysis module 17, tasked with analyzing and processing the gathered dwell time data and the first time frame data, resulting in a second analysis outcome.
7. The time consumption calculation module 18, which assesses the marking and/or answering of questions from both the teacher's portal and the student's portal, based on the insights derived from the second analysis.

This innovation leverages the combination of writing track correlation data, dwell time data, and first time frame data to enable an enhanced analysis of question response behaviours and related time considerations within the electronic assignments, providing valuable insights for both teachers and students.

In an implementable embodiment, the processing system additionally comprises:
8. The first dwell time acquisition module 19, responsible for accumulating the dwell time data associated with the same question each time the question is accessed within the electronic assignment, facilitating the aggregation of this data to derive the corresponding first dwell time for that question.
9. The second dwell time acquisition module 20, intended for obtaining the cumulative sum of first dwell times corresponding to each question within the electronic assignment, leading to the determination of a second dwell time representing the total engagement across all questions.
10. A third analysis module 21, designed to conduct an analytical process integrating the first dwell time and the second dwell time, yielding a third analysis outcome that holds valuable insights.
11. The anomaly analysis module 22, dedicated to identifying time-intensive conditions influencing question marking and/or answering on both the teacher's portal and the student's portal, leveraging the insights gleaned from the third analysis to identify these conditions.

In an implementable embodiment, the processing system additionally comprises:
The first dwell time acquisition module 19, responsible for accumulating the dwell time data corresponding to the same question each time the question is accessed within the electronic assignment, allowing for the compilation of a relevant first dwell time duration for that particular question.

The time acquisition module 16, tasked with retrieving first time frame data aligned with the writing track data within the handwritten answer area of the question.
12. A fourth analysis module 23, engaged in an analytical process that incorporates the first time frame data and the first dwell time duration, resulting in a fourth analysis outcome with meaningful implications.
13. The second warning message generation module 24, aimed at determining the presence of abnormalities in question-answering or approval behaviours based on the insights from the fourth analysis, and if identified, generating and dispatching a corresponding second alarm message.

In an implementable embodiment, the processing system further incorporates:
14. The question-answering progress data acquisition module 25, responsible for capturing question-answering progress data tied to a specific question and storing it in a predetermined storage location.
   This question-answering progress data encompasses initial characterization data regarding whether the student portal is engaged with the question, along with question-answering trajectory data representing the student's interactions within the answer area of the question, and potentially draft writing trajectory data from the draft paper.
15. A first display control module 26, serving to govern the shared display of a current interface within the student portal on a designated user side, triggered by the characterization data indicating student engagement with a particular question.
16. The first playback control module 27, responsible for regulating the playback of student-portal answer track data and/or draft writing track data from the draft paper on the specified user portal following the submission of the question by the student.
17. Alternatively, the approval progress data acquisition module 28, tasked with capturing approval progress data pertinent to a specific question and storing it in a predetermined storage location.
   This approval progress data includes secondary representation data indicating whether the teacher's portal has engaged with the question, along with marking track data representing the teacher's interactions within the answer area of the question, and potentially draft marking track data from the draft paper.
18. A second display control module 29, responsible for managing the display of a current interface within the teacher's portal for sharing on a designated use portal, triggered by the representation data signifying teacher engagement with a particular question.
19. The second playback control module 30, intended to oversee the playback of teacherside marking track data and/or draft marking track data from the draft paper on the specified user portal once the teacher's portal has completed the marking process for the question.

This comprehensive system synergizes a range of data points, including dwell time, trajectory data, and engagement details, to enhance the assessment and marking processes for both students and teachers, thereby enriching the educational experience.

In an implementable embodiment, the processing system also includes:
20. A third display control module 31, designed to execute at least one of the following operations across multiple electronic assignments within the same batch: retrieving completion progress for each electronic assignment, dynamically tracking each electronic assignment, statically displaying each electronic assignment, and enabling playback for each electronic assignment.

In an implementable embodiment, the processing system additionally features:
21. A third playback control module 32, responsible for managing static displays or facilitating playback of distinct handwritten answers linked to separate handwritten questions that correspond to the same handwritten question across various electronic assignments.

In an implementable embodiment, the processing system further incorporates:
22. A draft recall mode determination module 33, assigned to determine a recall mode for draft paper within an electronic assignment based on a selection instruction.

This retrieval pattern could involve accessing a shared draft paper utilized across multiple questions or summoning individual draft sheets uniquely aligned with each respective question.

In an implementable embodiment, the processing system also comprises:
23. The question annotation data acquisition module 34, tasked with capturing annotation data generated by either the teacher portal or the student portal while annotating the region containing the question stem through handwriting touch.

This labelled data layer rests atop the stem's layer and is stored within the designated memory.

In an implementable embodiment, the processing system further includes:
24. A question structure building module 35, instrumental in establishing a question data architecture for question creation.

This architecture corresponds to various question hierarchies, each housing a collection of subquestions.
25. The association information obtaining module 36, intended to procure different subquestions matched with distinct sub-question identification data, sub-question label data, and the related association data pertaining to the hierarchical level of each sub-question.

In an implementable embodiment, the processing system also features:
26. A sub-question acquisition module 37, dedicated to acquiring a range of sub-questions selected within the question data architecture.
27. A sub-question deletion processing module 38, tasked with identifying a target sub-question for deletion based on an external selection instruction, ultimately updating the roster of selected sub-questions within the question data architecture.

In an implementable embodiment, the question architecture construction module leverages predetermined rules of decomposition and reconstruction to process predetermined textual content, ultimately forming a stored data mapping relationships table for multifaceted parsing of the question data architecture. This predetermined decomposition and reconstruction rules framework is adapted to various pedagogical specifications' requirements. The question architecture building module 35 then generates the question data architecture for question construction based on this stored data mapping relationships table.

In an implementable embodiment, the processing system further comprises:
28. A Label Edit Operation Acquisition Module 39, responsible for capturing label edit operations executed by users during the construction of title data architecture or after acquiring an electronic assignment.
29. A label data change module 40, serving to modify title label data or sub-title label data for a specific title in response to a label edit operation.

This comprehensive system amalgamates diverse functionalities, such as dynamic tracking, playback, label data management, and question architecture building, providing an enriched educational experience for users.

In an implementable embodiment, the processing system also features:
30. An answer presetting module 41, established for predefining a reference answer corresponding to a sub-question.
   This pre-defined reference answer encompasses various sub-scores, each aligned with a scored element and a respective sub-score, with the collective sum of these sub-scores constituting the sub-question's overall score.
31. The handwritten answer acquisition module 42 is dedicated to obtaining a student's handwritten answer connected to the answer's writing track data within the handwritten answer region.
32. The actual answer point identification module 43 is designed to pinpoint actual answer points within the student's handwritten answers.
33. The overlap comparison module 44 is tasked with comparing these actual answer points against predetermined sub-score points, revealing the extent of overlap.
34. The actual sub-score obtaining module 45 then derives a total score for the sub-question and an actual sub-score for each individual actual answer point based on the degree of overlap.
   These predetermined sub-scores encompass a primary set of substantive sub-scores and a secondary set of non-substantive sub-scores.
   Both substantive and non-substantive sub-scores follow a predefined sequence, with non-substantive sub-score points designated with a zero or non-score indicator.

In an implementable embodiment, the method of treatment further comprises:
35. The second judgment module 46, responsible for evaluating if the current moment satisfies the answer viewing condition. If affirmative, it triggers the progress request acquisition module to procure the progress request for displaying the answer at the student's portal within the sub-question.
36. The answer display control module 47 then facilitates a step-by-step display of segments of the preset reference answer content related to the sub-questions, culminating in the complete showcase of the preset reference answer as per the answer display progress requisites.

In an implementable embodiment, the processing system also includes:
37. The layout template generation module 48, engaged in generating a predetermined layout template for a given question, based on either a physical assignment style or an electronic document assignment style.
38. This template comprises various editable regions affiliated with diverse sub-questions. The editing tool invocation module 49 is responsible for unveiling a corresponding editing box and editing tool upon receiving a first-click action within an editable region. These features will remain concealed when the editable region is in its default state or upon obtaining a second click action from a different region apart from the current editable region.

In an implementable embodiment, the processing system further incorporates:
39. A question image acquisition module 50, aimed at procuring externally input question images.
40. The entry content extraction module 51 is designated to perform recognition processing on the title image, extracting the acquired entry content. This entry content encompasses questions to be entered and/or their corresponding answers.
41. The question generation module 52 then crafts relevant sub-questions or questions based on the entered content, saving them within a predetermined question repository.

In an implementable embodiment, the entry content spans text, image, and code, encompassing calculation formulae from externally input images. Title images arise from handwritten, printed, or electronic sources. Handwritten content pertains to material scribed on paper-based resources or electronic handwritten pages.

In an implementable embodiment, the treatment system also includes:
42. A question construction module 53, responsible for constructing a series of questions.
43. The checking result receiving module 54 obtains the outcome of a user's question inspection, detecting predetermined errors.
44. The hint message generation module 55 then generates hint messages in response to the presence of predetermined errors, prompting the user to rectify the current question until an error-free rendition is attained.
45. The question storage module 56 retains the corresponding question within a predefined question repository if the checking result indicates an absence of predetermined errors.

This comprehensive system encompasses various facets, including answer assessment, question construction, and error-checking functionality, enhancing the educational experience for users.

It's important to note that the operational principle of the present embodiment's electronic assignment processing system aligns with the methodology described in embodiment 4's assignment processing method. As a result, there is no need for repetition herein.

### Embodiment 9:

The electronic assignment operation and management platform of this embodiment encompasses a processing system for electronic assignment as detailed above, along with a multitude of predefined user portals to facilitate communication interactions.

This array of predefined user portals encompasses a student homework application portal within a student device and a teacher homework application portal within a teacher device.

The parent application portal, residing in a parent device, as well as the first educational supervision application portal within the school's educational supervision device and the second educational supervision application portal in the Education Bureau's educational supervision device, contribute to this set of predefined user portals.

The Education Bureau's role includes releasing examination syllabi, distributing question papers, organizing grading, and compiling statistical data on previous candidates' results.

This configuration ensures communication and interaction between the parent application portal, student homework application portal, and teacher homework application portal. The first and second educational supervision application portals communicate with their corresponding student assignment application portals and teacher application portals. Additional user portals can be established based on specific needs, with corresponding authority functions tailored accordingly, avoiding redundancy in explanation.

This platform accommodates diverse user roles, including students, teachers, school administrators, parents, examination board personnel, and educational administrators. Each user role possesses distinct system functionalities and can engage in interactions with other users.

For instance, parents can monitor their children's homework assignments, progress, and grades within the parameters set by the school. They can also access statistical data about their children's learning performance, aiding their understanding of their children's school experiences without intermediaries like teachers. The system can offer guidance to parents in providing appropriate support to their children and setting reasonable expectations to prevent undue stress.

Similarly, school administrators in various positions, such as teachers, subject team leaders, year group leaders, and school leaders, can access tailored information and perform actions aligned with their responsibilities.

Supervisors and higher authorities can not only oversee and manage schools but also gain insights into frontline teaching conditions and offer assistance.

Examination board teaching and research personnel can observe students' grasp of distinct teaching content categories, thereby adjusting instructional strategies for various student types. The platform allows resource sharing, including past exam questions, sample questions, and question analyses with associated schools. This feature supports fostering effective teaching methods.

Incorporating these functionalities, the platform facilitates seamless communication and collaboration across diverse user roles, enhancing educational management and interactions.

### Embodiment 10:

FIG. 37 depicts the schematic structure of an electronic device, an integral part of embodiment 10 within this disclosure. The electronic device encompasses a memory, a processor, and a computer program stored within the memory, executable by the processor. This facilitates the execution of the method outlined in the earlier embodiments. It's important to note that the representation of electronic device 30 in FIG. 37 serves as an illustrative example and does not impose limitations on the functions or scope of application for the disclosed embodiments.

As shown in Figure 37, the electronic device 30 assumes the guise of a general-purpose computing device, potentially a server device. The electronic device 30 incorporates diverse components, including but not limited to: at least one processor 31 as detailed above, at least one memory 32 as expounded earlier, and a bus 33 connecting distinct system components such as memory 32 and processor 31. This bus 33 amalgamates a data bus, an address bus, and a control bus.

The Memory 32 integrates various types of memory including volatile memory such as random access memory (RAM) 321 and/or cache memory 322. Additionally, it may house read-only memory (ROM) 323. Memory 32 further accommodates a program/utility 325 inclusive of a set (at least one) of program modules 324. These modules encompass, but are not restricted to: an operating system, one or more applications, additional program modules, and program data. This collection of examples or a hybrid thereof can comprise a network environment implementation.

The processor 31 is responsible for executing multifarious functional applications as well as data processing, like the methods elucidated in the preceding embodiments, by running a computer program stored within memory 32. The electronic device 30 can communicate with one or more external devices 34, for instance, keyboards and pointing devices, through an input/output (I/O) interface 35. Furthermore, the model-generated device 30 can establish communication with one or more networks (e.g., local area network (LAN), wide area network (WAN), and public network like the Internet) via a network adapter 36. As depicted in FIG. 37, network adapter 36 interacts with other modules of model-generated device 30 through bus 33. It is important to recognize that, even though not shown in the figures, additional hardware and/or software modules can collaborate with the model-generated device 30. These could encompass microcode, device drivers, redundant processors, external disk drive arrays, RAID (disk array) systems, tape drives, and data backup storage systems, among others.

It should be noted that while the detailed description delineates several units/modules or subunits/modules of the electronic device, such division is merely illustrative and not obligatory. In fact, in accordance with the embodiments of this disclosure, features and functions of two or more units/modules discussed earlier may be incorporated within a single unit/module. Conversely, the features and functions of one unit/module described earlier could be subdivided and assigned to multiple units/modules.

### Embodiment 11:

This embodiment introduces a computer-readable storage medium hosting a computer program. When executed by a processor, the program facilitates the implementation of steps outlined in the method of the earlier embodiment.

This readable storage medium could encompass various forms, including but not limited to: portable discs, hard discs, random access memory, read-only memories, erasable programmable read-only memories, optical storage devices, magnetic storage devices, or a suitable amalgamation of the aforementioned options.

Possible embodiments of the present disclosure can also be realized in the form of a program product. This program product comprises program code that, when executed on a terminal device, directs the terminal device to perform the steps outlined in the method as described in the embodiments above.

The program code can be written in any combination of one or more programming languages. It can be executed entirely on the user device, partially on the user device, as an independent software package, partially on the user device and partially on a remote device, or entirely on the remote device.

While the above has detailed specific embodiments of the present disclosure, those skilled in the art should recognize that this is merely an illustrative example. The scope of protection for the present disclosure is confined by the appended claims. Professionals in the field may introduce various alterations or modifications to these embodiments without deviating from the essence and principles of the present disclosure. All these changes and modifications fall within the protective scope of the present disclosure.

## Claims

1. **A method for acquiring an answer area, characterized in that the acquiring method is applied in electronic assignments, the acquiring method includes:**
• Determining the question to be processed;
• Acquiring the attribute information of the question to be processed;
• Judging whether the question to be processed belongs to the handwriting type based on the attribute information of the question, if it does, generating a handwriting answer area matching the question to be processed on a first preset blank canvas;
• Wherein the first preset blank canvas is a carrier for handwriting input content.

2. **The method for acquiring an answer area according to claim 1, characterized in that the handwriting answer area is used to display all operation layers that have been completed and newly generated and are stacked sequentially;**
• Wherein, all the sequentially stacked operation layers are generated sequentially when different users enter the handwriting answer area at different preset usage stages.

3. **The method for acquiring an answer area according to claim 2, characterized in that the operation layers generated at different preset usage stages include an initial layer for student use, a marking writing layer for teacher use, a correction layer for student use, or a correction review layer for teacher use;**
• Wherein the first preset blank canvas is the initial layer generated based on a picture format canvas;
• In N correction operations, the handwriting answer area sequentially generates the correction layer for student use and the correction review layer for teacher use, where N is a positive integer.

4. **The method for acquiring an answer area according to claim 2, characterized in that the acquiring method further comprises the following steps:**
• Acquiring a re-answer command corresponding to the question to be processed;
• Generating a new handwriting answer area matching the question to be processed on a second preset blank canvas based on the re-answer command;
• Controlling whether all the operation layers in the handwriting answer area obtained based on the first preset blank canvas are in display state or hidden state.

5. **The method for acquiring an answer area according to claims 1-4, characterized in that the handwriting answer area is set with corresponding basic functional components, which include several basic functional plugins;**
• The handwriting answer area is an area for responding to and displaying handwriting touch content; and/or an area for responding to and displaying content input based on external input devices;
• Wherein the handwriting answer area is displayed on the display interface of an intelligent terminal that supports handwriting touch operations.

6. **The method for acquiring an answer area according to claim 5, characterized in that the electronic assignment includes several question stems and several questions to be processed under each question stem;**
• The step of generating the handwriting answer area matching the question to be processed on the first preset blank canvas includes:
• For each question to be processed that belongs to the handwriting type in the electronic assignment, respectively generating the handwriting answer area of each question to be processed on the first preset blank canvas.

7. **The method for acquiring an answer area according to claim 6, characterized in that the question to be processed includes several question levels, and each question level corresponds to several sub-questions. The step of generating the handwriting answer area matching the question to be processed on the first preset blank canvas includes:**
• When it is determined that the sub-question belongs to the handwriting type, generating the handwriting answer area of the sub-question on the first preset blank canvas to obtain several handwriting answer areas corresponding to the question to be processed;

8. **The method for acquiring an answer area according to claim 7, characterized in that simultaneously generating the handwriting answer areas of all sub-questions belonging to the handwriting type when there are multiple sub-questions belonging to the handwriting type;**
• Wherein the handwriting answer area of each sub-question respectively follows the corresponding sub-question position to display; or, the handwriting answer areas of multiple sub-questions are sequentially and centrally displayed based on the question order.

9. **The method for acquiring an answer area according to any one of the claims 1-8, characterized by the following steps:**
• Generating the handwriting answer area matching the question to be processed on the first preset blank canvas;
• Receiving area size adjustment instructions;
• Adjusting the size of the handwriting answer area based on the area size adjustment instructions.

10. **The method for acquiring an answer area according to claims 9, characterized by the following steps:**
• A first size adjustment plugin is set at the first preset position of the handwriting answer area;
• In response to the first size adjustment plugin, acquiring area size expansion instructions;
• Expanding the size of the handwriting answer area to a first preset size based on the area size expansion instructions;
• And/or,
• A second size adjustment plugin is set at the second preset position of the handwriting answer area;
• In response to the second size adjustment plugin, acquiring area size reduction instructions;
• Reducing the size of the handwriting answer area to a second preset size based on the area size reduction instructions;
• And/or,
• A third size adjustment plugin is set at the third preset position of the handwriting answer area;
• In response to the third size adjustment plugin, displaying a parameter input interface;
• Receiving externally input area size parameters based on the parameter input interface;
• Adjusting the size of the handwriting answer area to a third preset size based on the area size parameters;
• And/or,
• The default size of the handwriting answer area is positively correlated with the score value of the corresponding question to be processed.

11. **The method for acquiring an answer area according to any one of the claims 1-10, characterized in that the handwriting answer area supports acquiring writing trajectory related data;**
• Wherein the writing trajectory-related data is stored in a preset storage space;
• The writing trajectory-related data includes several segments of writing trajectory data, and the first time frame data and/or answer writing speed data corresponding to each segment of writing trajectory data;
• On the student's portal, the writing trajectory data is answering trajectory data;
• On the teacher's portal, the writing trajectory data is answering marking data;
• The answer frame area supports dynamic following display of the writing trajectory-related data in the target portal.

12. **The method for acquiring an answer area according to claim 11, characterized in that the answer area supports dynamic following display of the writing trajectory-related data in the target portal;**

13. **The method for acquiring an answer area according to claim 11 or 12, characterized by the following steps:**
• The handwriting answer area supports displaying the operation layer of the student portal in the first preset use portal;
• And/or,
• The handwriting answer area supports replaying the answer trajectory data stored in the preset storage space in the second preset use portal;
• And/or,
• The handwriting answer area supports displaying the operation layer of the teacher portal in the third preset use portal;
• And/or,
• The handwriting answer area supports replaying the answer marking data stored in the preset storage space in the fourth preset use portal;
• Wherein the corresponding data replay mode is determined based on different selection instructions.

14. **The method for acquiring an answer area according to claim 11, characterized in that the handwriting answer area is set with corresponding basic functional components, which include several basic functional plugins;**

15. **The method for acquiring an answer area according to claim 14, characterized in that the basic functional plugins include a draft paper calling plugin, which is used to call or hide the draft paper;**
• Wherein the draft paper area generated follows the corresponding handwriting answer area, and each handwriting answer area corresponds to a draft paper; or, all handwriting answer areas under each question to be processed correspond to a draft paper;
• The draft paper is dynamically stored in the preset storage space of the intelligent terminal.

16. **The method for acquiring an answer area according to claim 15, further enhanced by the following characteristics:**
• The attribute information of the draft paper is adjustable;
• And/or, the display style of the draft paper area is different from that of the handwriting answer area;
• And/or, when calling the draft paper, determining whether the eraser function of the handwriting answer area is disabled based on the actual selection operation;
• And/or, the draft paper area is located on the first preset blank canvas where the handwriting answer area is located;
• And/or, the draft paper area is displayed in the front or back position of the handwriting answer area;
• And/or, the draft paper area and the handwriting answer area are displayed side by side in separate areas.

17. **The method for acquiring an answer area according to claim 15 or 16, characterized in that the draft paper area supports acquiring draft trajectory-related data;**
• Wherein the draft trajectory-related data is stored in the preset storage space;
• The draft trajectory-related data includes several segments of draft trajectory data, and the second time frame data and/or draft writing speed data corresponding to each segment of draft trajectory data;
• On the student portal, the draft trajectory-related data is draft writing trajectory data;
• In the teacher portal, the draft trajectory-related data is draft marking trajectory data.

18. **The method for acquiring an answer area according to claim 17, characterized in the answer frame area supports dynamic following display of the draft trajectory-related data of the draft paper in the target portal;**
• Wherein the draft trajectory-related data is stored in the preset storage space;
• The draft trajectory-related data includes several segments of draft trajectory data, and the second time frame data and/or draft writing speed data corresponding to each segment of draft trajectory data;
• On the student portal, the draft trajectory-related data is draft writing trajectory data;
• In the teacher portal, the draft trajectory-related data is draft marking trajectory data.

19. **The method for acquiring an answer area according to claim 17, characterized by the following steps:**
• The draft paper area supports displaying the draft writing trajectory data of the student portal in the first preset use portal;
• And/or,
• The draft paper area supports replaying the draft writing trajectory data stored in the preset storage space in the second preset use portal;
• And/or,
• The draft paper area supports displaying the draft marking trajectory data of the teacher portal in the third preset use portal;
• And/or,
• The draft paper area supports replaying the draft marking trajectory data stored in the preset storage space in the fourth preset use portal;
• Wherein the corresponding data replay mode is determined based on different selection instructions.

20. **The method for acquiring an answer area according to claim 17, characterized in that the acquiring method also includes:**
• Acquiring the actual writing data under the dynamic following display of the answer area;
• Wherein the actual writing data includes the writing trajectory-related data, or, based on the writing trajectory-related data and the draft trajectory-related data;
• Analyzing the actual writing data using preset abnormal answer monitoring rules to obtain a first analysis result;
• Based on the first analysis result, determining whether the answering behaviour or marking behaviour is abnormal, if so, generating and sending first alert information.

21. **The method for acquiring an answer area according to any one of the claims 11-20, the handwriting answer area is set with an audio interaction plugin;**
• In response to the audio interaction plugin, acquiring and storing externally input audio content and audio-related data;
• And/or, acquiring and storing externally input audio content and audio-related data, synchronizing the audio content and the writing trajectory-related data belonging to the same time frame based on the audio-related data, to merge the audio content and the writing trajectory-related data to obtain merged data;
• Wherein the handwriting answer area supports replaying the merged data in the target portal within the handwriting answer area.

22. **A method for processing electronic assignments, characterized in that the processing method is implemented based on the method for acquiring an answer area according to any one of claims 1 to 21, the processing method includes:**
• Selecting several questions from a preset question bank based on preset learning objectives;
• Generating handwriting answer areas corresponding to each question belonging to the handwriting type using the acquiring method;
• Generating set answer positions corresponding to other remaining questions belonging to non-handwriting types;
• Acquiring the electronic assignment based on the questions and the corresponding handwriting answer areas, and the set answer positions.

23. **The method for processing electronic assignments according to claim 22, characterized in that the handwriting answer area supports acquiring writing trajectory-related data, and the writing trajectory-related data includes several segments** of writing **trajectory data and the first time frame data corresponding to each segment of writing trajectory data;**
• The processing method also includes:
• Acquiring the time data of each question in the electronic assignment where the teacher portal and/or student portal stays, and the first time frame data of the handwriting answer area;
• Analyzing and processing the stay time data and the first time frame data to obtain a second analysis result;
• Evaluating the marking situation and/or answer situation of the teacher portal and/or student portal based on the second analysis result.

24. **The method for processing electronic assignments according to claim 23, the processing method also includes:**
• Counting the stay time data of the same question in the electronic assignment each time to obtain the first stay duration corresponding to the same question;
• Acquiring the total stay time of each question in the electronic assignment to obtain the second stay duration of all questions;
• Analyzing and processing the first stay duration and the second stay duration to obtain a third analysis result;
• Determining the time taking for the marking and/or answering of the teacher portal and/or student portal based on the third analysis result.

25. **The method for processing electronic assignments according to claim 23, the processing method also includes:**
• Counting the stay time data of the same question in the electronic assignment each time to obtain the first stay duration corresponding to the same question;
• Acquiring the first time frame data corresponding to the writing trajectory data in the handwriting answer area of the question;
• Analyzing and processing the first time frame data and the first stay duration to obtain a fourth analysis result;
• Determining whether the answering behaviour or marking behaviour is abnormal based on the fourth analysis result, and if so, generating and sending corresponding second alert information.

26. **The method for processing electronic assignments according to claims 22-25, the processing method also includes:**
• Wherein the answer progress data includes the first representation data of whether the student portal has entered the question, and the answer trajectory data and/or the draft writing trajectory data of the answer area on the question in the student portal;
• When the first representation data indicates that the student portal has entered the question, controlling to share and display the first current display interface of the student portal in the first preset use portal;
• After the student portal submits the question, controlling to replay the answer trajectory data and/or the draft writing trajectory data of the student portal in the first preset use portal;
• Or,
• Acquiring the marking progress data corresponding to the question and sending it to the preset storage space;
• Wherein the marking progress data includes the second representation data of whether the teacher portal has entered the question, and the marking trajectory data and/or the draft marking trajectory data of the teacher portal on the question;
• When the second representation data indicates that the teacher portal has entered the question, controlling to share and display the second current display interface of the teacher portal in the second preset use portal;
• After the teacher portal completes the question marking, controlling to replay the marking trajectory data and/or the draft marking trajectory data of the teacher portal in the second preset use portal;

27. **The method for processing electronic assignments according to claims 22-25, the processing method also includes:**
• For multiple electronic assignments of the same batch, performing at least one of the following operations:
• Acquiring the completion progress of each electronic assignment, dynamically tracking the display of each electronic assignment, acquiring the static display of each electronic assignment, acquiring the replay of each electronic assignment;
• And/or,
• Controlling to display or replay different handwriting answer contents of the same handwriting question in different electronic assignments.

28. **The method for processing electronic assignments according to claims 26, the processing method also includes:**
• Determining the calling mode of the draft paper in the electronic assignment based on selection instructions;
• The calling mode corresponds to calling reusable draft paper for multiple questions;
• The reusable draft paper can be reused;
• And/or, calling independent draft paper for corresponding questions, each question corresponds to a piece of independent draft paper;

29. **The method for processing electronic assignments according to claims 28, the processing method also includes:**
• Acquiring marking data generated when marking the question stem area by handwriting touch in the question on the teacher portal and/or student portal;
• Wherein the marking data layer is stacked on the question stem layer;
• And/or, storing the marking data to the preset storage space.

30. **The method for processing electronic assignments according to any one of the claims 22-29, the processing method also includes:**
• Constructing a question data architecture for question building;
• Wherein the question data architecture corresponds to several question levels, and each question level corresponds to several sub-questions;
• Acquiring different sub-question identifiers and sub-question label data corresponding to different sub-questions, and the affiliation data of each sub-question belonging to the question level, and storing them in the storage mapping data table;

31. **The method for processing electronic assignments according to claim 30, the processing method also includes:**
• Acquiring several selected sub-questions under the question data architecture;
• Determining the target sub-questions to be deleted based on external selection instructions, to update the new selected sub-questions under the question data architecture;
• And/or, the number of question levels is expandable;

32. **The method for processing electronic assignments according to claim 30, the processing method also includes:**
• Before the step of constructing the question data architecture for question building, the processing method also includes:
• Processing preset text content using preset decomposition and reconstruction rules to construct a storage data mapping relationship table for multi-dimensional analysis of the question data architecture;
• Wherein the preset decomposition and reconstruction rules are adapted to different teaching norms and scene requirements;
• The step of constructing the question data architecture for question building includes:
• Generating the question data architecture for question building according to the storage data mapping relationship table;

33. **The method for processing electronic assignments according to any one of the claims 30-32, the processing method also includes:**
• When constructing the question data architecture or after acquiring the electronic assignment, acquiring the question label editing operation executed by the user;
• Responding to the question label editing operation to change the question label data or sub-question label data;

34. **The method for processing electronic assignments according to claim 31, the processing method also includes:**
• Pre-setting the preset reference answers corresponding to the sub-questions;
• Wherein the preset reference answers include several sub-score points, each sub-score point corresponds to a score content and a sub-score, and the sum of several sub-scores is the total score of the sub-question;
• Acquiring the student's handwriting answers corresponding to the answer writing trajectory data of the handwriting answer area;
• Identifying the actual answer points in the student's handwriting answers;
• Comparing the overlap between the actual answer points and the preset sub-score points;
• Acquiring the total score of the sub-question and the actual sub-score of each actual answer point based on the overlap;
• And/or, several preset sub-score points include the first number of substantial sub-score points and the second number of non-substantial sub-score points;
• Wherein the substantial sub-score points and the non-substantial sub-score points are arranged according to a preset order;
• The non-substantial sub-score points are marked with zero points or non-scoring marks;

35. **The method for processing electronic assignments according to claim 34, the processing method also includes:**
• Determining whether the answer viewing conditions are met at the current time, if met, obtaining the answer display progress request from the student end for the sub-question;
• Displaying the part of the preset reference answer content of the sub-question in stages based on the answer display progress request until the complete preset reference answer is displayed;

36. **The method for processing electronic assignments according to claim 22, the processing method also includes:**
• Generating a preset layout template for the question based on physical assignment styles or electronic document assignment styles;
• Wherein the preset layout template includes several editable areas associated with different sub-questions;
• The processing method also includes:
• Displaying the corresponding edit box and editing tools when the first click operation is obtained at the editable area;
• Wherein, when the editable area is in the default state, or when acquiring the second click operation in other areas outside the current editable area, hiding the edit box and editing tools of the editable area.

37. **The method for processing electronic assignments according to claim 22, the processing method also includes:**
• Acquiring an externally inputted image of a problem;
• Recognizing and extracting the recorded content from the image of the problem;
• The recorded content includes the problem to be input and/or the corresponding answer to the problem to be input;
• Generating the corresponding sub-problem or problem based on the recorded content and storing it in a preset question bank;

38. **The method for processing electronic assignments according to claim 37, the processing method also includes:**
• The recorded content includes text content, image content, and/or code content of the calculation formula in the externally inputted image;
• And/or,
• The image of the problem is generated based on handwritten content, printed content, or electronic content;
• Handwritten content is written on paper materials or electronic handwritten pages;

39. **The method for processing electronic assignments according to claim 37 or 38, the processing method also includes:**
• Before the step of selecting several problems from the preset question bank based on the preset learning goals, further comprising:
• Constructing several problems;
• Receiving the user's check results on whether there are preset errors in the problem;
• If the check result indicates the presence of preset errors, generating prompt information to prompt the user to correct the current problem until a problem without preset errors is obtained;
• If the check result indicates no preset errors, storing the corresponding problem into the preset question bank.

40. **The method for processing electronic assignments according to any one of the claims 22-39, the processing method also includes:**
• Pre-constructing several electronic question bank folders;
• Each electronic question bank folder corresponds to several problems for the same subject in the same grade;
• Acquiring teaching-related parameters for each subject in each class of the same grade;
• Generating several initial electronic assignments for each class based on the teaching-related parameters and the problems in the corresponding subject's electronic question bank folder;
• Each class's several initial electronic assignments are stored in the same assignment folder, with different initial electronic assignments corresponding to different preset teaching progress;
• Determining each time's target electronic assignments to be assigned based on several initial electronic assignments and publishing them to the student portal;

41. **The method for processing electronic assignments according to claim 40, the processing method also includes:**
• Pre-setting a first question-searching interface on the teacher's portal;
• The first question-searching interface includes several first search boxes, and the search content in different first search boxes corresponds to different dimensions of search parameters, or the search content in the first search box includes preset partial problem content or partial answer content;
• The step of generating several initial electronic assignments for each class based on the teaching-related parameters and the problems in the corresponding subject's electronic question bank folder comprises:
• Determining the first actual search content input into the question-searching interface based on any preset teaching progress to retrieve matching several first problems from the corresponding subject's electronic question bank folder;
• Selecting the first set number of target problems from several first problems to form an initial electronic assignment for the corresponding class, until several initial electronic assignments corresponding to different preset teaching progress are obtained;

42. **The method for processing electronic assignments according to claim 40, the processing method also includes:**
• Before the step of determining each time's target electronic assignments to be assigned based on several initial electronic assignments and publishing them to the student portal, further comprising:
• Selecting a first class from previous years of the same grade, whose teaching-related parameters have a correlation greater than the first set threshold with the current class;
• Retrieving historical-related assignments with the same teaching progress published under the first class;
• Using the historical-related assignments as the initial electronic assignments for the current class; or
• Selecting the second set number of problems from the historical-related assignments as target problems and selecting the third set number of problems from the several first problems retrieved by the first search box as target problems to obtain the initial electronic assignments for the corresponding class;
• Selecting a second class from the current year of the same grade, whose teaching-related parameters have a correlation greater than the second set threshold with the current class;
• Retrieving the first electronic assignment with the same teaching progress in the assignment folder of the second class;
• Using the first electronic assignment as the initial electronic assignment for the current class;
• Selecting the fourth set number of problems from the first electronic assignment and selecting the fifth set number of problems from the several first problems retrieved by the first search box as target problems to obtain the initial electronic assignments for the corresponding class;
• Selecting the sixth set number of problems from several first electronic assignments as target problems to obtain the initial electronic assignments for the corresponding class.

43. **The method for processing electronic assignments according to claim 41, the processing method also includes:**
• The search interface is equipped with a question overview area and a question detail preview area.
• After acquiring the matching first questions, the method proceeds to sequentially display a list of questions corresponding to the first questions in the question overview area.
• Upon selecting first questions, displaying their contents in the question detail preview area and deciding whether to employ the selected first questions as target questions based on actual selection operations, until the desired number of target questions is secured for initial electronic assignments.
• And/or,
• Selecting the first preset number of assignment questions from several first questions to form the initial electronic assignment for the corresponding class, and generating the initial electronic assignment in the form of a physical assignment or an electronic document assignment;
• And/or,
• Summarizing and displaying the number of questions and the total score of the questions in the question detail preview area based on the first questions to determine whether the requirements for forming an assignment are met;
• And/or,
• Performing at least one of the following operations on different first questions in the question detail preview area:
• Adjusting the order of several first questions, editing the associated content of any first question, deleting one or more first questions, or sequentially marking the question numbers of several first questions;
• And/or,
• Based on a selected display mode switching command, displaying the content of several first questions in the question detail preview area using the corresponding display mode.

44. **The method for processing electronic assignments according to claim 41, the processing method also includes:**
• Capturing actual user actions within the first search interface.
• Acquiring multi-dimensional identification parameters for a corresponding first question based on the user's operations.
• Determining based on the identification information, whether to designate the current first question as a target question.
• After generating initial electronic assignments, constructing identification parameters for each initial electronic assignment based on identification information for each target question.
• Identifying sub-scores for target questions and total scores for initial electronic assignments.
• A fixed length of time for answering questions may also be determined for countdown reminders in exam mode.

45. **The method for processing electronic assignments according to claim 44, further comprising:**
• Generating prompt information if the identification information of the first problem indicates that it has been selected and published as an electronic assignments to the current class within a set time period from the current moment;
• And/or,
• Storing the newly added problems into the corresponding subject's electronic question bank folder or temporary electronic question bank folder;

46. **The method for processing electronic assignments according to any one of claims 40-45, characterized by the step of determining each time's target electronic assignments to be assigned based on several initial electronic assignments, comprising:**
• Acquiring the current teaching progress of each class for the current subject;
• Comparing the actual teaching progress with the preset teaching progress of the corresponding subject's initial electronic assignments to obtain the comparison result;
• Adjusting the specified problems or sub-problems in the initial electronic assignments based on the comparison result to form target electronic assignments that match the actual teaching progress of each class;

47. **The method for processing electronic assignments according to claim 46, characterized by the step of adjusting specified questions or subquestions under designated questions in the initial electronic assignments based on the comparison results to create target electronic assignments that match the actual teaching schedule for each class, comprising:**
• If the comparison result indicates that the actual teaching progress is slower than the preset teaching progress in the lesson plans, deleting the specified problems or sub-problems corresponding to the unfinished subject concepts in the preset teaching progress from the initial electronic assignments to form target electronic assignments that match the actual teaching progress of each class; or, after deleting problems from the initial electronic assignments, adding corresponding problems based on external problem addition requirements to form target electronic assignments that match the actual teaching progress of each class;
• If the comparison result indicates that the actual teaching progress is faster than the preset teaching progress in the lesson plans, adding the specified problems or sub-problems corresponding to the subject concepts beyond the preset teaching progress to the initial electronic assignments to form target electronic assignments that match the actual teaching progress of each class;

48. **The method for processing electronic assignments according to claim 47, characterized by the following steps:**
• Previewing or editing the target electronic assignments before publishing them on the teacher's portal;
• And/or,
• Monitoring the system time and publishing the target electronic assignments to all students in the current class on their student portal when the system time reaches the preset release time if the release time has been set in advance.

49. **The method for processing electronic assignments according to any one of the claims 41-48, characterized by the following steps:**
• Acquiring the actual academic situation information of any subject for the target student;
• Determining the second actual search parameter input into the first search box in the question-searching interface based on the actual academic situation information to retrieve matching several second problems from the electronic question bank folder;
• Selecting the seventh set number of problems from several second problems as target problems to form target electronic assignments that match the actual assignment needs of the target student for the corresponding subject;
• And/or,
• Constructing a second question-searching interface on the student portal or parent portal, which includes several second search boxes;
• Acquiring the actual problem-solving needs of the current user and determining the second actual search content based on the actual problem-solving needs;
• Acquiring the second actual search content input into the second search box and retrieving matching several third problems from the corresponding first preset electronic question bank folder;
• Selecting the eighth set number of problems from several third problems as target problems to form target electronic assignments that match the actual problem-solving needs of the current student.

50. **The method for processing electronic assignments according to claim 40 or 49, characterized by the following steps:**
• Providing a pre-designed student assignment management interface on the student portal;
• The student assignment management interface includes several assignment folders, organized based on different preset filing methods related to various subjects;
• The preset organization methods correspond to the unsubmitted, submitted, and reviewed filing baselines;
• And/or,
• Additionally, on the teacher's portal, a pre-designed teacher assignment management interface is provided;
• The teacher assignment management interface includes processing status information for each electronic assignment.

51. **The method for processing electronic assignments according to claim 50, characterized by the following steps:**
• Retrieving the submitted target electronic assignments from the student portal through an active assignment submission operation;
• Acquiring the submitted target electronic assignments from the student portal through a passively triggered assignment submission operation;
• The passively triggered operation involves detecting when the student's question answering time reaches a fixed length in examination mode or when intervention by a third party is necessary for collection;
• And/or,
• After an assignment is submitted, accessing trajectory data in questions within the electronic assignment corresponding to the chosen workbook on the student's portal, and across all operations within those questions' layers;
• And/or,
• If a user view attribute is predefined for the electronic assignment, controlling student portal viewing permissions based on this user view attribute.

52. **The method for processing electronic assignments according to claim 51, characterized by the following steps:**
• Analyzing submitted and/or unsubmitted target electronic assignments from the same class batch to gather assignment submission progress data;
• For submitted target electronic assignments, analyzing marked and/or unmarked assignments to obtain data about assignment marking progress;
• In the teacher's assignment management interface, displaying multiple electronic assignments for the same class sequentially along with assignment submission progress data and/or assignment marking progress data under each electronic assignment;
• And/or,
• If an assignment remains unsubmitted within the first preset time period, generating a first reminder message to prompt the student for submission;
• Generating a second reminder message if unmarked electronic assignments fall below the first set value relative to the preset deadline, or if they exceed the second set value.

53. **The method for processing electronic assignments according to claim 52, characterized by the following steps:**
• Selecting the target marking mode to mark the same batch of multiple electronic assignments in the teacher's marking interface;
• The target marking mode includes marking different students' entire electronic assignments one by one until all students' electronic assignments are marked; or batch marking the same problem, processing the problems in the electronic assignments one by one until all students' electronic assignments are marked;

54. **The method for processing electronic assignments according to claim 53, characterized by the following steps:**
• Acquiring multiple target electronic assignments submitted by students in the same batch and belonging to the examination mode;
• Extracting the student answer problem sets corresponding to one or more problems in several target electronic assignments;
• Splitting the student answer problem sets into multiple sub-answer problem sets according to preset allocation rules;
• Sending multiple sub-answer problem sets to different teacher portals for marking until each target electronic assignment is marked.

55. **The method for processing electronic assignments according to claim 54, characterized by the following steps:**
• For the same batch of marked target electronic assignments, calculating the error rate for each problem and sub-problem;
• Marking each problem and sub-problem based on the error rate;
• And/or;
• Sorting and displaying different problems and sub-problems according to the error rate;
• And/or,
• Acquiring preset operations on the teacher portal, and acquiring the selected student answer content for the current problem or current sub-problem in the target electronic assignments based on the preset operations;
• Acquiring the selected viewing mode and using the appropriate viewing mode to view all incorrect answers and/or all correct answers in several student answer contents.
• And/or,
• For the same batch of marked target electronic assignments, retrieving multiple student answers under the same question or sub-question based on actual selection operations to generate several lesson preparation materials.

56. **The method for processing electronic assignments according to claim 54, characterized by the following steps:**
• For the same batch of marked target electronic assignments, generating several lesson preparation contents by extracting multiple student answer contents for the same problem or sub-problem based on actual selection operations;
• Acquiring all historical electronic assignments marked before the current time within a set time period for the same subject of the same student;
• Acquiring the initial processing trajectory data of each problem in each marked historical electronic assignment for the current student;
• Extracting the first processing trajectory data from the initial processing trajectory data; the first processing trajectory data is used to represent the trajectory data for the student to correct the deducted problems in the marked electronic assignments;

57. **The method for processing electronic assignments according to claim 56, characterized by the following steps:**
• Analyzing the homework correction habits data of the current student in the set time period based on the first processing trajectory data and the total number of deducted problems in the marked target electronic assignments;
• If the first processing trajectory data indicates that the current student triggers the generation of the correction layer and writes the correction content or regenerates the handwritten answer area for the problem and writes the correction content, determining that the current student has corrected the corresponding deducted problem and generating the first determination information that the current student has corrected the current handwritten problem;
• If the first processing trajectory data indicates that the current student calls the draft paper and there is draft trajectory data or touches the problem stem layer and marks the data in the problem stem area, determining that the current student has corrected the corresponding deducted problem and generating the second determination information that the current student has corrected the current problem;
• Otherwise, generating the third determination information that the current student has not corrected the current deducted problem;
• Acquiring the correction completion number of the current student for a marked electronic assignment based on the first determination information, second determination information, and third determination information, and calculating the ratio of the correction completion number to the total number of deducted problems in a marked electronic assignment as the correction completion degree of the current student for a marked electronic assignment;
• Acquiring the correction habits data of the current student in the set time period based on the correction completion degree of each marked assignment.

58. **The method for processing electronic assignments according to claim 54, characterized by the following steps:**
• Gathering marking data for X electronic assignments or Y marked questions for each student, where X and Y are positive integers;
• Determining scores for each question or sub-question based on marking data;
• Collecting answer related data as users answer each question or sub-question;
• Generating a first assignment analysis report for each student based on score profiles and/or answer correlation data, and/or potentially generating a second assignment analysis report for one or more classes;
• The first assignment analysis report represents mastery of learning objectives and changes in learning conditions for individual students;
• The second assignment analysis report depicts mastery of learning objectives and changes in learning conditions across one or more classes.

59. **The method for processing electronic assignments according to any one of the claims 50-58, characterized by the following steps:**
• Analyzing the first assignment analysis report and second assignment analysis report to identify incorrectly answered questions;
• Alternatively, analyzing all questions for the results of the analysis;
• And/or,
• The marked question includes multiple dimensions of labeling information;
• Calculating the student's score for each question or sub-question in various marked electronic assignments over a specified time period;
• Collecting the student's answer related data for each question or sub-question;
• Utilizing the score profiles and/or answer correlation data to determine the student's mastery of the target assessment subject concepts under different statistical dimensions of the labeled information.

60. **The method for processing electronic assignments according to claim 54, characterized by the following steps:**
• Gathering a number of incorrectly answered questions from the marked assignments of the current student within the same subject, storing them in an incorrect question bank for the current student;
• Selecting a number of questions from the incorrect question bank and forming a first electronic assignment for practicing on incorrect questions based on a preset error training rule;
• Alternatively, receiving parameters for selecting incorrect questions entered by the student and using them to select a number of questions from the incorrect question bank to form a second electronic assignment for error training;
• The error selection parameters may include question identification information and/or other predefined selection criteria.

61. **The method for processing electronic assignments according to claim 60, characterized by the following steps:**
• Updating the incorrect questions bank with new questions after the current student processes questions in the incorrect questions bank using different question identification information;
• And/or,
• generating a training set of questions for each student;
• Selecting a number of questions from the question training collection based on the specific training needs and forming a training assignment.

62. **The method for processing electronic assignments according to claim 61, characterized by the following steps:**
• Generating a training set of questions for each student;
• Determining the student's learning profile based on their current content mastery level;
• Creating the training collection based on questions matching the learning type and questions with mastery levels below a set value;
• Alternatively, generating a training set of questions for each student;
• Collecting wrong questions and corresponding subject concepts from the student's marked assignments for the same subject;
• Creating the training collection based on the wrong questions and questions from a predetermined question bank that match the subject concepts.

63. **The method for processing electronic assignments according to any one of the claims 40-62, characterized by the following steps:**
• Acquiring several training sample data;
• The training sample data includes student sample feature data and sample label data used to represent the student's type;
• Using each student's sample feature data as input and the corresponding sample label as output, training a preset network model to obtain a student-type prediction model;
• Acquiring the actual feature data of several students;
• Inputting the actual feature data into the student type prediction model to output the type of each student;
• Generating and sending the first tutoring strategy that matches the type of the current student to the parent portal and/or generating and sending the second tutoring strategy that matches the type of the current student to the student portal.

64. **The method for processing electronic assignments according to any one of the claims 40-62, characterized by the following steps:**
• Acquiring the content of the exam syllabus constructed in the preset supervisory portal;
• The exam syllabus content corresponds to the assessment range of subject concepts;
• When selecting problems from the electronic question bank folder, determining whether the current problem exceeds the assessment range based on the subject concepts of the current problem; where the target problems are within the assessment range;
• And/or,
• Determining the operational permissions of different levels of execution subjects within the same school;
• For the same school, the level of permissions to view statistical data of execution subjects is positively correlated with the level in the hierarchical structure;
• For different schools, the level of permissions to view statistical data of each school is lower than that of the higher-level management department;
• And/or,
• Acquiring statistical data under various statistical dimensions related to electronic assignments;
• Analyzing based on the statistical data to obtain corresponding analysis results;
• And/or,
• Acquiring the actual operation data and inputting actual verification data in the preset identity verification link;
• When the actual verification data matches the preset verification data, determining the actual operation data to be valid; otherwise, generating the third reminder information;
• The actual verification data includes biometric data, preset fixed password data, and dynamic password data;
• Biometric data includes facial features, fingerprint features, and pupil features.

65. **A System for Acquiring Answer Areas**
A system for acquiring an answer area, applied in electronic assignments, **characterized by** the following steps:
• A problem determination module for determining the problem to be processed;
• An attribute information acquisition module for acquiring the attribute information of the problem to be processed;
• A first determination module for judging whether the problem to be processed belongs to the handwritten type based on the attribute information of the problem; if it belongs, calling the area generation module;
• The area generation module for generating a handwritten answer area matching the problem to be processed in the first preset blank canvas;
• The first preset blank canvas is a carrier for handwritten input content.

66. **The system for acquiring an answer area according to claim 65, characterized in that the handwriting answer area is used to display all operation layers that have been completed and newly generated and are stacked sequentially;**
• Wherein, all the sequentially stacked operation layers are generated sequentially when different users enter the handwriting answer area at different preset usage stages;

67. **The system for acquiring an answer area according to claim 66, characterized in that the operation layers generated at different preset usage stages include an initial layer for student use, a marking writing layer for teacher use, a correction layer for student use, or a correction review layer for teacher use;**
• Wherein the first preset blank canvas is the initial layer generated based on a picture format canvas;
• In N correction operations, the handwriting answer area sequentially generates the correction layer for student use and the correction review layer for teacher use, where N is a positive integer;

68. **The system for acquiring an answer area according to claim 66, characterized characterized in that the handwriting answer area supports acquiring writing trajectory related data;**
• Wherein the writing trajectory-related data is stored in a preset storage space;
• The writing trajectory-related data includes several segments of writing trajectory data, and the first time frame data and/or answer writing speed data corresponding to each segment of writing trajectory data;
• On the student's portal, the writing trajectory data is answering trajectory data;
• On the teacher's portal, the writing trajectory data is answering marking data;
• The answer frame area supports dynamic following display of the writing trajectory-related data in the target portal;

69. **The system for acquiring an answer area according to claim 68, characterized in that the answer area supports dynamic following display of the writing trajectory-related data in the target portal;**

70. **The system for acquiring an answer area according to claim 68, characterized by the following steps:**
• The handwriting answer area supports displaying the operation layer of the student portal in the first preset use portal;
• And/or,
• The handwriting answer area supports replaying the answer trajectory data stored in the preset storage space in the second preset use portal;
• And/or,
• The handwriting answer area supports displaying the operation layer of the teacher portal in the third preset use portal;
• And/or,
• The handwriting answer area supports replaying the answer marking data stored in the preset storage space in the fourth preset use portal;
• Wherein the corresponding data replay mode is determined based on different selection instructions;

71. **The system for acquiring an answer area according to any one of the claims 65-70, characterized in that the handwriting answer area is set with corresponding basic functional components, which include several basic functional plugins;**

72. **The system for acquiring an answer area according to claim 71, characterized in that the basic functional plugins include a draft paper calling plugin, which is used to call or hide the draft paper;**
• Wherein the draft paper area generated follows the corresponding handwriting answer area, and each handwriting answer area corresponds to a draft paper; or, all handwriting answer areas under each question to be processed correspond to a draft paper;
• The draft paper is dynamically stored in the preset storage space of the intelligent terminal;

73. **The system for acquiring an answer area according to claim 72, characterized in that the draft paper area supports acquiring draft trajectory-related data;**
• Wherein the draft trajectory-related data is stored in the preset storage space;
• The draft trajectory-related data includes several segments of draft trajectory data, and the second time frame data and/or draft writing speed data corresponding to each segment of draft trajectory data;
• On the student portal, the draft trajectory-related data is draft writing trajectory data;
• In the teacher portal, the draft trajectory-related data is draft marking trajectory data;

74. **The system for acquiring an answer area according to claim 72, characterized in the answer frame area supports dynamic following display of the draft trajectory-related data of the draft paper in the target portal;**
• Wherein the draft trajectory-related data is stored in the preset storage space;
• The draft trajectory-related data includes several segments of draft trajectory data, and the second time frame data and/or draft writing speed data corresponding to each segment of draft trajectory data;

75. **The system for acquiring an answer area according to claim 72, characterized by the following steps:**
• The draft paper area supports displaying the draft writing trajectory data of the student portal in the first preset use portal;
• And/or,
• The draft paper area supports replaying the draft writing trajectory data stored in the preset storage space in the second preset use portal;
• And/or,
• The draft paper area supports displaying the draft marking trajectory data of the teacher portal in the third preset use portal;
• And/or,
• The draft paper area supports replaying the draft marking trajectory data stored in the preset storage space in the fourth preset use portal;
• Wherein the corresponding data replay mode is determined based on different selection instructions.

76. **An Electronic Assignment Processing System**
An electronic assignment processing system according to the system for acquiring an answer area according to any one of claims 65-75, **characterized by** the following steps:
• A problem selection module for selecting several problems from a preset question bank based on preset learning goals;
• An answer area determination module for generating a handwritten answer area corresponding to each problem belonging to the handwritten type using the acquiring system;
• An answer position generation module for generating the designated answer positions for the remaining problems belonging to non-handwritten types;
• An electronic assignment acquisition module for acquiring the electronic assignments based on the problems and the corresponding handwritten answer areas and designated answer positions.

77. **A Processing System for Electronic Assignment**
A processing system for electronic assignment according to claim 76, **characterized by** the following steps:
• A question-answering progress data acquisition module for gathering question-answering progress data related to the question and storing it in a predetermined storage space;
• The question-answering progress data includes first characterization data indicating whether the student portal has accessed the question, and data depicting the answer trajectory on the answer area of the question and/or the draft writing trajectory of a draft paper;
• A first display control module to regulate shared display of the first current display interface on the student portal in the first predefined user context when the first characterization data indicates student entry into the question;
• A first playback control module to manage playback of the student portal's answer track data and/or draft writing track data of the draft paper in the first predefined user context following student submission;
• Alternatively, an approval progress data acquisition module can be used to gather approval progress data for the question and store it in the predetermined storage space;
• The marking progress data includes second characterization data indicating whether the teacher's portal has accessed the question, and marking trajectory data on the answer area of the question and/or draft marking trajectory data of the draft paper;
• A second display control module to govern the display of the second current display interface shared on the second predetermined user context when the second characterization data shows teacher entry into the question;
• A second playback control module to control playback of the teacher's marking track data and/or draft marking track data of the draft paper in the second predetermined user context following teacher completion.

78. **A processing system for electronic assignment according to claim 76, characterized by the following steps:**
• A third display control module to perform operations on multiple electronic assignments of the same batch, such as acquiring completion progress, dynamic tracking display, static display, and playback;
• And/or,
• A third playback control module to control static display or playback of different handwritten answers corresponding to the same handwritten question in different electronic assignments.

79. **An electronic assignment operation and management platform comprising the electronic assignment processing system according to any one of the claims 76-78 and several preset user portals for communication interaction;**
• Several preset user portals include the student assignment application portal on student devices and the teacher assignment application portal on teacher devices;

80. **An electronic assignment operation and management platform comprising the electronic assignment processing system according to claim 79 and several preset user portals for communication interaction;**
• Several preset user portals also include at least one of the following application portals:
• Parent application portal on parent devices, first education supervision application portal on school education supervision devices, and second education supervision application portal on education bureau education supervision devices;
• The parent application portal communicates and interacts with the student assignment application portal and the teacher assignment application portal;
• The first education supervision application portal and the second education supervision application portal communicate and interact with the student assignment application portal and the teacher application portal.

81. **An Electronic Device**
An electronic device comprising a memory, a processor, and a computer program stored on the memory and executable on the processor, wherein the processor executes the computer program to implement any one of the methods for acquiring answer areas described in Claims 1-21; or implement any one of the methods for processing electronic assignments described in Claims 22-64.

82. **A Computer-Readable Storage Medium**
A computer-readable storage medium storing a computer program, wherein the computer program is executed by the processor to implement any one of the methods for acquiring answer areas described in Claims 1-21; or implement any one of the methods for processing electronic assignments described in Claims 22-64.
